(19) Europäisches Patentamt
European Patent Office
Office européen des brevets

(11) **EP 4 230 432 A1**

(12) **EUROPEAN PATENT APPLICATION**
published in accordance with Art. 153(4) EPC

(43) Date of publication:
**23.08.2023 Bulletin 2023/34**

(21) Application number: **21879975.7**

(22) Date of filing: **07.10.2021**

(51) International Patent Classification (IPC):
***B60C 1/00*** *(2006.01)* ***C08F 36/04*** *(2006.01)*
***C08L 9/00*** *(2006.01)* ***C08K 3/011*** *(2018.01)*
***C08K 3/013*** *(2018.01)*

(52) Cooperative Patent Classification (CPC):
**B60C 1/00; C08F 36/04; C08K 3/011; C08K 3/013; C08L 9/00;** Y02T 10/86

(86) International application number:
**PCT/JP2021/037209**

(87) International publication number:
**WO 2022/080235 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.10.2020 JP 2020174148**

(71) Applicants:
- **ZS Elastomers Co., Ltd.**
  **Tokyo 100-8246 (JP)**
- **SUMITOMO CHEMICAL COMPANY, LIMITED**
  **Tokyo 103-6020 (JP)**
- **Zeon Corporation**
  **Tokyo 100-8246 (JP)**

(72) Inventors:
- **SAKADA, Masahide**
  **Tokyo 100-8246 (JP)**
- **NISHIZAWA, Keita**
  **Tokyo 100-8246 (JP)**
- **OHNO, Keita**
  **Tokyo 100-8246 (JP)**

(74) Representative: **Maiwald GmbH**
**Elisenhof**
**Elisenstraße 3**
**80335 München (DE)**

# (54) CONJUGATED DIENE POLYMER, RUBBER COMPOSITION, CROSSLINKED RUBBER PRODUCT, AND TIRE

(57) Provided is a conjugated diene polymer containing at least conjugated diene monomer units, wherein the conjugated diene polymer has a molecular weight distribution curve obtained by GPC measurement where three or more peaks are present, and the peak top molecular weight of a finally detected peak (Z) is 80000 to 250000, and a polymer chain corresponding to a maximum peak (L) has a degree of adsorption onto silica of less than 40% where in the molecular weight distribution curve, the last detected peak in the GPC measurement is defined as the finally detected peak (Z), and a peak having the largest peak area among peaks excluding the finally detected peak (Z) is defined as the maximum peak (L).

Fig. 1

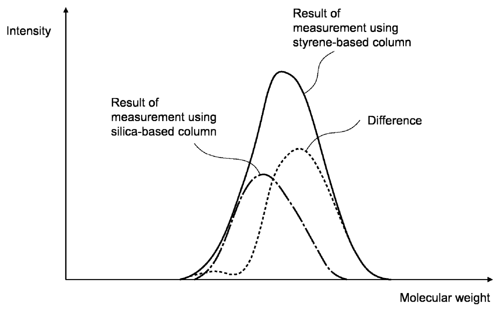




Processed by Luminess, 75001 PARIS (FR)

## Description

TECHNICAL FIELD

The present invention relates to a conjugated diene polymer, a rubber composition, a cross-linked rubber, and a tire, and more specifically relates to a conjugated diene polymer which has high processability and can provide a cross-linked rubber having high strength properties, high wear resistance, and excellent fuel efficiency, and a rubber composition, a cross-linked rubber, and a tire prepared using such a conjugated diene polymer.

BACKGROUND ART

Due to recent increasing environmental concerns, a polymer for use in tires for automobiles which can provide excellent fuel efficiency is also required. Tires prepared from a rubber composition containing a conjugated diene polymer and silica as a filler have lower heat buildup than that of tires prepared from traditional rubber compositions containing carbon black, and thus have more excellent fuel efficiency.

As a conjugated diene polymer which is used to form such a tire, Patent Document 1 discloses a modified conjugated diene polymer satisfying the following conditions (I) to (IV):

(I) The modified conjugated diene polymer has at least two peaks in a molecular weight distribution curve obtained in measurement by gel permeation chromatography (GPC).
(II) The peak molecular weight of a peak (B) is 500000 to 2500000, and the peak molecular weight of a peak (T) is 150000 to 600000, where a peak of the highest molecular weight is defined as the peak (B) and a peak having the largest peak area excluding the peak (B) is defined as the peak (T) in the molecular weight distribution curve.
(III) The peak (T) has an area of 30% to 80% of the total area, and the sum of the area of the peak (B) and that of the peak (T) is 65% or more of the total area, where the total area of the molecular weight distribution curve is 100%.
(IV) a proportion of a modified polymer chain in a region ranging from a low molecular weight side to a point of 5% cumulative area is from 60% to 99% in the molecular weight distribution curve.

RELATED ART DOCUMENTS

PATENT DOCUMENT

Patent Document 1: WO 2018/056025

SUMMARY OF THE INVENTION

PROBLEM TO BE SOLVED BY THE INVENTION

The conjugated diene polymer prepared by the technique disclosed in Patent Document 1 has insufficient processability, and the cross-linked rubber prepared therefrom has strength properties, wear resistance, and fuel efficiency which are susceptible to improvement.

The present invention has been made in consideration of the above problems, and an object of the present invention is to provide a conjugated diene polymer which has high processability, and can provide a cross-linked rubber having high strength properties, high wear resistance, and excellent fuel efficiency. Another object of the present invention is to provide a rubber composition, a cross-linked rubber, and a tire prepared from such a conjugated diene polymer.

MEANS FOR SOLVING PROBLEMS

The present inventors, who have conducted extensive research to achieve the above objects, have found that the above objects can be achieved by achieving a molecular weight distribution where three or more peaks are present, the peak top molecular weight of a specific peak is within a specific range, and a polymer chain corresponding to the specific peak has a degree of adsorption onto silica within a specific range, and have completed the present invention.

Specifically, the present invention provides a conjugated diene polymer containing at least conjugated diene monomer units, wherein the conjugated diene polymer has a molecular weight distribution curve obtained by gel permeation chromatography where three or more peaks are present, and the peak top molecular weight of a finally detected peak (Z) is 80000 to 250000, and a polymer chain corresponding to a maximum peak (L) has a degree of adsorption onto silica of less than 40%, where in the molecular weight distribution curve, the last detected peak in measurement by gel permeation chromatography is defined as the finally detected peak (Z), and a peak having the largest peak area

among peaks excluding the finally detected peak (Z) is defined as the maximum peak (L).

Preferably, in the conjugated diene polymer according to the present invention, the peak top molecular weight of the maximum peak (L) is larger than 600000.

Preferably, the conjugated diene polymer according to the present invention has a terminal modifying group.

Preferably, the conjugated diene polymer according to the present invention contains coupled polymer chains.

The present invention provides a rubber composition comprising the conjugated diene polymer, and a filler.

The present invention provides a cross-linked rubber prepared by cross-linking the rubber composition, and a tire comprising such a cross-linked rubber.

The present invention also provides a method of producing the conjugated diene polymer, the method comprising a step of mixing two or more conjugated diene polymers having different molecular weight distribution curves in the form of polymer solutions.

Furthermore, the present invention provides a method of producing the conjugated diene polymer, the method comprising a step of starting polymerization of a monomer mixture containing a conjugated diene monomer in the presence of a polymerization initiator, and thereafter further adding the polymerization initiator to the polymerization system to continue the polymerization.

## EFFECTS OF INVENTION

The present invention can provide a conjugated diene polymer which has high processability and can provide a cross-linked rubber having high strength properties, high wear resistance, and excellent fuel efficiency. The present invention also can provide a rubber composition, a cross-linked rubber, and a tire prepared from such a conjugated diene polymer.

## BRIEF DESCRIPTION OF DRAWINGS

Fig. 1 is a graph schematically showing results obtained by GPC measurement using a styrene-based column and a silica-based column.

## DESCRIPTION OF EMBODIMENTS

### <Conjugated diene polymer>

The conjugated diene polymer according to the present invention is a conjugated diene polymer containing at least conjugated diene monomer units,

> wherein the conjugated diene polymer has a molecular weight distribution curve obtained by gel permeation chromatography where three or more peaks are present, and
>
> the peak top molecular weight of a finally detected peak (Z) is 80000 to 250000, and a polymer chain corresponding to a maximum peak (L) has a degree of adsorption onto silica of less than 40%, where in the molecular weight distribution curve, the last detected peak in measurement by gel permeation chromatography is defined as the finally detected peak (Z), and a peak having the largest peak area among peaks excluding the finally detected peak (Z) is defined as the maximum peak (L).

The conjugated diene polymer according to the present invention contains conjugated diene monomer units, and examples of conjugated diene monomers for forming conjugated diene monomer units include 1,3-butadiene, isoprene, 2,3-dimethyl-1,3-butadiene, 2-chloro-1,3-butadiene, 1,3-pentadiene, 1,3-hexadiene, and the like. Among these, preferred are 1,3-butadiene and isoprene, and more preferred is 1,3-butadiene. 1,3-Butadiene may be used in combination with isoprene.

The lower limit of the proportion of conjugated diene monomer units in the conjugated diene polymer according to the present invention is 0% by weight or more. From the viewpoint of wear resistance and fuel efficiency of the resulting cross-linked rubber, the lower limit of the proportion is preferably 20% by weight or more, more preferably 25% by weight or more, still more preferably 30% by weight or more, particularly preferably 40% by weight or more, most preferably 50% by weight or more in 100% by weight of the total amount of monomers. On the other hand, the upper limit of the proportion of conjugated diene monomer units is 100% by weight or less. From the viewpoint of processability of the conjugated diene polymer, a preferred upper limit is, in descending order of preference, 95% by weight or less, 90% by weight or less, 85% by weight or less, 80% by weight or less, 75% by weight or less, 70% by weight or less, 66% by weight or less, 64% by weight or less, 62% by weight or less, 60% by weight or less in 100% by weight of the total amount of monomers. From the viewpoint of the strength properties and wear resistance of the resulting cross-linked

rubber, a preferred lower limit of the proportion of conjugated diene monomer units is, in descending order of preference, 60% by weight or more, 70% by weight or more, 75% by weight or more, 80% by weight or more, 85% by weight or more in in 100% by weight of the total amount of monomers, and a preferred upper limit is, in descending order of preference, 98% by weight or less, 96% by weight or less, 94% by weight or less, 92% by weight or less, 90% by weight or less in 100% by weight of the total amount of monomers.

In the conjugated diene polymer according to the present invention, the vinyl bond content of the conjugated diene monomer units is preferably 1 to 90 mol%, more preferably 3 to 80 mol%, more preferably 5 to 70 mol%, still more preferably 7 to 60 mol%, particularly preferably 9 to 50 mol%, most preferably 10 to 40 mol%. The vinyl bond content of the conjugated diene monomer units may be 10 to 30 mol% from the viewpoint of the processability of the conjugated diene polymer, and may be 31 to 40 mol% from the viewpoint of the strength properties and wear resistance of a cross-linked rubber thereof. By controlling the vinyl bond content of the conjugated diene monomer units within the ranges above, a cross-linked rubber having further enhanced fuel efficiency can be obtained.

The conjugated diene polymer according to the present invention is preferably a copolymer containing aromatic vinyl monomer units in addition to conjugated diene monomer units. Examples of aromatic vinyl monomers for forming aromatic vinyl monomer units include styrene, methylstyrene, ethylstyrene, t-butylstyrene, α-methylstyrene, α-methyl-p-methylstyrene, chlorostyrene, bromostyrene, methoxystyrene, dimethylaminomethylstyrene, dimethylaminoethylstyrene, diethylaminomethylstyrene, diethylaminoethylstyrene, cyanoethylstyrene, vinylnaphthalene, and the like. Among these, preferred is styrene. The upper limit of the proportion of aromatic vinyl monomer units in the conjugated diene polymer is 0% by weight or more. From the viewpoint of the wear resistance and fuel efficiency of the resulting cross-linked rubber, the upper limit is preferably 80% by weight or less, more preferably 75% by weight or less, still more preferably 70% by weight or less, particularly preferably 60% by weight or less, most preferably 50% by weight or less in 100% by weight of the total amount of monomers. On the other hand, the lower limit of the proportion of aromatic vinyl monomer units is 0% by weight or more. From the viewpoint of the processability of the conjugated diene polymer, a preferred lower limit is, in descending order of preference, is 5% by weight or more, 10% by weight or more, 15% by weight or more, 20% by weight or more, 25% by weight or more, 30% by weight or more, 34% by weight or more, 36% by weight or more, 38% by weight or more, 40% by weight or more in 100% by weight of the total amount of monomers. From the viewpoint of the strength properties and wear resistance of the resulting cross-linked rubber, a preferred upper limit of the proportion of aromatic vinyl monomer units is, in descending order of preference, 40% by weight or less, 30% by weight or less, 25% by weight or less, 20% by weight or less, 15% by weight or less in 100% by weight of the total amount of monomers, and a preferred lower limit is, in descending order of preference, 2% by weight or more, 4% by weight or more, 6% by weight or more, 8% by weight or more, 10% by weight or more in 100% by weight of the total amount of the monomers.

When the conjugated diene polymer according to the present invention contains aromatic vinyl monomer units, the proportion of aromatic vinyl monomer blocks in the conjugated diene polymer according to the present invention is preferably 30.0% or less, more preferably 20.0% or less, still more preferably 10.0% or less, particularly preferably 5.0% or less. The proportion of aromatic vinyl monomer blocks is measured by $^{1}$H-NMR using deuterochloroform as a solvent. Here, in the obtained $^{1}$H-NMR spectrum, peaks within 6.1 to 7.7 ppm are defined as peaks of an aromatic vinyl monomer, and peaks within 6.1 to 6.88 ppm are regarded as peaks of blocks of the aromatic vinyl monomer. The ratio of the peak area of the aromatic vinyl monomer blocks to that of the aromatic vinyl monomer is determined, and the value is multiplied by 2.5 and expressed in percentage. The percentage is defined as the proportion of aromatic vinyl monomer blocks. When the aromatic vinyl monomer is styrene, it is preferred that the proportion of styrene blocks fall within the ranges above. By controlling the proportion of aromatic vinyl monomer blocks within the ranges above, a cross-linked rubber having highly balanced wear resistance and fuel efficiency can be obtained.

The proportion of aromatic vinyl monomer blocks can be controlled by adjusting the timings of adding the conjugated diene monomer and the aromatic vinyl monomer to the polymerization system. The conjugated diene monomer and the aromatic vinyl monomer can be added to the polymerization system at any timing irrespective of before or after addition of a polymerization initiator.

The conjugated diene polymer according to the present invention may also contain units of a vinyl compound having a functional group interactive with silica in addition to the conjugated diene monomer units and the aromatic vinyl monomer units optionally contained.

The vinyl compound having a functional group interactive with silica for forming units of a vinyl compound having functional group interactive with silica can be any compound having a functional group interactive with silica and a vinyl group, and is not particularly limited. Here, the functional group interactive with silica is a functional group which forms a covalent bond between the functional group and the silica surface or can cause an intermolecular force weaker than a covalent bond (such as ion-dipole interaction, dipole-dipole interaction, hydrogen bond, or van der Waals force). Examples of such a functional group interactive with silica include, but should not be limited to, nitrogen atom-containing functional groups, silicon atom-containing functional groups, oxygen atom-containing functional groups, and the like. Among these, preferred are silicon atom-containing functional groups because they are highly interactive with silica.

In a preferred embodiment of the vinyl compound having a functional group interactive with silica, the vinyl compound having a silicon atom-containing functional group which can be suitably used is, for example, a compound represented by General Formula (1) below:

[Chem. 1]

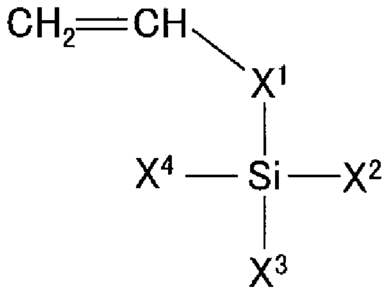

(1)

In General Formula (1) above, $X^1$ represents a chemical single bond or a hydrocarbylene group, and $X^2$, $X^3$, and $X^4$ each independently represent a substituted amino group, a hydrocarbyloxy group, or an optionally substituted hydrocarbyl group.

In General Formula (1) above, $X^1$ is a chemical single bond or a hydrocarbylene group, preferably a chemical single bond. Examples of the hydrocarbylene group include alkylene groups, alkenediyl groups, arylene groups, groups of arylene groups bonded to alkylene groups, and the like.

Examples of alkylene groups include a methylene group, an ethylene group, a trimethylene group, and the like. Examples of alkenediyl groups include a vinylene group, an ethylene-1,1-diyl group, and the like. Examples of arylene groups include a phenylene group, a naphthylene group, a biphenylene group, and the like. Examples of groups of arylene groups bonded to alkylene groups include a group of a phenylene group bonded to a methylene group, a group of a phenylene group bonded to an ethylene group, and the like. When $X^1$ is a hydrocarbylene group, $X^1$ is preferably an arylene group, more preferably a phenylene group.

In General Formula (1) above, $X^2$, $X^3$, and $X^4$ each independently represent a substituted amino group, a hydrocarbyloxy group, or an optionally substituted hydrocarbyl group. It is preferred that at least one of $X^2$, $X^3$, and $X^4$ be a substituted amino group, and it is more preferred that two of $X^2$, $X^3$, and $X^4$ be a substituted amino group.

A suitable substituted amino group which can form $X^2$, $X^3$, and $X^4$ is a group represented by General Formula (2) below:

$$R^1\text{-N(-}R^2\text{)-} \qquad (2)$$

In General Formula (2) above, $R^1$ and $R^2$ may or may not be bonded to each other; if $R^1$ and $R^2$ are not bonded to each other, $R^1$ and $R^2$ each independently represent an optionally substituted hydrocarbyl group or a trihydrocarbylsilyl group; and if $R^1$ and $R^2$ are bonded to each other, $R^1$ and $R^2$ represent a hydrocarbylene group optionally containing at least one species selected from the group consisting of nitrogen, oxygen, sulfur, and silicon atoms.

Examples of a hydrocarbyl group which can form $R^1$ and $R^2$ include linear alkyl groups such as a methyl group, an ethyl group, an n-propyl group, an isopropyl group, an n-butyl group, an isobutyl group, a sec-butyl group, a tert-butyl group, an n-pentyl group, an n-hexyl group, and an n-octyl group; cyclic alkyl groups such as a cyclopentyl group and a cyclohexyl group; aryl groups such as a phenyl group, a benzyl group, and a naphthyl group; and the like. Among these, preferred are linear alkyl groups, and more preferred is a methyl group or an ethyl group.

If the hydrocarbyl group which can form $R^1$ and $R^2$ has a substituent, examples thereof include hydrocarbyl groups having a hydrocarbyloxy group as a substituent, and the like. Examples of a hydrocarbyl group having a hydrocarbyloxy group as a substituent include alkoxyalkyl groups such as a methoxymethyl group, an ethoxymethyl group, and a methoxyethyl group; aryloxyalkyl groups such as a phenoxymethyl group; and the like.

Specific examples of a trihydrocarbylsilyl group which can form $R^1$ and $R^2$ include trialkylsilyl groups such as a trimethylsilyl group, a triethylsilyl group, and a tert-butyldimethylsilyl group, and the like.

If $R^1$ and $R^2$ are bonded to each other, examples of the hydrocarbylene group which can form $R^1$ and $R^2$ include alkylene groups such as a trimethylene group, a tetramethylene group, a pentamethylene group, a hexamethylene group, a heptamethylene group, an octamethylene group, a decamethylene group, a dodecamethylene group, and a 2,2,4-trimethylhexane-1,6-diyl group; alkenediyl groups such as a pentan-2-ene-1,5-diyl group; and the like. If the hydrocarbylene group which can form $R^1$ and $R^2$ contains at least one species selected from the group consisting of nitrogen, oxygen, sulfur, and silicon atoms, examples of the hydrocarbylene group containing at least one species selected from the group consisting of nitrogen, oxygen, sulfur, and silicon atoms include a group represented by -CH=N-CH=CH-, a

group represented by $-CH=N-CH_2-CH_2-$, a group represented by $-CH_2-CH_2-O-CH_2-CH_2-$, a group represented by $-CH_2-CH_2-S-CH_2-CH_2-$, a group represented by $-CH_2-CH_2-SiH_2-CH_2-CH_2-$, a group represented by $-CH_2-CH_2-SiMe_2-CH_2-CH_2-$, a group represented by $-CH_2-CH_2-SiEt_2-CH_2-CH_2-$, and the like.

Preferably, $R^1$ and $R^2$ are alkyl groups or are bonded to form an alkylene group. More preferably, $R^1$ and $R^2$ are alkyl groups. Still more preferably, $R^1$ and $R^2$ are a methyl group or an ethyl group.

When $R^1$ and $R^2$ in General Formula (2) above are hydrocarbyl groups, specific examples of groups represented by General Formula (2) above include dialkylamino groups such as a dimethylamino group, a diethylamino group, an ethylmethylamino group, a di-n-propylamino group, a diisopropylamino group, a di-n-butylamino group, a diisobutylamino group, a di-sec-butylamino group, and a di-tert-butylamino group; diarylamino groups such as a diphenylamino group; and the like. Among these, preferred are dialkylamino groups, and more preferred are a dimethylamino group, a diethylamino group, and a di-n-butylamino group.

In General Formula (2) above, if $R^1$ and $R^2$ each are a hydrocarbyl group having a hydrocarbyloxy group as a substituent, specific examples of the group represented by General Formula (2) above include di(alkoxyalkyl)amino groups such as a di(methoxymethyl)amino group and a di(ethoxymethyl)amino group, and the like.

If $R^1$ and $R^2$ in General Formula (2) above are trihydrocarbylsilyl groups, specific examples of the group represented by General Formula (2) above include trialkylsilyl group-containing amino groups such as a bis(trimethylsilyl)amino group, a bis(tert-butyldimethylsilyl) amino group, and an N-trimethylsilyl-N-methylamino group, and the like.

If $R^1$ and $R^2$ in General Formula (2) above are bonded to each other to form a hydrocarbylene group, specific examples of the group represented by General Formula (2) above include 1-alkyleneimino groups such as a 1-trimethyleneimino group, a 1-pyrrolidino group, a 1-piperidino group, a 1-hexamethyleneimino group, a 1-heptamethyleneimino group, a 1-octamethyleneimino group, a 1-decamethyleneimino group, and a 1-dodecamethyleneimino group, and the like.

If $R^1$ and $R^2$ in General Formula (2) above are bonded to form a hydrocarbylene group containing a nitrogen atom and/or an oxygen atom, specific examples of the group represented by General Formula (2) above include a 1-imidazolyl group, a 4,5-dihydro-1-imidazolyl group, a morpholino group, and the like.

The group represented by General Formula (2) above is preferably a dialkylamino group or a 1-alkyleneimino group. More preferred are dialkylamino groups, and still more preferred are a dimethylamino group, a diethylamino group, and a di-n-butylamino group.

Examples of the hydrocarbyloxy group which can form $X^2$, $X^3$, and $X^4$ in General Formula (1) above include alkoxy groups such as a methoxy group, an ethoxy group, an n-propoxy group, an isopropoxy group, an n-butoxy group, a sec-butoxy group, and a tert-butoxy group; aryloxy groups such as a phenoxy group and a benzyloxy group; and the like.

Examples of the hydrocarbyl group which can form $X^2$, $X^3$, and $X^4$ in General Formula (1) above include alkyl groups such as a methyl group, an ethyl group, an n-propyl group, an isopropyl group, an n-butyl group, a sec-butyl group, and a tert-butyl group; aryl groups such as a phenyl group, a 4-methyl-1-phenyl group, and a benzyl group; and the like.

If the hydrocarbyl group which can form $X^2$, $X^3$, and $X^4$ has a substituent, examples thereof include hydrocarbyl groups having a hydrocarbyloxy group as a substituent. Examples thereof include alkoxyalkyl groups such as a methoxymethyl group, an ethoxymethyl group, an ethoxyethyl group, and the like.

If in General Formula (1) above, $X^1$ is a chemical single bond and one of $X^2$, $X^3$, and $X^4$ is a substituted amino group, specific examples of the vinyl compound having a silicon atom-containing functional group represented by General Formula (1) above include (dialkylamino)dialkylvinylsilanes such as (dimethylamino)dimethylvinylsilane, (ethylmethylamino)dimethylvinylsilane, (di-n-propylamino)dimethylvinylsilane, (diisopropylamino)dimethylvinylsilane, (dimethylamino)diethylvinylsilane, (ethylmethylamino)diethylvinylsilane, (di-n-propylamino)diethylvinylsilane, and (diisopropylamino)diethylvinylsilane; [bis(trialkylsilyl)amino]dialkylvinylsilanes such as [bis(trimethylsilyl)amino]dimethylvinylsilane, [bis(t-butyldimethylsilyl)amino]dimethylvinylsilane, [bis(trimethylsilyl)amino]diethylvinylsilane, and [bis(t-butyldimethylsilyl)amino]diethylvinylsilane; (dialkylamino)di(alkoxyalkyl)vinylsilanes such as (dimethylamino)di(methoxymethyl)vinylsilane, (dimethylamino)di(methoxyethyl)vinylsilane, (dimethylamino)di(ethoxymethyl)vinylsilane, (dimethylamino)di(ethoxyethyl)vinylsilane, (diethylamino)di(methoxymethyl)vinylsilane, (diethylamino)di(methoxyethyl)vinylsilane, (diethylamino)di(ethoxymethyl)vinylsilane, and (diethylamino)di(ethoxyethyl)vinylsilane; cyclic aminodialkylvinylsilane compounds such as pyrrolidinodimethylvinylsilane, piperidinodimethylvinylsilane, hexamethyleneiminodimethylvinylsilane, 4,5-dihydroimidazolyldimethylvinylsilane, and morpholinodimethylvinylsilane; and the like.

If in General Formula (1) above, $X^1$ is a hydrocarbylene group and one of $X^2$, $X^3$, and $X^4$ is a substituted amino group, specific examples of the vinyl compound having a silicon atom-containing functional group represented by General Formula (1) above include (dialkylamino)dialkylvinylphenylsilanes such as (dimethylamino)dimethyl-4-vinylphenylsilane, (dimethylamino)dimethyl-3-vinylphenylsilane, (diethylamino)dimethyl-4-vinylphenylsilane, (diethylamino)dimethyl-3-vinylphenylsilane, (di-n-propylamino)dimethyl-4-vinylphenylsilane, (di-n-propylamino)dimethyl-3-vinylphenylsilane, (di-n-butylamino)dimethyl-4-vinylphenylsilane, (di-n-butylamino)dimethyl-3-vinylphenylsilane, (dimethylamino)diethyl-4-vinylphenylsilane, (dimethylamino)diethyl-3-vinylphenylsilane, (diethylamino)diethyl-4-vinylphenylsilane, (diethylamino)diethyl-3-vinylphenylsilane, (di-n-propylamino)diethyl-4-vinylphenylsilane, (di-n-propylamino)diethyl-3-vinylphenylsilane, (di-n-butylamino)diethyl-4-vinylphenylsilane, and (di-n-butylamino)diethyl-3-vinylphenylsilane; and the like.

If in General Formula (1) above, $X^1$ is a chemical single bond and two of $X^2$, $X^3$, and $X^4$ are substituted amino groups, specific examples of the vinyl compound containing a silicon atom-containing functional group represented by General Formula (1) above include bis(dialkylamino)alkylvinylsilanes such as bis(dimethylamino)methylvinylsilane, bis(diethylamino)methylvinylsilane, bis(di-n-propylamino)methylvinylsilane, bis(di-n-butylamino)methylvinylsilane, bis(dimethylamino)ethylvinylsilane, bis(diethylamino)ethylvinylsilane, bis(di-n-propylamino)ethylvinylsilane, and bis(di-n-butylamino)ethylvinylsilane; bis[bis(trialkylsilyl)amino]alkylvinylsilanes such as bis[bis(trimethylsilyl)amino]methylvinylsilane, bis[bis(tert-butyldimethylsilyl)amino]methylvinylsilane, bis[bis(trimethylsilyl)amino]ethylvinylsilane, and bis[bis(tert-butyldimethylsilyl)amino]ethylvinylsilane; bis(dialkylamino)alkoxyalkylsilanes such as bis(dimethylamino)methoxymethylvinylsilane, bis(dimethylamino)methoxyethylvinylsilane, bis(dimethylamino)ethoxymethylvinylsilane, bis(dimethylamino)ethoxyethylvinylsilane, bis(diethylamino)methoxymethylvinylsilane, bis(diethylamino)methoxyethylvinylsilane, bis(diethylamino)ethoxymethylvinylsilane, and bis(dimethylamino)ethoxyethylvinylsilane; bis(cyclic amino)alkylvinylsilane compounds such as bis(pyrrolidino)methylvinylsilane, bis(piperidino)methylvinylsilane, bis(hexamethyleneimino)methylvinylsilane, bis(4,5-dihydroimidazolyl)methylvinylsilane, and bis(morpholino)methylvinylsilane; and the like.

If in General Formula (1) above, $X^1$ is a hydrocarbylene group and two of $X^2$, $X^3$, and $X^4$ are substituted amino groups, specific examples of the vinyl compound having a silicon atom-containing functional group represented by General Formula (1) above include bis(dialkylamino)alkylvinylphenylsilanes such as bis(dimethylamino)methyl-4-vinylphenylsilane, bis(dimethylamino)methyl-3-vinylphenylsilane, bis(diethylamino)methyl-4-vinylphenylsilane, bis(diethylamino)methyl-3-vinylphenylsilane, bis(di-n-propylamino)methyl-4-vinylphenylsilane, bis(di-n-propylamino)methyl-3-vinylphenylsilane, bis(di-n-butylamino)methyl-4-vinylphenylsilane, bis(di-n-butylamino)methyl-3-vinylphenylsilane, bis(dimethylamino)ethyl-4-vinylphenylsilane, bis(dimethylamino)ethyl-3-vinylphenylsilane, bis(diethylamino)ethyl-4-vinylphenylsilane, bis(diethylamino)ethyl-3-vinylphenylsilane, bis(di-n-propylamino)ethyl-4-vinylphenylsilane, bis(di-n-propylamino)ethyl-3-vinylphenylsilane, bis(di-n-butylamino)ethyl-4-vinylphenylsilane, and bis(di-n-butylamino)ethyl-3-vinylphenylsilane, and the like.

If in General Formula (1) above, $X^1$ is a chemical single bond and three of $X^2$, $X^3$, and $X^4$ are substituted amino groups, specific examples of the vinyl compound having a silicon atom-containing functional group represented by General Formula (1) above include tris(dialkylamino)vinylsilanes such as tris(dimethylamino)vinylsilane, tris(diethylamino)vinylsilane, tris(di-n-propylamino)vinylsilane, and tris(di-n-butylamino)vinylsilane, and the like.

If in General Formula (1) above, $X^1$ is a hydrocarbylene group and three of $X^2$, $X^3$, and $X^4$ are substituted amino groups, specific examples of the vinyl compound having silicon atom-containing functional group represented by General Formula (1) above include tris(dialkylamino)vinylphenylsilanes such as tris(dimethylamino)-4-vinylphenylsilane, tris(dimethylamino)-3-vinylphenylsilane, tris(diethylamino)-4-vinylphenylsilane, tris(diethylamino)-3-vinylphenylsilane, tris(di-n-propylamino)-4-vinylphenylsilane, tris(di-n-propylamino)-3-vinylphenylsilane, tris(di-n-butylamino)-4-vinylphenylsilane, and tris(di-n-butylamino)-3-vinylphenylsilane.

If in General Formula (1) above, $X^1$ is a chemical single bond and all of $X^2$, $X^3$, and $X^4$ are not substituted amino groups, specific examples of the vinyl compound having a silicon atom-containing functional group represented by General Formula (1) above include trialkoxyvinylsilanes such as trimethoxyvinylsilane, triethoxyvinylsilane, and tripropoxyvinylsilane; dialkoxyalkylvinylsilanes such as methyldimethoxyvinylsilane and methyldiethoxyvinylsilane; dialkoxyarylvinylsilanes such as di(tert-pentoxy)phenylvinylsilane and di(tert-butoxy)phenylvinylsilane; monoalkoxydialkylvinylsilanes such as dimethylmethoxyvinylsilane; monoalkoxydiarylvinylsilanes such as tert-butoxydiphenylvinylsilane and tert-pentoxydiphenylvinylsilane; monoalkoxyalkylarylvinylsilanes such as tert-butoxymethylphenylvinylsilane and tert-butoxyethylphenylvinylsilane; substituted alkoxyvinylsilane compounds such as tris(β-methoxyethoxy)vinylsilane; and the like.

Among these compounds represented by General Formula (1) above, preferred are those where $X^1$ is a chemical single bond, more preferred are those where $X^1$ is a chemical single bond and two of $X^2$, $X^3$, and $X^4$ are substituted amino groups, and particularly preferred are those where $X^1$ is a chemical single bond and two of $X^2$, $X^3$, and $X^4$ are dialkylamino groups.

Among these compounds represented by General Formula (1) above, preferred are bis(dimethylamino)methylvinylsilane, bis(diethylamino)methylvinylsilane, and bis(di-n-butylamino)methylvinylsilane, and particularly preferred is bis(diethylamino)methylvinylsilane.

Examples of vinyl compounds having a functional group interactive with silica other than the compound represented by General Formula (1) above include bis(trialkylsilyl)aminostyrenes such as 4-N,N-bis(trimethylsilyl)aminostyrene and 3-N,N-bis(trimethylsilyl)aminostyrene; bis(trialkylsilyl)aminoalkylstyrenes such as 4-bis(trimethylsilyl)aminomethylstyrene, 3-bis(trimethylsilyl)aminomethylstyrene, 4-bis(trimethylsilyl)aminoethylstyrene, and 3-bis(trimethylsilyl)aminoethylstyrene; and the like.

When the compound represented by General Formula (1) above is used as the vinyl compound having a

functional group interactive with silica, the conjugated diene-based polymer according to the present invention includes units represented by General Formula (3) below as the units of the vinyl compound having a functional group interactive with silica:

[Chem. 2]

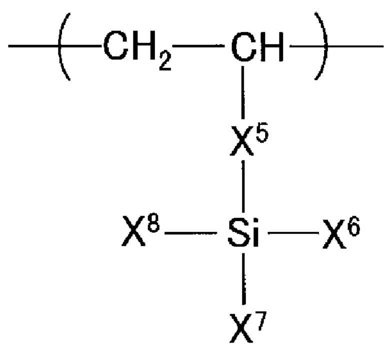

(3)

In General Formula (3) above, $X^5$ represents a chemical single bond or a hydrocarbylene group, and $X^6$, $X^7$, and $X^8$ each independently represent a hydroxyl group, a substituted amino group, a hydrocarbyloxy group, or an optionally substituted hydrocarbyl group.

In the unit represented by General Formula (3) above, $X^5$ corresponds to $X^1$ in the compound represented by General Formula (1) above, and $X^6$, $X^7$, and $X^8$ correspond to $X^2$, $X^3$, and $X^4$ in the compound represented by General Formula (1) above. For this reason, $X^5$, $X^6$, $X^7$, and $X^8$ in the unit represented by General Formula (3) above can be the same as those listed for $X^1$, $X^2$, $X^3$, and $X^4$ in the compound represented by General Formula (1) above. When the compound represented by General Formula (1) above where at least one of $X^2$, $X^3$, and $X^4$ is a substituted amino group or a hydrocarbyloxy group is used, at least one of $X^2$, $X^3$, and $X^4$ can be converted into a hydroxyl group as a result of hydrolysis of the substituted amino group or the hydrocarbyloxy group at any timing in any step.

In the conjugated diene polymer according to the present invention, the proportion of units of the vinyl compound having a functional group interactive with silica is preferably 0 to 10.000% by weight, more preferably 0.001 to 3.000% by weight, still more preferably 0.002 to 1.000% by weight. By controlling the proportion of units of the vinyl compound having a functional group interactive with silica within these ranges, the processability of the conjugated diene polymer and the strength properties, wear resistance, and fuel efficiency of a cross-linked rubber thereof can be further enhanced in a good balance.

The conjugated diene polymer according to the present invention may also contain different monomer units other than the conjugated diene monomer units, and the aromatic vinyl monomer units and monomer units of the vinyl compound having a functional group interactive with silica which are contained as needed. Examples of a different compound forming such different monomer units include linear olefin compounds such as ethylene, propylene, and 1-butene; cyclic olefin compounds such as cyclopentene and 2-norbornene; non-conjugated diene compounds such as 1,5-hexadiene, 1,6-heptadiene, 1,7-octadiene, dicyclopentadiene, and 5-ethylidene-2-norbornene; and the like.

In the conjugated diene polymer according to the present invention, the bonding form of the monomers can be a variety of bonding forms such as a block form, a tapered form, and a random form, and preferred is a random form. When the random form is selected, a cross-linked rubber having further enhanced fuel efficiency can be obtained.

The conjugated diene polymer according to the present invention preferably has a modifying group, and more preferably has a modifying group (terminal modifying group) formed by modifying a terminal of the polymer chain of the conjugated diene polymer with a modifier. In this specification, the "conjugated diene polymer having a modifying group" is one where at least part of polymer chains forming the conjugated diene polymer has a modifying group. In other words, part of polymer chains forming the conjugated diene polymer need not have a modifying group.

A preferred modifying group has a functional group interactive with silica because it can appropriately enhance the compatibility with a filler such as silica and a cross-linked rubber having further enhanced strength properties, wear resistance, and fuel efficiency can be obtained. Here, the functional group interactive with silica is a functional group which forms a covalent bond between the functional group and the silica surface or can cause an intermolecular force weaker than the covalent bond (such as ion-dipole interaction, dipole-dipole interaction, hydrogen bond, or van der Waals force). Examples of such a functional group interactive with silica include, but should not be limited to, nitrogen atom-containing functional groups, silicon atom-containing functional groups, oxygen atom-containing functional groups, and the like.

Preferred modifiers for forming the modifying group are silicon atom-containing modifiers having a silicon atom-containing functional group and nitrogen atom-containing modifiers having a nitrogen atom-containing functional group,

and more preferred modifiers are silicon atom-containing modifiers because of their high interaction with silica. Examples of silicon atom-containing modifiers include siloxane compounds, hydrocarbyloxysilane compounds, and the like. Examples of nitrogen atom-containing modifiers include N,N-di-substituted aminoalkyl(meth)acrylamides such as dimethylaminoethylacrylamide, diethylaminoethylacrylamide, dimethylaminopropylacrylamide, diethylaminopropylacrylamide, dimethylaminobutylacrylamide, diethylaminobutylacrylamide, dimethylaminoethylmethacrylamide, diethylaminoethylmethacrylamide, dimethylaminopropylmethacrylamide, diethylaminopropylmethacrylamide, dimethylaminobutylmethacrylamide, and diethylaminobutylmethacrylamide; amino group-containing alkoxysilane compounds such as [3-(dimethylamino)propyl]trimethoxysilane, [3-(diethylamino)propyl]trimethoxysilane, [3-(dimethylamino)propyl]triethoxysilane, [3-(diethylamino)propyl]triethoxysilane, [3-(ethylmethylamino)propyl]trimethoxysilane, and [3-(ethylmethylamino)propyl]triethoxysilane; and pyrrolidone-based compounds such as N-phenyl-2-pyrrolidone, N-methyl-2-pyrrolidone, N-ethyl-2-pyrrolidone, and 1-cyclohexyl-2-pyrrolidone.

The siloxane compounds are those having a siloxane structure (-Si-O-) as the main chain structure, and are not particularly limited. Preferred are organosiloxanes having an organic group in a side chain, and more preferred is a polyorganosiloxane represented by General Formula (4) below:

[Chem. 3]

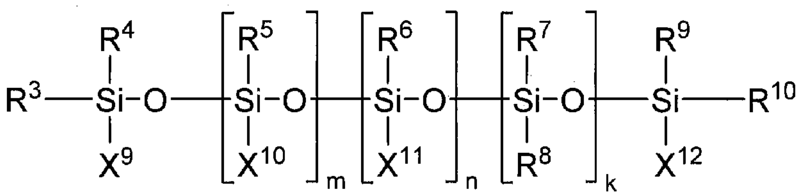

(4)

In General Formula (4) above, $R^3$ to $R^{10}$ are each a $C_1$ to $C_6$ alkyl group or a $C_6$ to $C_{12}$ aryl group, and may be the same or different. $X^9$ and $X^{12}$ are each one group selected from the group consisting of $C_1$ to $C_6$ alkyl groups, $C_6$ to $C_{12}$ aryl groups, $C_1$ to $C_5$ alkoxy groups, and $C_4$ to $C_{12}$ groups having an epoxy group. These may be the same or different. $X^{10}$ is a $C_1$ to $C_5$ alkoxy group or a $C_4$ to $C_{12}$ group having an epoxy group. When a plurality of $X^{10}$s is present, these may be the same or different. $X^{11}$ is a group having 2 to 20 repeating units of an alkylene glycol. When a plurality of $X^{11}$s is present, these may be the same or different. m is an integer of 0 to 200, n is an integer of 0 to 200, k is an integer of 0 to 200, and m+n+k is 1 or more.

In the polyorganosiloxane represented by General Formula (4) above, examples of the $C_1$ to $C_6$ alkyl groups which can form $R^3$ to $R^{10}$, $X^9$, and $X^{12}$ in General Formula (4) above include a methyl group, an ethyl group, an n-propyl group, an isopropyl group, a butyl group, a pentyl group, a hexyl group, a cyclohexyl group, and the like. Examples of the $C_6$ to $C_{12}$ aryl groups include a phenyl group, a methylphenyl group, and the like. Among these, preferred are methyl and ethyl groups from the viewpoint of readiness of the production of the polyorganosiloxane itself.

In the polyorganosiloxane represented by General Formula (4) above, examples of the $C_1$ to $C_5$ alkoxy groups which can form $X^9$, $X^{10}$, and $X^{12}$ include a methoxy group, an ethoxy group, a propoxy group, an isopropoxy group, a butoxy group, and the like. Among these, preferred are methoxy and ethoxy groups from the viewpoint of readiness of the production of the polyorganosiloxane itself.

Furthermore, in the polyorganosiloxane represented by General Formula (4) above, examples of the $C_4$ to $C_{12}$ groups having an epoxy group which can form $X^9$, $X^{10}$, and $X^{12}$ include groups represented by General Formula (5) below:

$$-Z^1-Z^2-E^1 \qquad (5)$$

In General Formula (5) above, $Z^1$ is a $C_1$ to $C_{10}$ alkylene or alkylarylene group, $Z^2$ is a methylene group, a sulfur atom, or an oxygen atom, and $E^1$ is a $C_2$ to $C_{10}$ hydrocarbon group having an epoxy group.

The group represented by General Formula (5) above is preferably those where $Z^2$ is an oxygen atom, more preferably those where $Z^2$ is an oxygen atom and $E^1$ is a glycidyl group, particularly preferably those where $Z^1$ is a $C_1$ to $C_3$ alkylene group, $Z^2$ is an oxygen atom, and $E^1$ is a glycidyl group.

In the polyorganosiloxane represented by General Formula (4) above, $X^9$ and $X^{12}$ are preferably a $C_4$ to $C_{12}$ group having an epoxy group or a $C_1$ to $C_6$ alkyl group among the groups described above. $X^{10}$ is preferably a $C_4$ to $C_{12}$ group having an epoxy group among the groups described above. Furthermore, it is more preferred that $X^9$ and $X^{12}$ be $C_1$ to $C_6$ alkyl groups and $X^{10}$ be a $C_4$ to $C_{12}$ group having an epoxy group.

In the polyorganosiloxane represented by General Formula (4) above, $X^{11}$, namely, the group containing 2 to 20 repeating units of an alkylene glycol is preferably a group represented by General Formula (6) below:

[Chem. 4]

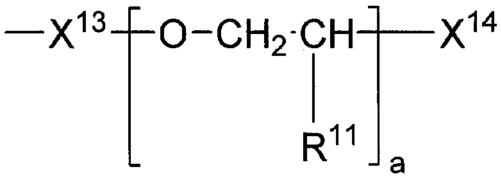

(6)

In General Formula (6) above, a is an integer of 2 to 20, $X^{13}$ is a $C_2$ to $C_{10}$ alkylene or alkylarylene group, $R^{11}$ is a hydrogen atom or a methyl group, and $X^{14}$ is a $C_1$ to $C_{10}$ alkoxy or aryloxy group. Among these, preferred groups are those where a is an integer of 2 to 8, $X^{13}$ is a $C_3$ alkylene group, $R^{11}$ is a hydrogen atom, and $X^{14}$ is a methoxy group.

In the polyorganosiloxane represented by General Formula (4) above, m is an integer of 0 to 200, preferably 20 to 150, more preferably 30 to 120. With m of 200 or less, the polyorganosiloxane itself represented by General Formula (4) above can be more readily produced, and can be more easily handled because the viscosity is not excessively high.

In the polyorganosiloxane represented by General Formula (4) above, n is an integer of 0 to 200, preferably 0 to 150, more preferably 0 to 120. k is an integer of 0 to 200, preferably 0 to 150, more preferably 0 to 130. The total numeric value of m, n, and k is 1 or more, preferably 2 to 400, more preferably 20 to 300, particularly preferably 30 to 250. If the total numeric value of m, n, and k is 1 or more, in the production process of the conjugated diene polymer, the reaction of the polyorganosiloxane represented by General Formula (4) above with an active terminal of the conjugated diene polymer readily proceeds. Furthermore, if the total numeric value of m, n, and k is 400 or less, the polyorganosiloxane itself represented by General Formula (4) above can be more readily produced, and can be more easily handled because the viscosity is not excessively high.

The hydrocarbyloxysilane compound is a silicon-containing compound having at least one hydrocarbyloxy group. The hydrocarbyloxysilane compound is preferably a compound having a hydrocarbyloxy group and at least one group containing a nitrogen atom. More preferably, such a group containing a nitrogen atom is a group containing a primary amino group having active hydrogen atoms and/or a secondary amino group having an active hydrogen atom. Such a hydrocarbyloxysilane compound is not particularly limited, and a compound represented by General Formula (7) below can be suitably used.

[Chem. 5]

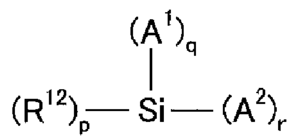

(7)

In General Formula (7) above, $R^{12}$ is a hydrocarbyl group, $A^1$ is a hydrocarbyloxy group, $A^2$ is a group containing a nitrogen atom, p is an integer of 0 to 2, q is an integer of 1 to 3, r is an integer of 1 to 3, and p+q+r=4.

Specific examples of the compound represented by General Formula (7) above include, but should not be limited to, the followings: Examples of compounds where $A^2$ in General Formula (7) above is a group containing a primary amino group having active hydrogen atoms and/or a secondary amino group having an active hydrogen atom include compounds having a 3-aminopropyl group as $A^2$, such as 3-aminopropyldimethylmethoxysilane, 3-aminopropylmethyldimethoxysilane, 3-aminopropyltrimethoxysilane, 3-aminopropyldimethylethoxysilane, 3-aminopropylmethyldiethoxysilane, and 3-aminopropyltriethoxysilane; compounds having a 4-aminobutyl group as $A^2$, such as 4-aminobutyldimethylmethoxysilane, 4-aminobutylmethyldimethoxysilane, 4-aminobutyltrimethoxysilane, 4-aminobutyldimethylethoxysilane, 4-aminobutylmethyldiethoxysilane, and 4-aminobutyltriethoxysilane; compounds having a 3-(2-aminoethylamino)propyl group as $A^2$, such as 3-(2-aminoethylamino)propyldimethylmethoxysilane, 3-(2-aminoethylamino)propylmethyldimethoxysilane, 3-(2-aminoethylamino)propyltrimethoxysilane, 3-(2-aminoethylamino)propyldimethylethoxysilane, 3-(2-aminoethylamino)propylmethyldiethoxysilane, 3-(2-aminoethylamino)propyltriethoxysilane; and the like. Among these, preferred are compounds having a 3-(2-aminoethylamino)propyl group as $A^2$, and more preferred is 3-(2-aminoethylamino)propyltrimethoxysilane.

Examples of compounds where $A^2$ in General Formula (7) above is a group other than a group containing a primary amino group having active hydrogen atoms and/or a secondary amino group having an active hydrogen atom include compounds having a 3-dimethylaminopropyl group as $A^2$, such as 3-dimethylaminopropyltrimethoxysilane, 3-dimethylaminopropylmethyldimethoxysilane, 3-dimethylaminopropyldimethylmethoxysilane, 3-dimethylaminopropyltriethoxysilane, 3-dimethylaminopropylmethyldiethoxysilane, and 3-dimethylaminopropyldimethylethoxysilane; compounds having a 3-diethylaminopropyl group as $A^2$, such as [3-(diethylamino)propyl]trimethoxysilane, 3-diethylaminopropylmethyldimethoxysilane, 3-diethylaminopropyldimethylmethoxysilane, 3-diethylaminopropyltriethoxysilane, 3-diethylaminopropylmethyldiethoxysilane, and 3-diethylaminopropyldimethylethoxysilane; compounds having a 3-dipropylaminopropyl group as $A^2$, such as 3-dipropylaminopropyltrimethoxysilane, 3-dipropylaminopropylmethyldimethoxysilane, 3-dipropylaminopropyldimethylmethoxysilane, 3-dipropylaminopropyltriethoxysilane, 3-dipropylaminopropylmethyldiethoxysilane, and 3-dipropylaminopropyldimethylethoxysilane; compounds having a 3-dibutylaminopropyl group as $A^2$, such as 3-dibutylaminopropyltrimethoxysilane, 3-dibutylaminopropylmethyldimethoxysilane, 3-dibutylaminopropyldimethylmethoxysilane, 3-dibutylaminopropyltriethoxysilane, 3-dibutylaminopropylmethyldiethoxysilane, and 3-dibutylaminopropyldimethylethoxysilane; compounds having a 3-phenylmethylaminopropyl group as $A^2$, such as 3-phenylmethylaminopropyltrimethoxysilane, 3-phenylmethylaminopropylmethyldimethoxysilane, 3-phenylmethylaminopropyldimethylmethoxysilane, 3-phenylmethylaminopropyltriethoxysilane, 3-phenylmethylaminopropylmethyldiethoxysilane, and 3-phenylmethylaminopropyldimethylethoxysilane; compounds having a 3-(4-methylpiperazinyl) propyl group as $A^2$, such as 3-(4-methylpiperazinyl)propyltrimethoxysilane, 3-(4-methylpiperazinyl)propylmethyldimethoxysilane, 3-(4-methylpiperazinyl)propyldimethylmethoxysilane, 3-(4-methylpiperazinyl)propyltriethoxysilane, 3-(4-methylpiperazinyl)propylmethyldiethoxysilane, and 3-(4-methylpiperazinyl)propyldimethylethoxysilane;
compounds having an N,N-bis(trimethylsilyl)aminopropyl group as $A^2$, such as N,N-bis(trimethylsilyl)aminopropyltrimethoxysilane, N,N-bis(trimethylsilyl)aminopropyltriethoxysilane, N,N-bis(trimethylsilyl)aminopropylmethyldimethoxysilane, and N,N-bis(trimethylsilyl)aminopropylmethyldiethoxysilane; compounds having an N,N-bis(triethylsilyl)aminopropyl group as $A^2$, such as N,N-bis(triethylsilyl)aminopropyltrimethoxysilane, N,N-bis(trimethylsilyl)aminopropyltriethoxysilane, N,N-bis(triethylsilyl)aminopropylmethyldimethoxysilane, and N,N-bis(triethylsilyl)aminopropylmethyldiethoxysilane; compounds having an N,N',N'-tris(trimethylsilyl)-N-(2-aminoethyl)-3-aminopropyl group as $A^2$, such as N,N',N'-tris(trimethylsilyl)-N-(2-aminoethyl)-3-aminopropyltrimethoxysilane, N,N',N'-tris(trimethylsilyl)-N-(2-aminoethyl)-3-aminopropyltriethoxysilane, N,N',N'-tris(trimethylsilyl)-N-(2-aminoethyl)-3-aminopropylmethyldimethoxysilane, and N,N',N'-tris(trimethylsilyl)-N-(2-aminoethyl)-3-aminopropylmethyldiethoxysilane; and the like. Among these, preferred are compounds having a 3-dimethylaminopropyl group as $A^2$, and more preferred is 3-dimethylaminopropyltrimethoxysilane.

The hydrocarbyloxysilane compound suitably used is also a compound represented by General Formula (8) below:

[Chem. 6]

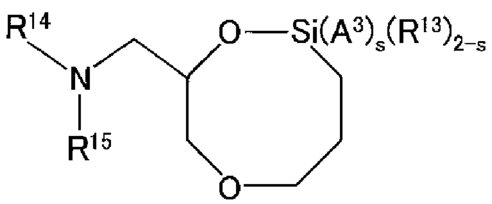

(8)

In General Formula (8) above, $A^3$ is a hydrocarbyloxy group; $R^{13}$ is an optionally substituted hydrocarbon group; $R^{14}$ and $R^{15}$ each independently represent an optionally substituted hydrocarbon group; $R^{14}$ and $R^{15}$ may be bonded to each other to form a ring structure together with the nitrogen atom bonded thereto; when $R^{14}$ and $R^{15}$ form the ring structure, the ring structure may include a heteroatom other than the nitrogen atom bonded thereto, as well as the nitrogen atom bonded thereto. s is an integer of 0 to 2.

Examples of particularly preferred compounds represented by General Formula (8) above include those in which hydrocarbon groups represented by $R^{14}$ and $R^{15}$ are bonded to each other to form a piperazine ring structure together with the nitrogen atom bonded thereto. More specifically, a compound represented by General Formula (9) below is particularly preferred. When a compound represented by General Formula (8) above having such a structure is used, a cross-linked rubber having further enhanced fuel efficiency can be obtained.

[Chem. 7]

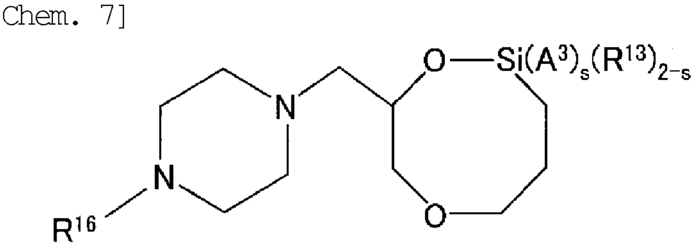

(9)

In General Formula (9) above, $A^3$, $R^{13}$, and s are as defined in General Formula (8) above, and $R^{16}$ represents a hydrocarbon group.

Specific examples of the compound represented by General Formula (8) above include 2,2-dimethoxy-8-(4-methylpiperazinyl)methyl-1,6-dioxa-2-silacyclooctane, 2,2-diethoxy-8-(4-methylpiperazinyl)methyl-1,6-dioxa-2-silacyclooctane, 2,2-dimethoxy-8-(N,N-diethylamino)methyl-1,6-dioxa-2-silacyclooctane, 2-methoxy-2-methyl-8-(4-methylpiperazinyl)methyl-1,6-dioxa-2-silacyclooctane, and the like. These compounds represented by General Formula (8) above may be used alone or in combination.

Among these hydrocarbyloxysilane compounds, preferred are compounds represented by General Formula (7) above, more preferred are compounds where $A^2$ in General Formula (7) above is a group containing a primary amino group having active hydrogen atoms and/or a secondary amino group having an active hydrogen atom, and still more preferred are compounds where $A^2$ in General Formula (7) above is a group containing both of a primary amino group having active hydrogen atoms and a secondary amino group having an active hydrogen atom because the processability of the conjugated diene polymer and the wear resistance and fuel efficiency of a cross-linked rubber thereof can be further enhanced in a good balance.

In the conjugated diene polymer according to the present invention, three or more peaks are present in a molecular weight distribution curve obtained by gel permeation chromatographic (hereinafter, referred to as GPC in some cases) measurement. The presence of three or more peaks in the molecular weight distribution curve in the conjugated diene polymer according to the present invention leads to an appropriately broad molecular weight distribution, which indicates that entanglement of polymer chains of the conjugated diene polymer is facilitated, and as a result, the effects of the present invention can be obtained.

The number of peaks is not particularly limited as long as three or more peaks are present. The number thereof is preferably within the range of 3 to 6, more preferably 4 to 5. If the number of peaks in the molecular weight distribution curve falls within the ranges above, the processability of the conjugated diene polymer and the strength properties, wear resistance, and fuel efficiency of a cross-linked rubber thereof can be further enhanced in a good balance.

The number of peaks in the molecular weight distribution curve can be determined by the following procedure. Specifically, a sample solution containing the conjugated diene polymer and an internal standard polystyrene having a molecular weight of 5000 is measured by GPC using a styrene-based column. A region of a molecular weight of less than 5000 is removed from the obtained molecular weight distribution curve, and the peak of the internal standard polystyrene is removed to obtain the molecular weight distribution curve of the conjugated diene polymer. Then, the obtained molecular weight distribution curve of the conjugated diene polymer is divided into regions in each of which both ends are defined by the base line or minimum values and each of which has one maximum value, and the peak areas of the regions are determined. The number of regions having a peak area of 1% or more can be determined as the number of peaks of molecular weight, where the entire peak area of the molecular weight distribution curve of the conjugated diene polymer is 100%. Specific conditions for measurement to be used can be those described later in Examples.

Examples of a method of controlling the number of peaks in a molecular weight distribution curve to three or more peaks include a method of blending two or more conjugated diene polymers having different molecular weight distribution curves; a method of synthesizing the conjugated diene polymer by polymerizing a monomer mixture, the method comprising additionally adding a polymerization initiator during the polymerization; a method of subjecting polymer chains obtained by polymerization to a coupling reaction; and the like. These methods may be used in combination. In polymerization, the number of peaks present in the molecular weight distribution curve, the peak top molecular weights of the peaks such as a finally detected peak (Z) and a maximum peak (L) described later, and the proportions of the polymer chains corresponding to the peaks can be controlled, for example, by selecting the timing and the amount of the polymerization initiator additionally added, the timing at which the coupling reaction is performed, the type of the coupling agent used, and the like.

In the conjugated diene polymer according to the present invention, the peak top molecular weight of the finally detected peak (Z) is 80000 to 250000. Here, the finally detected peak (Z) indicates the last detected peak in GPC measurement in a molecular weight distribution curve obtained by GPC measurement, and corresponds to a peak in the lowest molecular weight region in the molecular weight distribution curve (namely, a first peak described later). The peak top molecular weight indicates a molecular weight at which the peak has the maximum value. The peak top molecular weight of the finally detected peak (Z) can be determined based on the molecular weight distribution curve obtained in the measurement of the number of peaks in the molecular weight distribution curve.

When the peak top molecular weight of the finally detected peak (Z) is 80000 to 250000 in the conjugated diene polymer according to the present invention, polymer chains of the conjugated diene polymer are favorably entangled, and as a result, the effects of the present invention can be obtained. The peak top molecular weight of the finally detected peak (Z) is not particularly limited, and is in the range of preferably 100000 to 250000, more preferably 130000 to 220000, still more preferably 150000 to 210000. When the peak top molecular weight of the finally detected peak (Z) falls within the ranges above, the processability of the conjugated diene polymer and the strength properties, wear resistance, and

fuel efficiency of a cross-linked rubber thereof can be further enhanced in a good balance.

Examples of the method of controlling the peak top molecular weight of the finally detected peak (Z) include, but should not be limited to, a method for preparing the conjugated diene polymer through polymerization in which the amount of a polymerization initiator used is adjusted, or the time for which the polymerization is continued after the polymerization initiator is added to the polymerization system is adjusted, and the like.

In the conjugated diene polymer according to the present invention, the proportion of the polymer chain corresponding to the finally detected peak (Z) is not particularly limited, and is preferably 1 to 90% by weight, more preferably 3 to 70% by weight, still more preferably 4 to 60% by weight, further still more preferably 5 to 50% by weight, particularly preferably 5 to 40% by weight, most preferably 6 to 30% by weight relative to the total weight of the conjugated diene polymer. When the proportion of the polymer chain corresponding to the finally detected peak (Z) falls within the ranges above, the processability of the conjugated diene polymer and the strength properties, wear resistance, and fuel efficiency of a cross-linked rubber thereof can be further enhanced in a good balance.

The polymer chain corresponding to the finally detected peak (Z) preferably contains units of a vinyl compound having a functional group interactive with silica, more preferably contains units of a vinyl compound having a silicon atom-containing functional group, still more preferably contains units of a compound represented by General Formula (1) above (namely, units represented by General Formula (3) above). When the polymer chain corresponding to the finally detected peak (Z) contains such monomer units, the processability of the conjugated diene polymer and the strength properties, wear resistance, and fuel efficiency of a cross-linked rubber thereof can be further enhanced in a good balance. In the polymer chain corresponding to the finally detected peak (Z), the content of units of the vinyl compound having a functional group interactive with silica is preferably 0.001 to 10.000% by weight, more preferably 0.001 to 3.00% by weight, still more preferably 0.002 to 1.00% by weight. The proportion of the polymer chain corresponding to the finally detected peak (Z) can be determined from the proportion of the peak area of the finally detected peak (Z) to that of the conjugated diene polymer in the molecular weight distribution curve.

In the conjugated diene polymer according to the present invention, the polymer chain corresponding to the maximum peak (L) has a degree of adsorption onto silica of less than 40%. Here, the maximum peak (L) indicates a peak having the largest peak area among the peaks excluding the finally detected peak (Z) in the molecular weight distribution curve obtained by GPC measurement. The range of the molecular weight indicating the polymer chain corresponding to the maximum peak (L) can be determined based on the molecular weight distribution curve obtained in the measurement of the number of peaks in a molecular weight distribution curve described above.

In the present invention, the degree of adsorption of the polymer chain corresponding to the maximum peak (L) onto silica can be determined by performing GPC measurement using a styrene-based column and GPC measurement using a silica-based column on the conjugated diene polymer, and then calculation based on these results using an expression (I) below. Specific conditions for measurement to be used can be those described later in Examples.

$$\text{degree of adsorption (\%) of polymer chain corresponding to maximum peak (L) onto silica} = [1 - (P2 \times P3)/(P1 \times P4)] \times 100 \quad (I)$$

P1: the peak area of the peak of the polymer chain corresponding to the maximum peak (L), obtained by GPC measurement using a styrene-based column
P2: the peak area of the peak of an internal standard polystyrene, obtained by GPC measurement using a styrene-based column
P3: the peak area of the peak of the polymer chain corresponding to the maximum peak (L), obtained by GPC measurement using a silica-based column
P4: the peak area of the peak of the internal standard polystyrene, obtained by GPC measurement using a silica-based column
A column containing a styrene divinylbenzene-based gel filler is defined as a styrene-based column.

Here, Fig. 1 is a graph schematically showing the results of GPC measurement using a styrene-based column and a silica-based column. As shown in Fig. 1, while no adsorption or the like occurs in the GPC measurement using a styrene-based column, part of polymer chains adsorbs onto silica in the GPC measurement using a silica-based column. This leads to the difference between these results. In the present invention, the degree of adsorption of the polymer chain corresponding to the maximum peak (L) onto silica is specified.

In the conjugated diene polymer according to the present invention, the polymer chain corresponding to the maximum peak (L) has a degree of adsorption onto silica of less than 40%. The degree of adsorption is preferably 0 to 39%, more preferably 0 to 38%, still more preferably 0 to 37% although not particularly limited. When the polymer chain corresponding to the maximum peak (L) has a degree of adsorption onto silica within the ranges above, the processability

of the conjugated diene polymer and the strength properties, wear resistance, and fuel efficiency of a cross-linked rubber thereof can be further enhanced in a good balance.

Examples of a method of controlling the degree of adsorption of the polymer chain corresponding to the maximum peak (L) onto silica include a method of adjusting the amount and the type of units of the vinyl compound having a functional group interactive with silica contained in the polymer chain corresponding to the maximum peak (L), a method of adjusting the amount and the type of the modifying group contained in the polymer chain corresponding to the maximum peak (L), and the like.

In the conjugated diene polymer according to the present invention, the peak top molecular weight of the maximum peak (L) is not particularly limited, and is preferably more than 300000, more preferably more than 350000, still more preferably more than 600000, particularly preferably more than 600000 and 2500000 or less, most preferably 650000 to 1500000. When the peak top molecular weight of the maximum peak (L) falls within the ranges above, the processability of the conjugated diene polymer and the strength properties, wear resistance, and fuel efficiency of a cross-linked rubber thereof can be further enhanced in a good balance.

In the conjugated diene polymer according to the present invention, the proportion of the polymer chain corresponding to the maximum peak (L) is not particularly limited, and is preferably 5 to 98% by weight, more preferably 10 to 80% by weight, still more preferably 20 to 70% by weight, preferably 25 to 70% by weight, preferably 30 to 70% by weight, preferably 35 to 70% by weight relative to the total weight of the conjugated diene polymer. When the proportion of the polymer chain corresponding to the maximum peak (L) falls within the ranges above, the processability of the conjugated diene polymer and the strength properties, wear resistance, and fuel efficiency of a cross-linked rubber thereof can be further enhanced in a good balance. The proportion of the polymer chain corresponding to the maximum peak (L) can be determined from the proportion of the peak area of the maximum peak (L) to that of the conjugated diene polymer in the molecular weight distribution curve.

The conjugated diene polymer according to the present invention preferably has one or more peaks of a peak top molecular weight larger than the peak top molecular weight of the maximum peak (L) in the molecular weight distribution curve. In other words, the conjugated diene polymer according to the present invention preferably has at least the finally detected peak (Z), the maximum peak (L) as the peak other than the finally detected peak (Z), and a peak of a peak top molecular weight larger than that of the maximum peak (L) in the molecular weight distribution curve.

When such peaks are present in the molecular weight distribution curve, the processability of the conjugated diene polymer and the strength properties, wear resistance, and fuel efficiency of a cross-linked rubber thereof can be further enhanced in a good balance.

The conjugated diene polymer according to the present invention has a weight average molecular weight (Mw) in the range of preferably 200000 to 10000000, more preferably 200000 to 5000000, still more preferably 300000 to 5000000, further still more preferably 400000 to 3000000, further still more preferably 450000 to 2000000, particularly preferably 500000 to 1500000, most preferably 550000 to 1200000. When the weight average molecular weight (Mw) of the conjugated diene polymer falls within the ranges above, the processability of the conjugated diene polymer and the strength properties, wear resistance, and fuel efficiency of a cross-linked rubber thereof can be further enhanced in a good balance.

The molecular weight distribution of the entire conjugated diene polymer according to the present invention, which is represented by the ratio (Mw/Mn) of the weight average molecular weight (Mw) thereof to the number average molecular weight (Mn) thereof, is preferably 1.5 or more, more preferably 1.5 to 5, still more preferably 1.5 to 3, particularly preferably 1.55 to 3.

In this specification, a peak of the lowest molecular weight is defined as a first peak, and peaks after the first peak are sequentially defined as a second peak and a third peak in ascending order of the molecular weight in the molecular weight distribution curve. To be noted, the peak defined as the first peak is the finally detected peak (Z). For each of the peaks, the molecular weight of the maximum value in the molecular weight distribution curve is defined as the peak top molecular weight of the peak.

For example, when three peaks are present in the molecular weight distribution curve of the conjugated diene polymer according to the present invention, the peak top molecular weight of the second peak is in the range of preferably 150000 to 2500000, more preferably 200000 to 1500000, still more preferably more than 250000 and 1200000 or less, particularly preferably 300000 to 1000000. The peak top molecular weight of the second peak may be within the range of 600000 to 2500000, 650000 to 1500000, or 650000 to 1200000, for example. When three peaks are present in the molecular weight distribution curve, the peak top molecular weight of the third peak is in the range of preferably 500000 to 5000000, more preferably 600000 to 5000000, still more preferably 700000 to 5000000, particularly preferably 800000 to 4000000, most preferably 900000 to 3000000.

For example, when four peaks are present in the molecular weight distribution curve of the conjugated diene polymer according to the present invention, the peak top molecular weight of the second peak is within the range of preferably 120000 to 700000, more preferably 140000 to 660000, still more preferably 160000 to 620000, the peak top molecular weight of the third peak is within the range of preferably 600000 to 2500000, more preferably 650000 to

1500000, still more preferably 650000 to 1200000, and the peak top molecular weight of the fourth peak is within the range of preferably 700000 to 5000000, more preferably 800000 to 4000000, still more preferably 900000 to 3000000.

For example, when five peaks are present in the molecular weight distribution curve of the conjugated diene polymer according to the present invention, the peak top molecular weight of the second peak is in the range of preferably 120000 to 700000, more preferably 140000 to 660000, still more preferably 160000 to 620000, the peak top molecular weight of the third peak is within the range of preferably 160000 to 1000000, more preferably 190000 to 960000, still more preferably 220000 to 920000, the peak top molecular weight of the fourth peak is within the range of preferably 600000 to 2500000, more preferably 650000 to 1500000, still more preferably 650000 to 1200000, and the peak top molecular weight of the fifth peak is in the range of preferably 700000 to 5000000, more preferably 800000 to 4000000, still more preferably 900000 to 3000000.

The weight average molecular weight (Mw), the molecular weight distribution (Mw/Mn), and the peak top molecular weights of the peaks can be determined based on the molecular weight distribution curve obtained in the measurement of the number of peaks in a molecular weight distribution curve.

The conjugated diene polymer according to the present invention has a Mooney viscosity (ML1+4) of preferably 10 or more and 200 or less, more preferably 20 or more and 150 or less, still more preferably 30 or more and 145 or less, particularly preferably 40 or more and 140 or less, most preferably 50 or more and 135 or less. A Mooney viscosity within the ranges above results in more favorable processability. The Mooney viscosity (ML1+4) is measured according to JIS K6300-1:2013 at 100°C.

From the viewpoint of handling properties, the conjugated diene polymer according to the present invention can be suitably used in the form of a mixture with an extender oil described later. When the conjugated diene polymer is used in the form of a mixture with an extender oil, the Mooney viscosity (ML1+4) of the conjugated diene polymer mixed with the extender oil can be determined as the Mooney viscosity (ML1+4) of the conjugated diene polymer. In this case, the suitable ranges and conditions for measurement of the Mooney viscosity (ML1+4) are as described above.

<Method of producing conjugated diene polymer>

Examples of a method of producing the conjugated diene polymer according to the present invention include production methods comprising a step of mixing two or more conjugated diene polymers having different molecular weight distribution curves in the form of polymer solutions. Among these, preferred is a production method comprising a step of mixing a polymer solution containing a low molecular weight conjugated diene polymer described later with a polymer solution containing a high molecular weight conjugated diene polymer described later (hereinafter, referred to as "first production method" in some cases).

<First production method>

The first production method is a production method comprising a step of mixing a polymer solution containing a low molecular weight conjugated diene polymer with a polymer solution containing a high molecular weight conjugated diene polymer. In the first production method, at least one of the low molecular weight conjugated diene polymer and the high molecular weight conjugated diene polymer is desirably a conjugated diene polymer having a molecular weight distribution curve where two or more peaks are present, to finally obtain a conjugated diene polymer having a molecular weight distribution curve where three or more peaks are present.

Here, among the low molecular weight conjugated diene polymer and the high molecular weight conjugated diene polymer to be used in the first production method, a conjugated diene polymer having a larger weight average molecular weight (Mw) is defined as a high molecular weight conjugated diene polymer and that having a smaller weight average molecular weight (Mw) is defined as a low molecular weight conjugated diene polymer.

In the first production method, it is preferred that at least the high molecular weight conjugated diene polymer have a molecular weight distribution curve where two or more peaks are present, and it is more preferred that the low molecular weight conjugated diene polymer have a molecular weight distribution curve where two or more peaks are present, and the high molecular weight conjugated diene polymer have a molecular weight distribution curve where two or more peaks are present.

The first production method comprises a step of mixing a polymer solution containing the low molecular weight conjugated diene polymer with a polymer solution containing the high molecular weight conjugated diene polymer. In the first production method, to facilitate production of the conjugated diene polymer according to the present invention with stable productivity, preferred is a method of separately preparing a polymer solution containing the low molecular weight conjugated diene polymer and a polymer solution containing the high molecular weight conjugated diene polymer, and then mixing these.

The polymer solution containing the low molecular weight conjugated diene polymer is preferably prepared by a method of polymerizing a monomer mixture containing at least a conjugated diene monomer in an inert solvent in the

presence of a polymerization initiator, i.e., by solution polymerization. Hereinafter, such an embodiment may be simply referred to as polymerization or the like of the low molecular weight conjugated diene polymer in some cases.

The monomer mixture used in polymerization of the low molecular weight conjugated diene polymer contains at least a conjugated diene monomer. Examples of the conjugated diene monomer include the same ones listed above as the conjugated diene monomers for forming conjugated diene monomer units. Among these, 1,3-butadiene is preferred.

The monomer mixture used in polymerization of the low molecular weight conjugated diene polymer preferably contains an aromatic vinyl monomer in addition to the conjugated diene monomer. This enables incorporation of aromatic vinyl monomer units in the low molecular weight conjugated diene polymer. Examples of the aromatic vinyl monomer include the same aromatic vinyl monomers for forming aromatic vinyl monomer units as those described above. Among these, styrene is preferred.

The monomer mixture used in polymerization of the low molecular weight conjugated diene polymer preferably further contains a vinyl compound having a functional group interactive with silica. Examples of the vinyl compound having a functional group interactive with silica include the same ones listed above as the vinyl compounds having a functional group interactive with silica for forming units of the vinyl compound having a functional group interactive with silica.

The monomer mixture used in polymerization of the low molecular weight conjugated diene polymer may contain a different monomer other than the conjugated diene monomer, and the aromatic vinyl monomer and the vinyl compound having a functional group interactive with silica which are contained as needed. Examples of such a different monomer include those listed above as different compounds for forming different monomer units.

Any inert solvent can be used in polymerization of the low molecular weight conjugated diene polymer as long as it is usually used in solution polymerization and does not inhibit the polymerization reaction. Specific examples of the inert solvent include linear aliphatic hydrocarbons such as butane, pentane, hexane, heptane, and 2-butene; alicyclic hydrocarbons such as cyclopentane, cyclohexane, and cyclohexene; aromatic hydrocarbons such as benzene, toluene, and xylene; and the like. These inert solvents may be used alone or in combination. The inert solvent is used in an amount providing a monomer concentration of 1 to 50% by weight, preferably 10 to 40% by weight, for example.

Any polymerization initiator can be used in polymerization of the low molecular weight conjugated diene polymer as long as it can catalyze polymerization of the monomer mixture containing a conjugated diene monomer. Specific examples thereof include polymerization initiators containing an organic alkali metal compound, an organic alkaline earth metal compound, or a lanthanum-series metal compounds as a primary catalyst, and the like. Examples of organic alkali metal compounds include organic lithium compounds, organic sodium compounds, organic potassium compounds, and the like, and specifically include organic monolithium compounds such as n-butyllithium, sec-butyllithium, t-butyllithium, hexyllithium, phenyllithium, and stilbenelithium; organic poly-lithium compounds such as dilithiomethane, 1,4-dilithiobutane, 1,4-dilithio-2-ethylcyclohexane, 1,3,5-trilithiobenzene, and 1,3,5-tris(lithiomethyl)benzene; organic sodium compounds such as sodium naphthalene; organic potassium compounds such as potassium naphthalene; and the like. Examples of organic alkaline earth metal compounds include di-n-butylmagnesium, di-n-hexylmagnesium, diethoxycalcium, calcium distearate, di-t-butoxystrontium, diethoxybarium, diisopropoxybarium, diethylmercaptobarium, di-t-butoxybarium, diphenoxybarium, diethylaminobarium, barium distearate, diketylbarium, and the like. Examples of polymerization initiators containing a lanthanum-series metal compound as a primary catalyst include polymerization initiators containing a lanthanum-series metal salt of a lanthanum-series metal, such as lanthanum, cerium, praseodymium, neodymium, samarium, or gadolinium, and a carboxylic acid, a phosphorus-containing organic acid, or the like as a primary catalyst, and a cocatalyst such as an alkylaluminum compound, an organic aluminum hydride compound, or an organic aluminum halide compound. Among these polymerization initiators, organic monolithium compounds and organic poly-lithium compounds are preferably used, organic monolithium compounds are more preferably used, and n-butyllithium is particularly preferably used. The organic alkali metal compound may be preliminarily reacted with a secondary amine compound such as dibutylamine, dihexylamine, dibenzylamine, pyrrolidine, piperidine, hexamethyleneimine, or heptamethyleneimine, and used as organic alkali metal amide compounds. When an organic alkali metal amide compound is used as a polymerization initiator, a cross-linked rubber having further improved fuel efficiency and wear resistance can be obtained. These polymerization initiators may be used alone or in combination.

Examples of organic alkali metal amide compounds include organic alkali metal compounds reacted with a secondary amine compound. Among these, a compound represented by General Formula (10) below can be suitably used:

$$R^{17}\text{-}N(\text{-}R^{18})\text{-}M^1 \qquad (10)$$

In General Formula (10) above, $M^1$ represents an alkali metal atom; $R^{17}$ and $R^{18}$ each independently represent an alkyl group, a cycloalkyl group, an aryl group, an aralkyl group, a protecting group for an amino group, or a group which can be hydrolyzed to generate a hydroxyl group; $R^{17}$ and $R^{18}$ may be bonded to each other to form a ring structure

together with the nitrogen atom bonded thereto; when $R^{17}$ and $R^{18}$ form a ring structure, the ring structure may include a heteroatom other than the nitrogen atom bonded thereto, as well as the nitrogen atom bonded thereto.

The alkyl group is not particularly limited, and is preferably a $C_1$ to $C_{20}$ alkyl group, more preferably $C_1$ to $C_{10}$ alkyl group. Examples of such alkyl groups include a methyl group, an ethyl group, an n-propyl group, an isopropyl group, an n-butyl group, an isobutyl group, a sec-butyl group, a tert-butyl group, an n-pentyl group, an n-hexyl group, an n-heptyl group, an n-octyl group, an n-decyl group, and the like.

The cycloalkyl group is not particularly limited, and is preferably a $C_3$ to $C_{20}$ cycloalkyl group, more preferably a $C_3$ to $C_{12}$ cycloalkyl group. Examples of such cycloalkyl groups include a cyclopropyl group, a cyclopentyl group, a cyclohexyl group, a cycloheptyl group, a cyclooctyl group, a cyclododecyl group, and the like.

The aryl group is not particularly limited, and is preferably a $C_6$ to $C_{12}$ aryl group, more preferably a $C_6$ to $C_{10}$ aryl group. Examples of such aryl groups include a phenyl group, a 1-naphthyl group, a 2-naphthyl group, and the like

The aralkyl group is not particularly limited, and is preferably a $C_7$ to $C_{13}$ aralkyl group, more preferably a $C_7$ to $C_9$ aralkyl group. Examples of such aralkyl groups include a benzyl group, a phenethyl group, and the like.

The protecting group for an amino group is not particularly limited as long as it acts as a protecting group for an amino group. Examples thereof include alkylsilyl groups and the like. Examples of such alkylsilyl groups include a trimethylsilyl group, a triethylsilyl group, a triphenylsilyl group, a methyldiphenylsilyl group, an ethylmethylphenylsilyl group, a tert-butyldimethylsilyl group, and the like.

When $R^{17}$ and/or $R^{18}$ is a protecting group for an amino group, as a result of removal of the protecting group for an amino group, a structure represented by General Formula (12) above described later in which $R^{19}$ and/or $R^{20}$ is a hydrogen atom can be introduced to one of the terminals of the polymer chain forming the low molecular weight conjugated diene polymer to be prepared.

The group which can be hydrolyzed to generate a hydroxyl group is not particularly limited as long as the group is hydrolyzed in the presence of, for example, an acid to generate a hydroxyl group. Examples thereof include alkoxyalkyl groups, groups containing an epoxy group, and the like.

Examples of alkoxyalkyl groups include a methoxymethyl group, an ethoxymethyl group, an ethoxyethyl group, a propoxymethyl group, a butoxymethyl group, a butoxyethyl group, a propoxyethyl group, and the like.

Examples of groups containing an epoxy group include a group represented by General Formula (11) below:

$$-Z^3-Z^4-E^2 \qquad (11)$$

In General Formula (11) above, $Z^3$ is a $C_1$ to $C_{10}$ alkylene group or alkylarylene group, $Z^4$ is a methylene group, a sulfur atom, or an oxygen atom, and $E^2$ is a glycidyl group.

$R^{17}$ and $R^{18}$ may be bonded to each other to form a ring structure together with the nitrogen atom bonded thereto. In this case, specific examples of the structure formed by $R^{17}$ and $R^{18}$ and the nitrogen atom bonded thereto include an azetidine ring (where $R^{17}$ and $R^{18}$ form a propylene moiety), a pyrrolidine ring (where $R^{17}$ and $R^{18}$ form a butylene moiety), a piperidine ring (where $R^{17}$ and $R^{18}$ form a pentylene moiety), a hexamethylene imine ring (where $R^{17}$ and $R^{18}$ form a hexylene moiety), and the like. When $R^{17}$ and $R^{18}$ are bonded to each other to form a ring structure together with the nitrogen atom bonded thereto, the ring structure is preferably a 4- to 8-membered ring structure.

In General Formula (10) above, $M^1$ is an alkali metal atom, and examples of such an alkali metal atom include lithium, sodium, and potassium atoms, and the like. Among these, preferred is a lithium atom from the viewpoint of polymerization activity.

When the compound represented by General Formula (10) above is used as the polymerization initiator, the amine structure forming the organic alkali metal amide compound remains as a residue bonded to the polymerization starting terminal of the polymer chain. For this reason, when the compound represented by General Formula (10) above is used as the polymerization initiator, a structure represented by General Formula (12) below can be introduced to one of the terminals of the polymer chain of the resulting low molecular weight conjugated diene polymer.

$$R^{19}-N(-R^{20})- \qquad (12)$$

In General Formula (12) above, $R^{19}$ and $R^{20}$ each independently represent a hydrogen atom, an alkyl group, a cycloalkyl group, an aryl group, an aralkyl group, a protecting group for an amino group, or a group which can be hydrolyzed to generate a hydroxyl group; $R^{19}$ and $R^{20}$ may be bonded to each other to form a ring structure together with the nitrogen atom bonded thereto; when $R^{19}$ and $R^{20}$ form a ring structure, the ring structure may include a heteroatom other than the nitrogen atom bonded thereto, as well as the nitrogen atom bonded thereto.

Examples of alkyl groups, cycloalkyl groups, aryl groups, aralkyl groups, protecting groups for an amino group, and groups which can be hydrolyzed to generate a hydroxyl group for $R^{19}$ and $R^{20}$ include the same groups listed as those for $R^{17}$ and $R^{18}$ in General Formula (10) above. When $R^{19}$ and $R^{20}$ are bonded to each other to form a ring structure together with the nitrogen atom bonded thereto, the same as those in $R^{17}$ and $R^{18}$ in General Formula (10) above can

be listed. The hydrogen atoms which can be $R^{19}$ and $R^{20}$ are introduced as a result of removal of the protecting group for an amino group.

The organic alkali metal amide compound as the polymerization initiator can be added to the polymerization system by any method. A method of preliminarily reacting a secondary amine compound with an organic alkali metal compound to prepare an organic alkali metal amide compound, and mixing this with a monomer containing the conjugated diene monomer to allow polymerization to proceed can be used. An alternative method may be used in which an organic alkali metal compound and a secondary amine compound are separately added to the polymerization system, and are mixed with a monomer containing the conjugated diene monomer to generate an organic alkali metal amide compound which allows polymerization to proceed in the polymerization system. The reaction conditions such as the reaction temperature are not particularly limited, and can be selected according to the desired polymerization conditions, for example.

The amount of the secondary amine compound to be used may be determined according to the desired amount of a polymerization initiator used, and is in the range of usually 0.01 to 1.5 mmol, preferably 0.1 to 1.2 mmol, more preferably 0.5 to 1.0 mmol per mmol of the organic alkali metal compound.

The polymerization initiator can be used in any amount in polymerization of the low molecular weight conjugated diene polymer, and the amount is in the range of preferably 1 to 100 mmol, more preferably 2 to 50 mmol per 1000 g of the monomer.

The polymerization temperature is in the range of usually -80 to +150°C, preferably 0 to 100°C, more preferably 30 to 90°C. The polymerization can be performed in any manner such as a batch or continuous mode. Preferred is a batch mode because randomness in bonding of conjugated diene monomer units and aromatic vinyl monomer units is readily controlled.

In polymerization of the monomer mixture containing the conjugated diene monomer, a polar compound is preferably added to an inert organic solvent to control the vinyl bond content of conjugated diene monomer units of the low molecular weight conjugated diene polymer. Examples of the polar compound include ether compounds such as ethylene glycol diethyl ether, ethylene glycol dibutyl ether, dibutyl ether, and tetrahydrofuran; tertiary amines such as tetramethylethylenediamine; alkali metal alkoxides; phosphine compounds; and the like. Among these, preferred are ether compounds and tertiary amines. More preferred are ethylene glycol diethyl ether, ethylene glycol dibutyl ether, and tertiary amines. Sill more preferred are tertiary amines, and particularly preferred is tetramethylethylenediamine. These polar compounds may be used alone or in combination. The amount of the polar compound to be used may be determined according to a desired vinyl bond content, and is preferably 0.001 to 100 mol, more preferably 0.01 to 10 mol per mol of the polymerization initiator. When the amount of the polar compound to be used falls within the ranges above, control of the vinyl bond content of the conjugated diene monomer units is facilitated, and in addition, and failure caused by deactivation of the polymerization initiator hardly occurs.

The low molecular weight conjugated diene polymer may be prepared by a production method comprising a step of polymerizing a monomer (a) containing isoprene in an inert solvent in the presence of a polymerization initiator to form a polymer block (A) having an active terminal; and a step of mixing the polymer block (A) having an active terminal with a monomer (b) containing 1,3-butadiene to continue polymerization, thereby forming the polymer block (A) and a polymer block (B) .

By using such a production method, a low molecular weight conjugated diene polymer can be obtained in which the polymer block (A) containing isoprene monomer units and the polymer block (B) containing 1,3-butadiene monomer units are formed as one molecule.

The monomer (a) for forming the polymer block (A) can be any monomer containing isoprene, and monomer(s) can be selected according to the composition of the polymer block (A) to be formed. For example, when a polymer block (A) formed of isoprene monomer units and aromatic vinyl monomer units is prepared, the monomer (a) may be one containing isoprene and an aromatic vinyl monomer. When a polymer block (A) formed of units of a vinyl compound having a functional group interactive with silica in addition to isoprene monomer units and aromatic vinyl monomer units is prepared, the monomer (a) may be one containing a vinyl compound having a functional group interactive with silica in addition to isoprene and an aromatic vinyl monomer. Hereinafter, such an embodiment will be described.

It is sufficient that the polymer block (A) contains isoprene monomer units. The polymer block is not particularly limited, and may consist only of isoprene monomer units, or may consist of isoprene monomer units and monomer units other than the isoprene monomer units. In this case, suitable examples of the monomer units other than the isoprene monomer units include aromatic vinyl monomer units. Preferably, the polymer block (A) also contains aromatic vinyl monomer units in addition to isoprene monomer units.

The proportion of isoprene monomer units in the polymer block (A) is preferably 50% by weight or more, more preferably 70% by weight or more, still more preferably 90% by weight or more. The upper limit of the proportion of isoprene monomer units is not particularly limited, and is preferably 99% by weight or less. By controlling the proportion of isoprene monomer units in the polymer block (A) within the ranges above, the compatibility between the low molecular weight conjugated diene polymer and a filler such as silica can be further enhanced, which can further enhance the

processability of the conjugated diene polymer and the wear resistance and fuel efficiency of a cross-linked rubber thereof in a good balance.

Examples of the aromatic vinyl monomer used to form aromatic vinyl monomer units contained in the polymer block (A) include the same aromatic vinyl monomers as those listed above. Among these, styrene is preferred. These aromatic vinyl monomers may be used alone or in combination. The proportion of aromatic vinyl monomer units in the polymer block (A) is preferably 50% by weight or less, more preferably 30% by weight or less, still more preferably 10% by weight or less. The lower limit of the proportion of aromatic vinyl monomer units is not particularly limited, and is preferably 1% by weight or more.

Moreover, units of the vinyl compound having a functional group interactive with silica may be contained in at least one of the polymer block (A) and the polymer block (B) described later in the low molecular weight conjugated diene polymer. In this case, units of the vinyl compound having a functional group interactive with silica may be contained only in the polymer block (A), may be contained only in the polymer block (B), or may be contained both in the polymer block (A) and the polymer block (B).

In any of the cases where units of the vinyl compound having a functional group interactive with silica are contained in one or both of the polymer block (A) and the polymer block (B), the proportion thereof is preferably adjusted to the range of preferably 0.01 to 20% by weight, more preferably 0.02 to 2% by weight, particularly preferably 0.03 to 1% by weight relative to the total monomer units forming the low molecular weight conjugated diene polymer. By controlling the proportion of units of the vinyl compound having a functional group interactive with silica within the ranges above, the processability of the conjugated diene polymer can be further enhanced, the wear resistance and fuel efficiency of a cross-linked rubber thereof can be further enhanced in a good balance, and furthermore, handling stability can also be improved.

The polymer block (A) may contain additional monomer units as desired in addition to isoprene monomer units, and aromatic vinyl monomer units and units of the vinyl compound having a functional group interactive with silica which are contained as needed. Examples of an additional compound used to form additional monomer units include linear olefin compounds such as ethylene, propylene, and 1-butene; cyclic olefin compounds such as cyclopentene and 2-norbornene; conjugated diene monomers other than isoprene, such as 1,3-butadiene, 2,3-dimethyl-1,3-butadiene, 2-chloro-1,3-butadiene, 1,3-pentadiene, and 1,3-hexadiene; non-conjugated diene monomers such as 1,5-hexadiene, 1,6-heptadiene, 1,7-octadiene, dicyclopentadiene, and 5-ethylidene-2-norbornene; and the like. These additional monomers may be used alone or in combination. The proportion of additional monomer units in the polymer block (A) is preferably 20% by weight or less, more preferably 10% by weight or less, still more preferably 6% by weight or less.

The polymer block (A) is formed by polymerizing the monomer (a) containing isoprene in an inert solvent in the presence of a polymerization initiator. The polymer block (A) formed has an active terminal.

Examples of the inert solvent used in polymerization of the monomer to form the polymer block (A) include the same inert solvents as those listed above. The inert solvent is used in an amount providing a monomer concentration of preferably 1 to 80% by weight, more preferably 10 to 50% by weight.

The polymerization initiator used to form the polymer block (A) can be any polymerization initiator as long as the monomer (a) containing isoprene is polymerized to provide a polymer chain having an active terminal. Specific examples thereof include the same polymerization initiators listed above.

The amount of the polymerization initiator used can be selected according to the desired molecular weight, and is in the range of preferably 4 to 250 mmol, more preferably 6 to 200 mmol, particularly preferably 10 to 70 mmol per 100 g of the monomer (a) containing isoprene.

The polymerization temperature in polymerization of the monomer (a) containing isoprene is in the range of preferably -80 to +150°C, more preferably 0 to 100°C, still more preferably 20 to 90°C. The polymerization can be performed in any manner such as a batch or continuous mode. When the polymer block (A) is formed as a copolymer chain, the bonding form of the monomers can be a variety of bonding forms such as a block form, a tapered form, and a random form, and preferred is a random form.

In polymerization, a polar compound is preferably added to an inert solvent to control the vinyl bond content of isoprene monomer units in the polymer block (A). Examples of a polar compound to be used include the same polar compounds as those listed above. The amount of the polar compound used may be determined according to the desired vinyl bond content, and is preferably 0.01 to 30 mol, more preferably 0.05 to 10 mol relative to 1 mol of the polymerization initiator. When the amount of the polar compound to be used falls within the ranges above, control of the vinyl bond content of isoprene monomer units is facilitated, and in addition, failure caused by deactivation of the polymerization initiator hardly occurs. Moreover, the vinyl bond content of isoprene monomer units can be increased by increasing the amount of the polar compound used within the ranges above.

The vinyl bond content of isoprene monomer units in the polymer block (A) is preferably 5 to 90% by weight, more preferably 5 to 80% by weight. By controlling the vinyl bond content of isoprene monomer units within the ranges above, a cross-linked rubber having further improved fuel efficiency can be obtained. In this specification, the vinyl bond content of isoprene monomer units indicates the proportion of the total amount of isoprene monomer units having a 1,2-structure and isoprene monomer units having a 3,4-structure in the isoprene monomer units.

The polymer block (A) has a weight average molecular weight (Mw) in the range of preferably 1,000 to 30,000, more preferably 1,500 to 20,000, still more preferably 2,000 to 10,000. By controlling the weight average molecular weight (Mw) of the polymer block (A) within the ranges above, a cross-linked rubber having further improved fuel efficiency can be obtained.

The molecular weight distribution represented by the ratio (Mw/Mn) of the weight average molecular weight (Mw) of the polymer block (A) to the number average molecular weight (Mn) thereof is preferably 1.0 to 1.5, more preferably 1.0 to 1.3. When the molecular weight distribution (Mw/Mn) of the polymer block (A) falls within the ranges above, the low molecular weight conjugated diene polymer is more readily prepared, and thus the conjugated diene polymer according to the present invention is more readily prepared. The weight average molecular weight (Mw) and the number average molecular weight (Mn) of the polymer block (A) can be determined as values against polystyrene standards by gel permeation chromatography.

It is sufficient that the polymer block (B) contains 1,3-butadiene monomer units. The polymer block is not particularly limited, and may consist only of 1,3-butadiene monomer units, or may consist of 1,3-butadiene monomer units and monomer units other than the 1,3-butadiene monomer units. In this case, suitable examples of the monomer units other than the 1,3-butadiene monomer units include aromatic vinyl monomer units. Preferably, the polymer block (B) also contains aromatic vinyl monomer units in addition to 1,3-butadiene monomer units.

The proportion of 1,3-butadiene monomer units in the polymer block (B) is preferably 45% by weight or more, more preferably 50 to 94.98% by weight, still more preferably 55 to 89.97% by weight. By controlling the proportion of 1,3-butadiene monomer units in the polymer block (B) within the ranges above, the low molecular weight conjugated diene polymer is more readily prepared, and as a result, the conjugated diene polymer according to the present invention is more readily prepared.

Examples of aromatic vinyl monomers used to form aromatic vinyl monomer units contained in the polymer block (B) include the same aromatic vinyl monomers listed above. Among these, styrene is preferred. The proportion of aromatic vinyl monomer units is preferably 54.99% by weight or less, more preferably 5 to 49.98% by weight, still more preferably 10 to 44.97% by weight.

Furthermore, at least one of the polymer block (A) and the polymer block (B) may contain units of a vinyl compound having a functional group interactive with silica.

Furthermore, the polymer block (B) may contain additional monomer units as desired in addition to 1,3-butadiene monomer units, and aromatic vinyl monomer units and units of the vinyl compound having a functional group interactive with silica which are contained as needed. Examples of an additional compound forming such additional monomer units include the same compounds as those for the polymer block (A) listed above (excluding 1,3-butadiene), and isoprene. The proportion of additional monomer units in the polymer block (B) is preferably 40% by weight or less, more preferably 35% by weight or less, still more preferably 25% by weight or less.

The polymer block (B) and the polymer block (A) are formed as one molecule by mixing the polymer block (A) having an active terminal and the monomer (b) containing 1,3-butadiene to continue polymerization. The polymer block (B) formed has an active terminal. In contrast, the active terminal disappears from the polymer block (A).

The inert solvent used in polymerization of the polymer block (A) and the monomer (b) containing 1,3-butadiene to form the polymer block (B) is not particularly limited, and the same inert solvents listed above can be used.

The amount of the polymer block (A) having an active terminal used in formation of the polymer block (B) can be determined according to the desired molecular weight, and is in the range of preferably 0.1 to 5 mmol, more preferably 0.15 to 2 mmol, still more preferably 0.2 to 1.5 mmol per 100 g of the monomer (b) containing 1,3-butadiene.

The polymer block (A) and the monomer (b) containing 1,3-butadiene can be mixed by any method. The polymer block (A) having an active terminal may be added to a solution of the monomer (b) containing 1,3-butadiene, or the monomer (b) containing 1,3-butadiene may be added to a solution of the polymer block (A) having an active terminal. To control polymerization, preferred is a method of adding the polymer block (A) having an active terminal to a solution of the monomer (b) containing 1,3-butadiene.

In polymerization of the monomer (b) containing 1,3-butadiene, the polymerization temperature is in the range of preferably -80 to +150°C, more preferably 0 to 100°C, still more preferably 20 to 90°C. The polymerization can be performed in any manner such as a batch or continuous mode. When the polymer block (B) is formed as a copolymer chain, preferred is a batch mode because the randomness in bonding is readily controlled.

When the polymer block (B) is formed as a copolymer chain, the bonding form of the monomers can be a variety of bonding forms such as a block form, a tapered form, and a random form. Among these, preferred is a random form. When the monomers are bonded at random, a cross-linked rubber having further improved fuel efficiency can be obtained.

In the first production method, as in the control of the vinyl bond content of isoprene monomer units in the polymer block (A), a polar compound is preferably added to an inert solvent during polymerization to control the vinyl bond content of 1,3-butadiene monomer units in the polymer block (B). To be noted, when the polymer block (A) is prepared in the presence of the polar compound added to the inert solvent in a sufficient amount to control the vinyl

bond content of 1,3-butadiene monomer units in the polymer block (B), the polar compound need not be further added. Examples of the polar compound to be used to control the vinyl bond content include the same polar compounds as those listed above.

The amount of the polar compound used may be determined according to the desired vinyl bond content, and may be adjusted in the range of preferably 0.01 to 100 mol, more preferably 0.1 to 30 mol relative to 1 mol of the polymerization initiator used in the first polymerization reaction (polymerization reaction to form the first polymer block (A)). When the amount of the polar compound used falls within the ranges above, the control of the vinyl bond content of 1,3-butadiene monomer units is facilitated, and failure caused by deactivation of the polymerization initiator hardly occurs.

The vinyl bond content of 1,3-butadiene monomer units in the polymer block (B) is preferably 1 to 90% by weight, more preferably 3 to 80% by weight, particularly preferably 5 to 75% by weight. When the vinyl bond content of 1,3-butadiene monomer units in the polymer block (B) is controlled within the ranges above, a cross-linked rubber having more excellent fuel efficiency can be obtained.

Thus, a polymer chain having an active terminal and including the polymer block (A) and the polymer block (B) can be prepared. From the viewpoint of productivity, the polymer chain having an active terminal preferably has a structure of polymer block (A)-polymer block (B) in which the polymer block (B) is terminated with an active terminal. The polymer chain may contain a plurality of polymer blocks (A), or may contain another polymer block. Examples of the polymer chain include polymer chains having an active terminal, such as polymer block (A)-polymer block (B)-polymer block (A), and the like. In this case, an active terminal is formed at the terminal of the polymer block (A) formed subsequent to the polymer block (B). When a polymer block (A) is formed at the active terminal of the polymer chain having an active terminal, the amount of isoprene used is preferably 10 to 100 mol, more preferably 15 to 70 mol, preferably particularly 20 to 35 mol relative to 1 mol of the polymerization initiator used in the first polymerization reaction (polymerization reaction to form the first polymer block (A)).

The weight ratio of the polymer block (A) to the polymer block (B) (weight of polymer block (A))/(weight of polymer block (B)) in the polymer chain having an active terminal (weight ratio of the total weight of polymer blocks (A) to that of polymer blocks (B) when a plurality of polymer blocks (A) and a plurality of polymer blocks (B) are present) is preferably 0.001 to 0.2, more preferably 0.005 to 0.1, particularly preferably 0.01 to 0.05. By controlling the weight ratio of the polymer block (A) to the polymer block (B) within the ranges above, the processability of the conjugated diene polymer can be further improved, and a cross-linked rubber having further enhanced wear resistance and fuel efficiency in a good balance can be obtained.

As described above, a polymer containing polymer chains having an active terminal can be prepared in the inert solvent.

The polymer chains having an active terminal may be at least partially reacted with a coupling agent to form coupled polymer chains. This enables control of the number of peaks in the molecular weight distribution curve of the low molecular weight conjugated diene polymer.

Examples of the coupling agent include, but should not be limited to, silicon tetrachloride, methyltrichlorosilane, dimethyldichlorosilane, trimethylchlorosilane, tin tetrachloride, methyltrichlorotin, dimethyldichlorotin, trimethylchlorotin, tetramethoxysilane, methyltrimethoxysilane, dimethoxydimethylsilane, methyltriethoxysilane, ethyltrimethoxysilane, dimethoxydiethylsilane, diethoxydimethylsilane, tetraethoxysilane, ethyltriethoxysilane, diethoxydiethylsilane, bis(trichlorosilyl)methane, 1,2-bis(trichlorosilyl)ethane, 1,3-bis(trichlorosilyl)propane, 1,4-bis(trichlorosilyl)butane, 1,5-bis(trichlorosilyl)pentane, 1,6-bis(trichlorosilyl)hexane, and the like. Among these, preferred is use of a tri- or higher functional coupling agent, and more preferred is use of a tetra- or higher functional coupling agent because a cross-linked rubber having enhanced mechanical properties can be obtained while sufficient processability of the conjugated diene polymer is maintained.

The coupling agent can be used in any amount at any timing, and the amount and the timing of addition can be determined according to the desired molecular weight distribution curve of the low molecular weight conjugated diene polymer.

To make the effects of the present invention more remarkable, preferably, the active terminals contained in the polymer chains having an active terminal prepared through polymerization (including polymer chains having an active terminal which are present in the system after the coupling reaction) may be reacted with a modifier to prepare a low molecular weight conjugated diene polymer having a modifying group. Examples of the modifier to be used include the same modifiers as those described above as modifiers for forming a modifying group. By using a modifier which can exhibit coupling action (such as polyorganosiloxane), the number of peaks in the molecular weight distribution curve of the low molecular weight conjugated diene polymer can be controlled.

When the modifier used is a siloxane compound, it is preferred that the polymer chain having an active terminal, the siloxane compound, and an organic metal compound be reacted. Thereby, the conjugated diene polymer can have higher processability. Examples of the organic metal compound used in this reaction include organic alkali metal compounds, and examples of the organic alkali metal compounds include organic lithium compounds, organic sodium compounds, organic potassium compounds, and the like. Specifically, examples thereof include organic monolithium compounds such as n-butyllithium, sec-butyllithium, t-butyllithium, hexyllithium, phenyllithium, and stilbene lithium; organic poly-lithium compounds such as dilithiomethane, 1,4-dilithiobutane, 1,4-dilithio-2-ethylcyclohexane, 1,3,5-trilithiobenzene, and 1,3,5-tris(lithiomethyl)benzene; organic sodium compounds such as sodium naphthalene; organic potassium compounds such as potassium naphthalene; and the like. Among these organic metal compounds, n-butyllithium is preferably used. The amount of the organic metal compound used in this reaction is preferably 0.05 to 10 mol, more preferably 0.01 to 5 mol relative to 1 mol of the siloxane compound used. When the amount of the organic metal compound used falls within the ranges above, the conjugated diene polymer can have higher processability. These organic metal compounds may be used alone or in combination.

Examples of a method of reacting the polymer chain having an active terminal with the siloxane compound and the organic metal compound include a method of mixing the polymer chain having an active terminal with the siloxane compound, and then mixing the organic metal compound; a method of mixing the polymer chain having an active terminal with the organic metal compound, and mixing the siloxane compound; a method of simultaneously (or sequentially) adding the siloxane compound and the organic metal compound to the polymer chain having an active terminal, and mixing these; and the like. To further improve the processability of the conjugated diene polymer, preferred is a method of mixing the polymer chain having an active terminal with the organic metal compound, and then mixing the siloxane compound.

In the method of mixing the polymer chain having an active terminal with the organic metal compound, and then mixing the siloxane compound, for its simplicity, preferred is a method of adding the organic metal compound to the polymer solution used in polymerization of the polymer chain having an active terminal, mixing these, and then adding the siloxane compound to the mixed solution. At this time, it is preferred that the organic metal compound be added to the polymer solution in the form of a solution in an inert solvent, and the solution concentration is preferably in the range of 1 to 50% by weight. The temperature during addition of the organic metal compound is not particularly limited, and is usually 0 to 120°C.

The organic metal compound can be added to the solution containing polymer chains having an active terminal at any timing. To enhance the reactivity of the siloxane compound in the presence of the organic metal compound, it is desired that the organic metal compound is added to the solution after the polymerization conversion ratio reaches preferably 90% or more, more preferably 95% or more. It is also desired that the organic metal compound is added to the solution after the monomer is consumed to 5000 ppm or less.

When the siloxane compound is added to the solution containing polymer chains having an active terminal and the organic metal compound, the siloxane compound is preferably added to the polymerization system in the form of a solution in an inert solvent, and the solution concentration is preferably in the range of 1 to 50% by weight. The reaction temperature when the siloxane compound is reacted is not particularly limited, and is usually 0 to 120°C. The reaction time is also not particularly limited, and is usually 1 to 60 minutes.

The siloxane compound can be added to the solution containing polymer chains having an active terminal and the organic metal compound at any timing after the organic metal compound is added to the solution containing polymer chains having an active terminal. Desirably, the siloxane compound is added to the solution after preferably 1 to 180 minutes, more preferably 5 to 60 minutes, still more preferably 10 to 30 minutes after addition of the organic metal compound to the solution containing polymer chains having an active terminal. Such addition of the siloxane compound can further improve the processability of the conjugated diene polymer.

The polymer chains prepared through the reaction by the method of mixing the polymer chain having an active terminal with the organic metal compound, and then mixing the siloxane compound contain those which have a modifying structure derived from the siloxane compound and introduced into polymer chain terminals and are further reacted with the organic metal compound. Besides, the polymer chains may contain unmodified polymer chains not modified with the siloxane compound, and/or siloxane-modified polymer chains not reacted with the organic metal compound.

When the modifier is reacted with the active terminal of the polymer chain, the amount of the modifier used is not particularly limited, and is preferably 0.01 to 10.0 mol, more preferably 0.02 to 5.0 mol, particularly preferably 0.05 to 2.0 mol relative to 1 mol of the active terminal in the polymer chain having an active terminal (relative to 1 mol of the metal atom in the organic alkali metal compound when an organic alkali metal compound is used as the polymerization initiator). These modifiers may be used alone or in combination.

Examples of a method of reacting the modifier with the active terminal of the polymer chain having an active terminal include, but should not be limited to, a method of mixing the modifier and the polymer chain having an active terminal in a solvent which can dissolve these, and the like. Examples of the solvent used at this time include the same solvents as those used in polymerization described above. At this time, for its simplicity, preferred is a method of adding the modifier to the polymer solution used in the polymerization while the polymer solution contains the resulting polymer chains having an active terminal as they are. At this time, the modifier may be added to the polymerization system in the form of a solution in an inert solvent used in the polymerization above, and the solution concentration is preferably in the range of 1 to 50% by weight. The reaction temperature is not particularly limited, and is usually 0 to 120°C. The

reaction time is not particularly limited, and is usually 1 minute to 1 hour.

The modifier can be added to the solution containing polymer chains having an active terminal at any timing. Desirably, the modifier is added to the solution while the polymerization reaction has not completed yet and the solution containing polymer chains having an active terminal also contains the monomer, more specifically, while the solution containing polymer chains having an active terminal contains 100 ppm or more, more preferably 300 to 50,000 ppm of the monomer. Such addition of the modifier can suppress a secondary reaction between polymer chains having an active terminal and impurities and the like contained in the polymerization system, and enables successful control of the reaction.

A polymerization terminator, such as an alcohol such as methanol or isopropanol or water, and the like are preferably added to the polymer chains having an active terminal prepared through the polymerization to deactivate unreacted active terminals. A polymer solution of the low molecular weight conjugated diene polymer can be prepared by the above method.

An antioxidant such as a phenol-based stabilizer, a phosphorus-based stabilizer, or a sulfur-based stabilizer may be added, as desired, to the polymer solution containing the low molecular weight conjugated diene polymer prepared by the above method. The amount of the antioxidant to be added may be appropriately determined according to the type thereof or the like. Furthermore, an extender oil may be compounded as desired to prepare an oil extended rubber. Examples of the extender oil include petroleum-based softening agents such as paraffin-based, aromatic-based, and naphthene-based softening agents, plant-derived softening agents, fatty acids, and the like. If a petroleum-based softening agent is used, the content of polycyclic aromatic compounds extracted by the method of IP346 (the test method specified by THE INSTITUTE of PETROLEUM, UK) is preferably less than 3%. If the extender oil is used, the amount thereof to be used is usually 5 to 100 parts by weight relative to 100 parts by weight of the conjugated diene polymer.

The low molecular weight conjugated diene polymer used in the first production method has a weight average molecular weight (Mw) in the range of preferably 50000 to 1000000 more preferably 80000 to 900000, still more preferably 80000 to 800000. The low molecular weight conjugated diene polymer has a molecular weight distribution (Mw/Mn) of preferably 1.0 to 5.0, more preferably 1.0 to 3.0, still more preferably 1.0 to 2.0.

A polymer solution containing a high molecular weight conjugated diene polymer used in the first production method is preferably prepared by solution polymerization as in the case of the above-mentioned polymer solution containing the low molecular weight conjugated diene polymer.

A monomer mixture used in polymerization of the high molecular weight conjugated diene polymer contains at least a conjugated diene monomer. Examples of the conjugated diene monomer include the same conjugated diene monomers for forming conjugated diene monomer units as those described above. Among these, 1,3-butadiene is preferred.

The monomer mixture used in polymerization of the high molecular weight conjugated diene polymer preferably contains an aromatic vinyl monomer in addition to the conjugated diene monomer. Examples of the aromatic vinyl monomer include the same aromatic vinyl monomers for forming aromatic vinyl monomer units as those described above. Among these, styrene is preferred. The monomer mixture used in polymerization of the high molecular weight conjugated diene polymer may further contain the above-mentioned vinyl compound having a functional group interactive with silica, and an additional monomer.

Examples of an inert solvent used in polymerization of the high molecular weight conjugated diene polymer include the same insert solvents used in polymerization of the low molecular weight conjugated diene polymer as those described above. A suitable type thereof and a suitable amount thereof to be used are as described as above.

Examples of a polymerization initiator used in polymerization of the high molecular weight conjugated diene polymer include the same polymerization initiators used in polymerization of the low molecular weight conjugated diene polymer as those described above. A suitable type thereof is as described above. When an organic alkali metal compound is used as the polymerization initiator as in the case of the polymerization of the low molecular weight conjugated diene polymer, the organic alkali metal compound may be preliminarily reacted with a secondary amine compound, and may be used in the form of an organic alkali metal amide compound. The type of the secondary amine compound, the method of adding an organic alkali metal amide compound as the polymerization initiator to the polymerization system, and the amount of the secondary amine compound to be used are not particularly limited, and may be the same as those described in the polymerization of the low molecular weight conjugated diene polymer. In polymerization of the high molecular weight conjugated diene polymer, the amount of the polymerization initiator used is not particularly limited, and is in the range of preferably 0.5 to 50.0 mmol, more preferably 1 to 10 mmol per 1000 g of the monomer.

In polymerization of the high molecular weight conjugated diene polymer, the polymerization temperature and the polymerization manner are not particularly limited, and may be the same as those described in the polymerization of the low molecular weight conjugated diene polymer.

In polymerization of the high molecular weight conjugated diene polymer, preferably, a polar compound is added to an inert organic solvent in polymerization of the monomer mixture as in the polymerization of the low molecular weight conjugated diene polymer. The type of the polar compound and the amount thereof to be used are not particularly limited, and may be the same as those described in the polymerization of the low molecular weight conjugated diene

polymer.

As in the case of the low molecular weight conjugated diene polymer, the high molecular weight conjugated diene polymer may be prepared by a production method comprising a step of polymerizing a monomer (a) containing isoprene in an inert solvent in the presence of an polymerization initiator to form a polymer block (A) having an active terminal; and a step of mixing the polymer block (A) having an active terminal with a monomer (b) containing 1,3-butadiene to continue polymerization, thereby forming the polymer block (A) and a polymer block (B). In this case, the monomer composition of the polymer block (A) and the method of forming the polymer block (A) are not particularly limited, and may be the same as those described in the polymerization of the low molecular weight conjugated diene polymer. The vinyl bond content of isoprene monomer units in the polymer block (A), the weight average molecular weight (Mw) of the polymer block (A), and the molecular weight distribution (Mw/Mn) of polymer block (A) are also not particularly limited, and may be the same as those described in the polymerization of the low molecular weight conjugated diene polymer. The monomer composition of the polymer block (B) and the method of forming the polymer block (B) are not particularly limited, and may be the same as those described in the polymerization of the low molecular weight conjugated diene polymer.

Thus, in the production process of the high molecular weight conjugated diene polymer, the polymer chain having an active terminal and including the polymer block (A) and the polymer block (B) can be prepared. From the viewpoint of productivity, preferably, the polymer chain having an active terminal has a structure of polymer block (A)-polymer block (B) in which the terminal of the polymer block (B) is an active terminal. The polymer chain having an active terminal may include a plurality of polymer blocks (A), or may include another polymer block. Examples of the polymer chain having an active terminal include those having the structure of polymer block (A)-polymer block (B)-polymer block (A), and the like. In this case, an active terminal is formed at the terminal of the polymer block (A) formed subsequent to the polymer block (B). When another polymer block (A) is formed at the active terminal of the polymer chain having an active terminal, the amount of isoprene used is not particularly limited, and may be the same as that described in the low molecular weight conjugated diene polymer.

In the polymer chain having an active terminal, the weight ratio of the polymer block (A) to the polymer block (B) is not particularly limited, and may be the same as that described in the low molecular weight conjugated diene polymer.

As in the case of the low molecular weight conjugated diene polymer, a method of adding a monomer mainly containing a conjugated diene monomer to the polymerization system when the polymerization conversion ratio reaches preferably 0% by weight or more, more preferably 10% by weight or more may be used in preparation of the high molecular weight conjugated diene polymer. Use of such a method enables introduction of a segment containing the conjugated diene monomer in a high proportion to the polymer chain terminal. In this case, the weight of the conjugated diene monomer added after the start of polymerization relative to the total weight of the monomers added after the start of polymerization, the content of conjugated diene monomer units in the segment, and the monomer composition of the segment are not particularly limited, and may be the same as those described in the low molecular weight conjugated diene polymer.

As described above, a polymer containing polymer chains having an active terminal can be prepared in an inert solvent.

The polymer chains having an active terminal may be at least partially reacted with a coupling agent to form coupled polymer chains. This enables control of the number of peaks in the molecular weight distribution curve of the high molecular weight conjugated diene polymer. The type of the coupling agent, the amount thereof to be used, and the timing are not particularly limited, and may be the same as that described in the polymerization of the low molecular weight conjugated diene polymer.

To make the effects of the present invention more remarkable, preferably, the active terminals of the polymer chains having an active terminal prepared through polymerization (including polymer chains having an active terminal after the coupling reaction) are reacted with a modifier to prepare a high molecular weight conjugated diene polymer having a modifying group. The type of the modifier, the amount of the modifier to be used, the reaction condition, the timing of adding the modifier are not particularly limited, and may be the same as those described in the polymerization of the low molecular weight conjugated diene polymer. By using a modifier which can exhibit coupling action (such as polyorganosiloxane), the number of peaks in the molecular weight distribution curve of the high molecular weight conjugated diene polymer can be controlled.

When the modifier used is a siloxane compound, it is preferred that the polymer chain having an active terminal, the siloxane compound, and an organic metal compound be reacted. Specific examples of the type and the amount of the organic metal compound to be used, the reaction method, the timing of adding the organic metal compound, the form of the siloxane compound when added, the timing of adding the siloxane compound, and the like may be the same as those described in the polymerization of the low molecular weight conjugated diene polymer.

A polymerization terminator, such as an alcohol such as methanol or isopropanol or water, and the like are preferably added to the polymer chains having an active terminal prepared through the polymerization to deactivate unreacted active terminals. A polymer solution of the high molecular weight conjugated diene polymer can be prepared

by the above method.

An antioxidant and an extender oil may be added, as desired, to the polymer solution containing the high molecular weight conjugated diene polymer prepared by the above method as in the case of the polymer solution containing the low molecular weight conjugated diene polymer.

The high molecular weight conjugated diene polymer used in the first production method has a weight average molecular weight (Mw) in the range of preferably 500000 to 5000000, more preferably 550000 to 3000000, still more preferably 600000 to 2000000. The high molecular weight conjugated diene polymer has a molecular weight distribution (Mw/Mn) of preferably 1.0 to 5.0, more preferably 1.0 to 3.0, still more preferably 1.0 to 2.0.

In the first production method, mixing of the polymer solution containing the low molecular weight conjugated diene polymer and the polymer solution containing the high molecular weight conjugated diene polymer prepared as above results in a conjugated diene polymer according to the present invention in the form of a polymer solution. Any mixing method can be used without limitation, and examples thereof include a method of adding the polymer solution containing the low molecular weight conjugated diene polymer and the polymer solution containing the high molecular weight conjugated diene polymer to a mixing vessel, followed by stirring.

For example, the conjugated diene polymer thus prepared is separated from the reaction mixture by removing the solvent by any method such as steam stripping or heating of the mixed solution under reduced pressure. Thereby, a solid conjugated diene polymer can be obtained.

The method of producing the conjugated diene polymer according to the present invention is not limited to the first production method described above, and may be a production method comprising a step of mixing three or more conjugated diene polymers having different molecular weight distribution curves in the form of polymer solutions containing the conjugated diene polymers. Three or more polymer solutions containing conjugated diene polymers having different molecular weight distribution curves used in this case can be prepared by adjusting the polymerization conditions, the coupling reaction conditions, the modification reaction conditions, and the like according to the desired composition of each conjugated diene polymer and the desired molecular weight distribution curve thereof in the same polymerization method as that in the polymerization of the polymer solution containing the low molecular weight conjugated diene polymer. Three or more polymer solutions containing conjugated diene polymers having different molecular weight distribution curves can be mixed by any method, and the mixing method in the first production method above can be used.

Another preferred method of producing the conjugated diene polymer according to the present invention is a production method comprising a step of starting polymerization of a monomer mixture containing a conjugated diene monomer in the presence of a polymerization initiator, and thereafter further adding the polymerization initiator to the polymerization system to continue the polymerization. Examples of such a production method include, but should not be limited to, a second production method described later and a third production method described later.

<Second production method>

Examples of the method of producing the conjugated diene polymer according to the present invention include a production method of starting polymerization of a monomer mixture containing a conjugated diene monomer in the presence of a polymerization initiator, and performing a polymerization initiator re-addition operation two or more times, the operation comprising further adding the polymerization initiator to the polymerization system to continue the polymerization (hereinafter, referred to as "second production method" in some cases).

The monomer mixture used in the second production method contains at least a conjugated diene monomer. Examples of the conjugated diene monomer include the same conjugated diene monomers for forming conjugated diene monomer units as those listed above. Among these, 1,3-butadiene is preferred. The monomer mixture contains the conjugated diene monomer and an aromatic vinyl monomer, examples thereof including the same aromatic vinyl monomer for forming aromatic vinyl monomer units as those listed above. Among these, styrene is preferred. The monomer mixture used in the second production method preferably further contains the above-mentioned vinyl compound having a functional group interactive with silica. The monomer mixture used in the second production method may contain another monomer described above.

Examples of the inert solvent used in the second production method include the same inert solvents as those used in the polymerization of the low molecular weight conjugated diene polymer in the first production method. A suitable type thereof and the amount thereof to be used are as described above.

In the second production method, examples of the polymerization initiator used to start polymerization and the polymerization initiator used in the polymerization initiator re-addition operation include the same polymerization initiators as those used in the polymerization of the low molecular weight conjugated diene polymer in the first production method. A suitable type thereof and the amount thereof to be used are as described above. The polymerization initiator used to start polymerization and the polymerization initiator used in the polymerization initiator re-addition operation may be the same or different. For each addition, only one polymerization initiator may be used, or a combination of two or more may be used.

As described in the first production method above, when an organic alkali metal compound is used as the polymerization initiator, the organic alkali metal compound may be preliminarily reacted with a secondary amine compound, and may be used in the form of an organic alkali metal amide compound. The type of the secondary amine compound, the method of adding the organic alkali metal amide compound as the polymerization initiator to the polymerization system, and the amount of the secondary amine compound used are not particularly limited, and may be the same as those described in the method of preparing the low molecular weight conjugated diene polymer in the first production method.

The amount of the polymerization initiator used to start polymerization may be determined according to the desired molecular weight distribution curve of the conjugated diene polymer, and is in the range of usually 1 to 50 mmol, preferably 1.5 to 20 mmol, more preferably 2 to 15 mmol relative to 1000 g of the monomer.

The polymerization initiator re-addition operation can be performed any times in the second production method as long as it is performed two or more times. The number of times of the operation may be determined according to the desired molecular weight distribution curve of the conjugated diene polymer. The amount of the polymerization initiator used in the polymerization initiator re-addition operation may be determined according to the desired molecular weight distribution curve of the conjugated diene polymer, and is not particularly limited. In each time of the operation to further add the polymerization initiator, the polymerization initiator is used in an amount of preferably 0.1 to 0.7 mol, more preferably 0.2 to 0.6 mol relative to 1 mol of the polymerization initiator used to start polymerization. The timing of the polymerization initiator re-addition operation is not particularly limited, and may be determined according to the desired molecular weight distribution curve of the conjugated diene polymer.

In the second production method, the polymerization temperature and the polymerization manner are not particularly limited, and may be the same as those described in the polymerization of the low molecular weight conjugated diene polymer in the first production method.

In the second production method, as in the polymerization of the low molecular weight conjugated diene polymer in the first production method, preferably, a polar compound is added to an inert organic solvent in polymerization of the monomer mixture. The type of the polar compound and the amount thereof to be used are not particularly limited, and may be the same as those described in the polymerization of the low molecular weight conjugated diene polymer in the first production method.

As in the polymerization of the low molecular weight conjugated diene polymer in the first production method, the second production method employs a method of adding a monomer mainly containing the conjugated diene monomer to the polymerization system when the polymerization conversion ratio reaches preferably 5% by weight or more, more preferably 10% by weight or more. Use of such a method enables introduction of a segment containing the conjugated diene monomer in a high proportion to the polymer chain terminal. In this case, the weight of the conjugated diene monomer added after the start of polymerization relative to the total weight of the monomers added after the start of polymerization, the content of conjugated diene monomer units in the segment, and the monomer composition of the segment are not particularly limited, and may be the same as those described in the low molecular weight conjugated diene polymer in the first production method.

As in the case of the low molecular weight conjugated diene polymer in the first production method, in the second production method, the conjugated diene polymer may be prepared by a production method comprising a step of polymerizing a monomer (a) containing isoprene in an inert solvent in the presence of an polymerization initiator to form a polymer block (A) having an active terminal; and a step of mixing the polymer block (A) having an active terminal with a monomer (b) containing 1,3-butadiene to continue polymerization, thereby forming the polymer block (A) and a polymer block (B).

As described above, a polymer containing polymer chains having an active terminal can be prepared in an inert solvent.

The polymer chains having an active terminal may be at least partially reacted with a coupling agent to form coupled polymer chains. This enables control of the number of peaks in the molecular weight distribution curve of the conjugated diene polymer. The type of the coupling agent, the amount thereof to be used, and the timing are not particularly limited, and may be the same as those described in the polymerization of the low molecular weight conjugated diene polymer in the first production method.

To make the effects of the present invention more remarkable, preferably, the active terminals of the polymer chains having an active terminal prepared through polymerization (including polymer chains having an active terminal after the coupling reaction) are reacted with a modifier to prepare a conjugated diene polymer having a modifying group. The type of the modifier, the amount of the modifier to be used, the reaction conditions, and the timing of adding the modifier are not particularly limited, and may be the same as those described in the polymerization of the low molecular weight conjugated diene polymer in the first production method. By using a modifier which can exhibit coupling action (such as polyorganosiloxane), the number of peaks in the molecular weight distribution curve of the conjugated diene polymer can be controlled.

When the modifier used is a siloxane compound, it is preferred that the polymer chain having an active terminal,

the siloxane compound, and an organic metal compound be reacted. Specific examples of the type and the amount of the organic metal compound to be used, the reaction method, the timing of adding the organic metal compound, the form of the siloxane compound when added, the timing of adding the siloxane compound, and the like may be the same as those described in the polymerization of the low molecular weight conjugated diene polymer in the first production method.

A polymerization terminator, such as an alcohol such as methanol or isopropanol or water, and the like are preferably added to the polymer chains having an active terminal prepared through the polymerization to deactivate unreacted active terminals. A polymer solution of the conjugated diene polymer can be prepared by the above method.

An antioxidant and an extender oil may be added, as desired, to the polymer solution of the conjugated diene polymer prepared by the above method as in the case of the polymer solution of the low molecular weight conjugated diene polymer in the first production method.

For example, the conjugated diene polymer thus prepared is separated from the reaction mixture by removing the solvent by any method such as steam stripping or heating of the mixed solution under reduced pressure. Thereby, a solid conjugated diene polymer can be yielded.

<Third production method>

The third production method is a production method comprising a first step of polymerizing a monomer mixture containing a conjugated diene compound in an inert solvent in the presence of a polymerization initiator to prepare a solution containing polymer chains having an active terminal; a second step of partially converting the polymer chains having an active terminal prepared in the first step into coupled polymer chains by a coupling reaction to prepare a solution containing the polymer chains having an active terminal and the coupled polymer chains; and a third step of further polymerizing a monomer containing a conjugated diene compound with the polymer chains having an active terminal after the coupling reaction in the second step is performed, wherein in the first or third step, a polymerization additive re-addition operation of further adding the polymerization initiator to the polymerization system to continue the polymerization is performed one or more times.

The first step is a step of preparing a solution containing polymer chains having an active terminal by polymerizing a monomer containing a conjugated diene compound in an inert solvent in the presence of a polymerization initiator.

The monomer mixture used in the first step of the third production method contains at least a conjugated diene monomer. Examples of the conjugated diene monomer include the same conjugated diene monomers for forming conjugated diene monomer units as those listed above. Among these, 1,3-butadiene is preferred. The monomer mixture preferably contains the conjugated diene monomer and the above-mentioned aromatic vinyl monomer. Examples of the aromatic vinyl monomer include the same aromatic vinyl monomers for forming aromatic vinyl monomer units as those described above. Among these, styrene is preferred. Furthermore, the monomer mixture may contain a vinyl compound having a functional group interactive with silica. To further enhance the processability of the conjugated diene polymer, preferably, the vinyl compound having a functional group interactive with silica is used in the third step described later rather than the first step.

Examples of the inert solvent used in the first step include the same inert solvents as those used in the polymerization of the low molecular weight conjugated diene polymer in the first production method. A suitable type thereof and the amount thereof to be used are as described above.

Examples of the polymerization initiator used to start polymerization and the polymerization initiator used in the polymerization initiator re-addition operation in the first step include the same inert solvents as those used in the polymerization of the low molecular weight conjugated diene polymer in the first production method. A suitable type thereof and the amount thereof to be used are as described above. As described in the first production method above, when an organic alkali metal compound is used as the polymerization initiator, the organic alkali metal compound may be preliminarily reacted with a secondary amine compound, and may be used in the form of an organic alkali metal amide compound. The type of the secondary amine compound, the method of adding the organic alkali metal amide compound as the polymerization initiator to the polymerization system, and the amount of the secondary amine compound used are not particularly limited, and may be the same as those described in the polymerization of the low molecular weight conjugated diene polymer in the first production method.

In the first step, the polymerization temperature and the polymerization manner are not particularly limited, and may be the same as those described in the polymerization of the low molecular weight conjugated diene polymer in the first production method.

In the first step, as in the polymerization of the low molecular weight conjugated diene polymer in the first production method, preferably, a polar compound is added to an inert organic solvent in polymerization of the monomer mixture. The type of the polar compound and the amount thereof to be used are not particularly limited, and may be the same as those described in the polymerization of the low molecular weight conjugated diene polymer in the first production method.

In the first step, as in the case of the low molecular weight conjugated diene polymer in the first production method, a solution containing polymer chains having an active terminal may be prepared by a production method comprising a step of polymerizing a monomer (a) containing isoprene in an inert solvent in the presence of an polymerization initiator to form a polymer block (A) having an active terminal; and a step of mixing the polymer block (A) having an active terminal with a monomer (b) containing 1,3-butadiene to continue polymerization, thereby forming the polymer block (A) and a polymer block (B) .

The second step in the third production method is a step of partially converting the polymer chains having an active terminal prepared in the first step into coupled polymer chains by a coupling reaction to prepare a solution containing the polymer chains having an active terminal and the coupled polymer chains.

Any coupling agent can be used without limitation. Examples thereof include those usable in polymerization of the low molecular weight conjugated diene polymer in the first production method. Suitable coupling agents are as described above. The amount of the coupling agent to be used may be determined according to the desired molecular weight distribution curve of the conjugated diene polymer, and is not particularly limited. To only partially couple the polymer chains having an active terminal prepared in the first step, the amount in terms of the functional group of the coupling agent is preferably less than 1 mol, preferably 0.01 to 0.4 mol, more preferably 0.02 to 0.3 mol relative to 1 mol of the polymerization initiator used in the first step. By controlling the amount of the coupling agent used within the ranges above, the fuel efficiency can be further enhanced. As a result of addition of the coupling agent, the active terminals of the polymer chains having an active terminal are reacted in the coupling reaction, and thus the active terminal disappears from the coupled polymer chains, and polymer chains without an active terminal are formed.

The third step in the third production method is a step of further polymerizing a monomer containing a conjugated diene compound with the polymer chains having an active terminal after the coupling reaction in the second step is performed.

In the third step, the monomer used in the polymerization may be a monomer containing at least a conjugated diene compound. To prepare a conjugated diene polymer containing conjugated diene monomer units and aromatic vinyl monomer units, the monomer preferably contains an aromatic vinyl compound. Furthermore, in the third step, the monomer used in polymerization preferably contains a vinyl compound having a functional group interactive with silica. In the third step, use of the vinyl compound having a functional group interactive with silica enables introduction of units of the vinyl compound having a functional group interactive with silica to the polymer chains other than the polymer chains coupled in the second step. Thereby, the polymer chains other than the coupled polymer chains can have an effectively increased degree of adsorption onto silica. This enables production of a cross-linked rubber having further enhanced fuel efficiency while ensuring favorable processability.

The polymerization in the third step can be performed in an inert solvent. The inert solvent is not particularly limited, and may be the same as those used in the first step described above. The polymerization temperature and the polymerization manner are not particularly limited, and may be the same as those described in the first step above. The bonding form of the monomers can be a variety of bonding forms such as a block form, a tapered form, and a random form. Among these, a random form is preferred. When the monomers are bonded at random, a cross-linked rubber having further improved fuel efficiency can be obtained.

Furthermore, in the third production method, the polymerization initiator is further added at either during polymerization in the first step or at the start of and during polymerization in the third step. The timing of further adding the polymerization initiator may be determined according to the desired molecular weight distribution curve of the conjugated diene polymer and is not particularly limited. Preferred is further addition of the polymerization initiator at the start of and during polymerization in the third step. The amount of the polymerization initiator further added may be determined according to the desired molecular weight distribution curve of the conjugated diene polymer and is not particularly limited. The amount is preferably 0.1 to 0.7 mol, more preferably 0.2 to 0.6 mol relative to 1 mol of the polymerization initiator used to start polymerization.

The above-mentioned first, second, and third steps are preferably continuously performed. For example, preferably, while the polymerization reaction in the first step is being continued, the coupling reaction by adding the coupling agent in the second step is performed, and subsequently the polymerization reaction in the third step is performed.

Preferably, after the polymerization reaction in the third step is ended, a modifier is reacted with the active terminals of the polymer chains to prepare a conjugated diene polymer having a modifying group. Specific examples of the type of the modifier, the amount of the modifier to be used, reaction conditions, the timing of adding the modifier, and the like may be, but are not particularly limited to, the same as those described in the polymerization of the low molecular weight conjugated diene polymer in the first production method. By using a modifier which can exhibit coupling action (such as polyorganosiloxane), the number of peaks in the molecular weight distribution curve of the conjugated diene polymer can be controlled.

After the polymerization reaction is ended, a polymerization terminator, such as an alcohol such as methanol or isopropanol or water, and the like are added to the polymerization system to deactivate the active terminal. Thus, a solution of a conjugated diene polymer can be prepared.

An antioxidant and an extender oil may be added, as desired, to the polymer solution of the conjugated diene polymer prepared by the above method as in the case of the polymer solution of the low molecular weight conjugated diene polymer in the first production method.

For example, the conjugated diene polymer thus prepared is separated from the reaction mixture by removing the solvent by any method such as steam stripping or heating of the mixed solution under reduced pressure. Thereby, a solid conjugated diene polymer can be yielded.

In the method of producing the conjugated diene polymer according to the present invention, the above-mentioned production methods may be used in combination appropriately. For example, the conjugated diene polymer according to the present invention may be yielded by appropriately mixing two or more conjugated diene polymers selected from the group consisting of the low molecular weight conjugated diene polymer prepared in the first production method, the high molecular weight conjugated diene polymer prepared in the first production method, the conjugated diene polymer prepared in the second production method, and the conjugated diene polymer prepared in the third production method. In mixing of the two or more conjugated diene polymers, the two or more conjugated diene polymers may be mixed in the form of polymer solutions, or may be mixed in the form of solids. Preferred is mixing of the two or more conjugated diene polymers in the form of polymer solutions. Specifically, it is more preferred that two or more solutions containing conjugated diene polymers to be mixed be separately prepared, and the solutions prepared be mixed.

<Rubber composition>

The rubber composition according to the present invention is a composition comprising the conjugated diene polymer according to the present invention described above, and a filler.

The rubber composition according to the present invention may contain other polymers than the above-mentioned conjugated diene polymer according to the present invention. Examples of the other polymers include natural rubbers (these may be reformed natural rubbers such as epoxidized natural rubber (ENR), hydrogenated natural rubber (HNR), deproteinized natural rubbers (DPNR), high purity natural rubbers (UPNR), grafted natural rubbers), polyisoprene rubbers, emulsion polymerized styrene-butadiene copolymer rubbers, solution polymerized styrene-butadiene copolymer rubbers, polybutadiene rubber (those may be high-cis BR or low-cis BR, or may be polybutadiene rubbers containing crystal fibers made of a 1,2-polybutadiene polymer), styrene-isoprene copolymer rubbers, butadiene-isoprene copolymer rubbers, styrene-isoprene-butadiene copolymer rubbers, acrylonitrile-butadiene copolymer rubbers, acrylonitrile-styrene-butadiene copolymer rubbers, butyl rubbers (IIR), ethylene-propylene copolymers, chloroprene rubbers, nitrile chloroprene rubbers, nitrile isoprene rubbers, and the like, and exclude the above-mentioned conjugated diene polymers. Among these, preferred are natural rubbers, polyisoprene rubbers, polybutadiene rubbers, and solution polymerized styrene-butadiene copolymer rubbers, and more preferred are natural rubbers. These polymers may be used alone or in combination, such as a combination of a natural rubber and a polybutadiene rubber or that of a natural rubber and a styrene-butadiene copolymer rubber.

In the rubber composition according to the present invention, the conjugated diene polymer according to the present invention occupies preferably 10 to 100% by weight, particularly preferably 50 to 100% by weight of the polymer ingredients in the rubber composition. When the conjugated diene polymer according to the present invention is present in the polymer ingredients in such a proportion, the rubber composition can have higher processability, and a cross-linked rubber having wear resistance and fuel efficiency in a better balance can be obtained.

Examples of the filler include silica, calcium silicate, aluminum silicate, carbon black, calcium carbonate, talc, aluminum hydroxide, alumina, clay, mica, and the like. Among these, preferred are carbon black and silica, more preferred is silica because a cross-linked rubber having further enhanced wear resistance can be obtained. These may be used alone or in combination.

Examples of silica include dry white carbon, wet white carbon, colloidal silica, precipitated silica, calcium silicate, aluminum silicate, and the like. Among these, preferred is wet white carbon containing hydrous silicic acid as the main component. A carbon-silica dual phase filler comprising carbon black and silica carried on the surface thereof may also be used. These silicas may be used alone or in combination. The nitrogen adsorption specific surface area (measured by the BET method according to ASTM D3037-81) of the silica to be used is preferably 20 to 400 $m^2/g$, more preferably 50 to 220 $m^2/g$, particularly preferably 80 to 170 $m^2/g$. The silica preferably has a pH of 5 to 10.

As the silica, a variety of commercially available silicas can be used, for example. Examples thereof include "Hi-Sil210", "Hi-Sil233", and "Hi-Sil243LD" available from PPG Industries; "Zeosil 1115MP", "Zeosil 1165MP", and "Zeosil 165GR" available from Solvay S.A.; "ULTRASIL VN2", "ULTRASIL VN3", "ULTRASIL 7000GR", and "ULTRASIL 9100GR" available from EVONIK AG; "NIPSIL VN3", "NIPSIL AQ", "NIPSIL ER", and "NIPSIL RS-150" available from TOSOH SILICA CORPORATION; and the like.

Examples of carbon blacks include furnace black, acetylene black, thermal black, channel black, and graphite. Examples of channel black include EPC, MPC, and CC. Examples of furnace carbon black include SAF, ISAF, HAF, MAF, FEF, SRF, GPF, APF, FF, CF, SCF, and ECF. Examples of thermal black include FT and MT. These carbon

blacks can be used alone or in combination.

The amount of the filler to be compounded with the rubber composition according to the present invention is preferably 10 to 250 parts by weight, more preferably 15 to 150 parts by weight, still more preferably 20 to 130 parts by weight relative to 100 parts by weight of the polymer ingredients in the rubber composition. By controlling the amount of the filler to be compounded within the ranges above, a cross-linked rubber having further improved fuel efficiency can be obtained while sufficient processability of the rubber composition is ensured.

To obtain a cross-linked rubber having further improved fuel efficiency, the rubber composition according to the present invention may be further compounded with a silane coupling agent. The silane coupling agent is not particularly limited, and a variety of silane coupling agents can be used. In the present invention, sulfide-based, mercapto-based, protected mercapto-based (such as those having a carbonylthio group), thiocyanate-based, vinyl-based, amino-based, methacrylate-based, glycidoxy-based, nitro-based, epoxy-based, or chloro-based silane coupling agents can be suitably used. Specific examples of silane coupling agents include bis(3-(triethoxysilyl)propyl)disulfide, bis(3-triethoxysilylpropyl)trisulfide, bis(3-(triethoxysilyl)propyl)tetrasulfide, γ-mercaptopropyltriethoxysilane, 3-[ethoxybis(3,6,9,12,15-pentaoxaoctacosan-1-yloxy)silyl]-1-propanethiol, 3-octanoylthio-1-propyl-triethoxysilane, 3-trimethoxysilylpropyl-N,N-dimethylthiocarbamoyl tetrasulfide, γ-trimethoxysilylpropylbenzothiazyl tetrasulfide, 3-trimethoxysilylpropylbenzothiazole tetrasulfide, 3-thiocyanate propyltriethoxysilane, vinyltriethoxysilane, N-(β-aminoethyl)-γ-aminopropyltrimethoxysilane, 3-trimethoxysilylpropyl methacrylate monosulfide, γ-glycidoxypropyltriethoxysilane, 3-nitropropyltrimethoxysilane, β-(3,4-epoxycyclohexyl)ethyltrimethoxysilane, 3-chloropropyltrimethoxysilane, and the like. NXT-Z100, NXT-Z30, NXT-Z45, NXT-Z60, NXT-Z45, and NXT available from Momentive Performance Materials Inc., and Si69, Si75, and VP Si363 available from Evonick Degussa AG can also be used. These silane coupling agents may be used alone or in combination. One or two or more of these silane coupling agents may be preliminarily formed into an oligomer, and may be used in the oligomer form. The amount of the silane coupling agent to be compounded is preferably 0.1 to 30 parts by weight, more preferably 1 to 15 parts by weight relative to 100 parts by weight of the filler.

Preferably, the rubber composition according to the present invention further contains a cross-linking agent. Examples of the cross-linking agent include sulfur, sulfur-containing compounds such as halogenated sulfur, organic peroxides, quinone dioximes, organic polyvalent amine compounds, alkyl phenol resins having a methylol group, and the like. Among these, sulfur is preferably used. The amount of the cross-linking agent to be compounded is preferably 0.1 to 15 parts by weight, more preferably 0.5 to 5 parts by weight, particularly preferably 1 to 4 parts by weight relative to 100 parts by weight of the polymer ingredients in the rubber composition.

Furthermore, besides the ingredients described above, the rubber composition according to the present invention can be compounded with compounding agents such as a cross-linking accelerator, a cross-linking activator, an antioxidant, an activating agent, a process oil, a plasticizer, a lubricant, and a tackifier according to the normal method.

If sulfur or a sulfur-containing compound is used as the cross-linking agent, use in combination with a cross-linking accelerator and a cross-linking activator is preferred. Examples of the cross-linking accelerator include sulfenamide-based cross-linking accelerators; guanidine-based cross-linking accelerators; thiourea-based cross-linking accelerators; thiazole-based cross-linking accelerators; thiuram-based cross-linking accelerators; dithiocarbamic acid-based cross-linking accelerators; xanthic acid-based cross-linking accelerators; and the like. Among these, preferred are those containing sulfenamide-based cross-linking accelerators. These cross-linking accelerators are used alone or in combination. The amount of the cross-linking accelerator to be compounded is preferably 0.1 to 15 parts by weight, more preferably 0.5 to 5 parts by weight, particularly preferably 1 to 4 parts by weight relative to 100 parts by weight of the polymer ingredients in the rubber composition.

Examples of the cross-linking activator include higher fatty acids such as stearic acid; zinc oxide; and the like. These cross-linking activators are used alone or in combination. The amount of the cross-linking activator to be compounded is preferably 0.05 to 20 parts by weight, particularly preferably 0.5 to 15 parts by weight relative to 100 parts by weight of the polymer ingredients in the rubber composition.

To obtain the rubber composition according to the present invention, the ingredients can be kneaded according to an ordinary method. For example, the target composition can be obtained by kneading ingredients excluding thermally unstable ingredients such as the cross-linking agent and the cross-linking accelerator with the conjugated diene polymer, and then mixing the thermally unstable ingredients such as the cross-linking agent and the cross-linking accelerator with the kneaded product. The kneading temperature during kneading of the ingredients excluding the thermally unstable ingredients with the conjugated diene polymer is preferably 80 to 200°C, more preferably 120 to 180°C, and the kneading time is preferably 30 seconds to 30 minutes. The kneaded product is mixed with the thermally unstable ingredients after it is cooled to usually 100°C or less, preferably 80°C or less.

<Cross-linked rubber>

The cross-linked rubber according to the present invention is prepared by cross-linking the above-mentioned rubber composition according to the present invention.

The cross-linked rubber according to the present invention can be produced using the rubber composition according to the present invention, for example, by shaping the rubber composition with a molding machine corresponding to a desired shape, such as an extruder, an injection molding machine, a press, or a roll, and performing a cross-linking reaction by heating to provide a cross-linked rubber having a fixed shape. In this case, the rubber composition may be preliminarily shaped and then cross-linked, or may be shaped and cross-linked at the same time. The shaping temperature is usually 10 to 200°C, preferably 25 to 120°C. The cross-linking temperature is usually 100 to 200°C, preferably 130 to 190°C, and the cross-linking time is usually 1 minute to 24 hours, preferably 2 minutes to 12 hours, particularly preferably 3 minutes to 6 hours.

Depending on the shape, the size, and the like thereof, the inside of the cross-linked rubber may not be sufficiently cross-linked even when the surface thereof is cross-linked. For this reason, the cross-linked rubber may be further heated for secondary cross-linking.

As a heating method, a common method used to cross-link rubber, such as press heating, steam heating, oven heating, or hot air heating, can be appropriately selected.

The cross-linked rubber according to the present invention thus prepared has excellent fuel efficiency and high wear resistance because it is prepared using the above-mentioned conjugated diene polymer according to the present invention. For this reason, owing to its excellent properties, the cross-linked rubber according to the present invention can be used in a variety of applications to parts of tires such as cap treads, base treads, carcasses, sidewalls, and bead parts; materials for industrial products such as hoses, belts, mats, and antivibration rubbers; impact resistance improvers for resins; resin film buffer agents; shoe soles; rubber shoes; golf balls; toys; and the like, for example. Especially, because of its excellent fuel efficiency and high wear resistance, the cross-linked rubber according to the present invention is suitable for materials for tires.

EXAMPLES

Hereinafter, the present invention will be described based on more detailed examples, but the present invention is not limited to these examples. Note that, in the examples, "parts" and "%" are based on weight unless otherwise specified. Tests and evaluations conformed to the followings.

<Styrene unit content, vinyl bond content>

The styrene unit content (% by weight) and the vinyl bond content (mol%) of conjugated diene monomer units were determined according to JIS K6239 (2007) by $^1$H-NMR.

<Proportion of styrene blocks>

The proportion of styrene blocks as the proportion of aromatic vinyl monomer blocks was measured by $^1$H-NMR using deuterochloroform as a solvent with reference to the reference shown below. In the resulting $^1$H-NMR spectrum, peaks within 6.1 to 7.7 ppm were regarded as peaks of styrene, and those within 6.1 to 6.88 ppm were regarded as peaks of styrene blocks. The ratio of the peak area of styrene blocks to the peak area of styrene was determined, and the value was multiplied by 2.5 and expressed in percentage. The percentage was defined as the proportion of styrene blocks.

Reference: Sardelis, K. Michels, H. J. Allen, G. Polymer, 1984, 25, 1011

<Mooney viscosity of conjugated diene polymer>

The Mooney viscosity (ML1+4) of the conjugated diene polymer was measured according to JIS K 6300-1:2013 under the following conditions:

· test temperature: 100°C
· type of rotor: L-shaped
· tester used: SHIMADZU Mooney Viscometer SMV-300J available from SHIMADZU Corporation

<Weight average molecular weight (Mw), molecular weight distribution (Mw/Mn), number of peaks in molecular weight distribution curve, and peak top molecular weights of peaks>

Using a styrene-based column, a sample solution containing a conjugated diene polymer and an internal standard polystyrene was measured by GPC under the following conditions. A region corresponding to a molecular weight of less than 5000 was removed from the obtained molecular weight distribution curve, and the peak of the internal

standard polystyrene was removed to obtain a molecular weight distribution curve of the conjugated diene polymer against polystyrene standards. From the obtained molecular weight distribution curve of the conjugated diene polymer, the weight average molecular weight (Mw) and the molecular weight distribution (Mw/Mn) were determined. The obtained molecular weight distribution curve of the conjugated diene polymer was divined into regions in each of which both ends were defined by the base line or minimum values and each of which had one maximum value, and the peak areas of the regions were determined. The number of regions having a peak area of 1% or more was determined as the number of peaks at molecular weights, where the entire peak area in the molecular weight distribution curve of the conjugated diene polymer was 100%. Furthermore, among the peaks of the divided regions (limited to the regions having a peak area of 1% or more), a peak in a region of the lowest molecular weight was defined as a first peak, and peaks after the first peak were sequentially defined as a second peak and a third peak from the lower molecular weight side. The peak top molecular weights of the peaks (molecular weight indicating the maximum value in each region) were determined.
GPC measurement using a styrene-based column was performed under the following conditions:

(i) GPC apparatus

Apparatus for measurement: high performance liquid chromatograph (available from Tosoh Corporation, trade name "HLC-8320")
Detector: differential refractometer
Eluent: tetrahydrofuran

(ii) Conditions for measurement

GPC columns: two columns available from Tosoh Corporation, trade name "GMH-HR-H"
Mobile phase: 25 mg of 2-(ethylamino)ethanol (available from FUJIFILM Wako Chemical Corporation, Super grade) was added to 3 L of tetrahydrofuran (available from KANTO CHEMICAL CO., INC., Super grade, stabilizer free).
Flow rate: 1 mL/min
Column oven temperature: 40°C
Detection: differential refractive index detector (RID)
Sample solution injection amount: 50 μL
Standard substances for calibration of GPC columns: polystyrenes (available from Agilent Technologies, Inc.)
Thirteen standard polystyrenes having a peak top molecular weight of 100 or more and less than 4000000 were used.

(iii) Conditions for preparation of sample solution

Solvent: 5 mg of standard polystyrene A5000 (available from Tosoh Corporation) having a molecular weight of 5000 as an internal standard was added to 20 mL of tetrahydrofuran (available from KANTO CHEMICAL CO., INC., Super grade, stabilizer free).
Sample solution concentration: 0.5 mg/mL
Dissolution conditions: 10 mg of a sample and 20 mL of the solvent were added into a screw vial and sealed tightly to be stirred at a stirring speed of 60 reciprocations/min at room temperature for 120 minutes by DF-8020. Filtration was performed by a syringe equipped with a filtering filter.
Filtering filter: Millex-LG, pore size of 0.45 μm, hydrophilic, PTFE, filter diameter of 25 mm (available from Merck KGaA)

<Proportions of polymer chains corresponding to finally detected peak (Z) and maximum peak (L)>

The proportions of polymer chains corresponding to the finally detected peak (Z) and the maximum peak (L) were calculated based on the molecular weight distribution curve of the conjugated diene polymer obtained in the measurement of the peak top molecular weights of the peaks. The finally detected peak (Z) is the first peak in the measurement of the peak top molecular weights of the peaks, and the proportion of the polymer chain corresponding to the finally detected peak (Z) was determined from the proportion of the peak area of the first peak to that of the conjugated diene polymer in the molecular weight distribution curve. Among the peaks excluding the first peak in the molecular weight distribution curve of the conjugated diene polymer, a peak having the largest peak area was specified as the maximum peak (L). The proportion of the polymer chain corresponding to the maximum peak (L) was determined from the proportion of the peak area of the maximum peak (L) to that of the molecular weight distribution curve of the conjugated diene polymer.

<Degree of adsorption of polymer chain corresponding to maximum peak (L) onto silica>

As in the above measurement of the proportion of the polymer chain corresponding to the maximum peak (L), the maximum peak (L) was specified in the molecular weight distribution curve of the conjugated diene polymer, and a range of the molecular weight corresponding to the polymer chain corresponding to the maximum peak (L) was specified. A sample solution containing the conjugated diene polymer and an internal standard polystyrene was subjected to GPC measurement using a styrene-based column and GPC measurement using a silica-based column, and from the results obtained, the degree of adsorption of the polymer chain corresponding to the maximum peak (L) onto silica was calculated from the following expression (I):

$$\text{degree of adsorption (\%) of polymer chain corresponding to maximum peak (L) onto silica} = [1 - (P2 \times P3)/(P1 \times P4)] \times 100 \quad (I)$$

P1: the peak area of the peak of the polymer chain corresponding to the maximum peak (L), obtained by GPC measurement using a styrene-based column
P2: the peak area of the peak of an internal standard polystyrene, obtained by GPC measurement using a styrene-based column
P3: the peak area of the peak of the polymer chain corresponding to the maximum peak (L), obtained by GPC measurement using a silica-based column
P4: the peak area of the peak of the internal standard polystyrene, obtained by GPC measurement using a silica-based column

The conditions for the GPC measurement using a styrene-based column are the same as those in the measurement of the weight average molecular weight (Mw) described above.
The GPC measurement using a silica-based column was performed in the same manner as in the GPC measurement using a styrene-based column except that the styrene-based column was replaced by a silica-based column (columns: Zorbax PSM-1000S, PSM-1000S, and PSM-60S connected in series, oven temperature: 40°C, THF flow rate: 0.6 mL/min) .

<Processability>

The rubber composition was measured for Mooney viscosity (ML1+4) according to JIS K 6300-1:2013 under the following conditions. For the obtained Mooney viscosity (ML1+4), an index was calculated where the Mooney viscosity (ML1+4) in Comparative Example 5 was 100, and was defined as the value of processability. A greater value of processability indicates that the conjugated diene polymer has higher processability.

· test temperature: 100°C
· type of the rotor: L-shaped
· tester used: SHIMADZU Mooney Viscometer SMV-300J available from SHIMADZU Corporation

<Strength properties>

The tensile strength (MPa) and elongation (%) at break were measured using a cross-linked rubber sheet according to JIS K6251:2010 under the following conditions, and the product of the tensile strength and the elongation was calculated. For the obtained product of the tensile strength and the elongation, an index was calculated where the product of the tensile strength and the elongation in Comparative Example 5 was 100, and was defined as the value of strength properties. A greater value of strength properties indicates that the resulting cross-linked rubber has higher strength properties.

· method of preparing test piece: a sheet was prepared by press cross-linking, followed by punching
· shape of test piece: dumbbell shape #3
· test piece cut direction: direction parallel to the grain
· the number of test pieces: 3
· temperature for measurement: 23°C
· test rate: 500 mm/min
· tester used: TENSCMETER 10k available from ALPHA TECHNOLOGIES Inc.

· tester capacity: load cell type 1 kN

<Wear resistance>

A cross-linked rubber sheet was shaped into a test piece having an outer diameter of 50 mm, an inner diameter of 15 mm, and a thickness of 10 mm. The obtained test piece was measured for wear resistance using a FPS wear tester available from Ueshima Seisakusho Co., Ltd. under a load of 1 kgf at a slip ratio of 5%. For each wear resistance in Examples and Comparative Examples, an index was calculated where the wear resistance in Comparative Example 5 was 100, and was defined as the value of wear resistance. A greater value of wear resistance indicates that the resulting cross-linked rubber has higher wear resistance.

<Fuel efficiency>

A cross-linked rubber sheet was punched into a strip having a thickness of 2 mm and a length of 40 mm to prepare a test piece. Using a rheometer (available from Ueshima Seisakusho Co., Ltd.), the loss tangent (tan$\delta$ (60°C)) of the obtained test piece was measured at a frequency of 10 Hz, an initial elongation of 100, a distortion amplitude of 2%, and a temperature of 60°C. For each loss tangent (tan$\delta$ (60°C)) in Examples and Comparative Examples, an index was calculated where the loss tangent (tan$\delta$ (60°C)) in Comparative Example 5 was 100, and was defined as the value of fuel efficiency. A greater value of fuel efficiency indicates that the resulting cross-linked rubber has more excellent fuel efficiency.

<Preparation of polymer block (A) having active terminal>

140.8 g of cyclohexane and 3.0 mmol of tetramethylethylenediamine were added to a 800-ml vessel purged with nitrogen, and 30.0 mmol of normal butyllithium was further added. Subsequently, 113.6 g of isoprene and 9.2 g of styrene were slowly added, and these materials were reacted in the vessel at 50°C for 120 minutes to yield a polymer block (A) having an active terminal. The weight average molecular weight (Mw) of the resulting polymer block (A) was 6,500, the molecular weight distribution (Mw/Mn) was 1.10, the content of styrene monomer units was 7.5% by weight, the content of isoprene monomer units was 92.5% by weight, and the vinyl bond content was 7.0 mol%.

<Production Example 1>

Under a nitrogen atmosphere, 7956 g of industrial hexane (available from Sumitomo Chemical Co., Ltd., trade name: Hexane (general product), density: 0.68 g/mL), 1014 g of cyclohexane, 3.08 mmol of tetramethylethylenediamine, 425 g of 1,3-butadiene, 680 g of styrene, and 4.27 mmol of piperidine were placed into an autoclave having an inner volume of 20 L and equipped with a stirrer. A small amount of normal butyllithium as a scavenger was charged into the autoclave in order to preliminarily detoxify impurities which would act to deactivate polymerization, and then 4.27 mmol of normal butyllithium was charged to start polymerization at 55°C. After the polymerization reaction was continued for 15 minutes, 595 g of 1,3-butadiene was continuously added over 85 minutes. Subsequently, after it was verified that the polymerization conversion ratio reached a range of 95% to 100% and 10 minutes had passed, a polyorganosiloxane represented by Formula (13) below was added in an amount providing an epoxy group content of 3.42 mmol, and was reacted for 20 minutes. Subsequently, 2 equivalents of methanol as a polymerization terminator was added relative to the total lithium amount in the autoclave to prepare a solution containing a conjugated diene polymer. 0.20 Parts of 2,4-bis(octylthiomethyl)-6-methylphenol (available from RIANOX, trade name: RIANOX 1520) as an antioxidant was added to the solution relative to 100 parts of the conjugated diene polymer to prepare a polymer solution.

[Chem. 8]

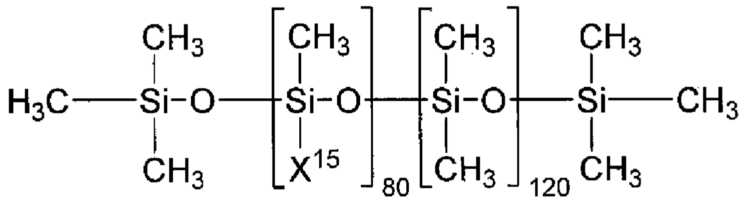

(13)

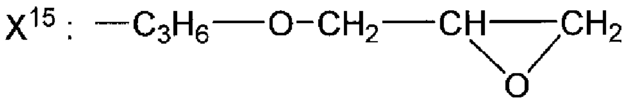

<Production Example 2>

Under a nitrogen atmosphere, 7956 g of industrial hexane, 1014 g of cyclohexane, 2.63 mmol of tetramethylethylenediamine, 425 g of 1,3-butadiene, and 680 g of styrene were placed into an autoclave having an inner volume of 20 L and equipped with a stirrer. A small amount of normal butyllithium as a scavenger was charged into the autoclave in order to preliminarily detoxify impurities which would act to deactivate polymerization, and then 4.38 mmol of the polymer block (A) having an active terminal in terms of the lithium atom content was added to allow the polymer growth reaction to proceed at 55°C. After the polymerization reaction was continued for 15 minutes, 595 g of 1,3-butadiene was continuously added over 85 minutes. Subsequently, after it was verified that the polymerization conversion ratio reached a range of 95% to 100%, 1.2 mmol of normal butyllithium was added. Furthermore, after 10 minutes had passed, the polyorganosiloxane represented by Formula (13) above was added in an amount providing an epoxy group content of 3.42 mmol, and was reacted for 20 minutes. Subsequently, 2 equivalents of methanol as a polymerization terminator was added relative to the total lithium amount in the autoclave to prepare a solution containing a conjugated diene polymer. To this solution, 0.20 parts of 2,4-bis(octylthiomethyl)-6-methylphenol as an antioxidant was added relative to 100 parts of the conjugated diene polymer to prepare a polymer solution.

<Production Example 3>

Under a nitrogen atmosphere, 9180 g of industrial hexane, 1170 g of cyclohexane, 5.2 mmol of tetramethylethylenediamine, 500 g of 1,3-butadiene, 800 g of styrene, and 0.43 g of bis(diethylamino)methylvinylsilane were placed into an autoclave having an inner volume of 20 L and equipped with a stirrer. A small amount of normal butyllithium as a scavenger was charged into the autoclave in order to preliminarily detoxify impurities which would act to deactivate polymerization, and then 20.0 mmol (in terms of lithium atom content) of the polymer block (A) having an active terminal prepared above was added to allow the polymer growth reaction to proceed at 55°C. After the polymerization reaction was continued for 15 minutes, 0.86 g of bis(diethylamino)methylvinylsilane was added, and 700 g of 1,3-butadiene was continuously added over 75 minutes. Subsequently, after it was verified that the polymerization conversion ratio reached a range of 95% to 100% and 10 minutes had passed, the polyorganosiloxane represented by Formula (13) above was added in an amount providing an epoxy group content of 12 mmol, and was reacted for 20 minutes. Subsequently, 2 equivalents of methanol as a polymerization terminator was added relative to the total lithium amount in the autoclave to prepare a solution containing a conjugated diene polymer. To this solution, 0.20 parts of 2,4-bis(octylthiomethyl)-6-methylphenol as an antioxidant was added relative to 100 parts of the conjugated diene polymer to prepare a polymer solution.

<Production Example 4>

A polymer solution was prepared through the same operation as that in Production Example 2 except that the amount of tetramethylethylenediamine was changed to 2.62 mmol and the amount of the polymer block (A) in terms of lithium atom content was changed to 4.86 mmol.

<Production Example 5>

Under a nitrogen atmosphere, 7956 g of industrial hexane, 1014 g of cyclohexane, 3.2 mmol of tetramethylethylenediamin, 510 g of 1,3-butadiene, and 680 g of styrene were placed into an autoclave having an inner volume of 20 L and equipped with a stirrer. A small amount of normal butyllithium as a scavenger was charged into the autoclave

in order to preliminarily detoxify impurities which would act to deactivate polymerization, and then 4.05 mmol of normal butyllithium was added to start polymerization at 55°C. After the polymerization reaction was continued for 15 minutes, 510 g of 1,3-butadiene was continuously added over 85 minutes. Subsequently, after it was verified that the polymerization conversion ratio reached a range of 95% to 1000, and 0.12 mmol of 1,6-bis(trichlorosilyl)hexane was added. Furthermore, after 10 minutes had passed, the polyorganosiloxane represented by Formula (13) above was added in an amount providing an epoxy group content of 1.21 mmol, and was reacted for 20 minutes. Subsequently, 2 equivalents of methanol as a polymerization terminator was added relative to the total lithium amount in the autoclave to prepare a solution containing a conjugated diene polymer. To this solution, 0.15 parts of 2,4-bis(octylthiomethyl)-6-methylphenol as an antioxidant was added relative to 100 parts of the conjugated diene polymer to prepare a polymer solution.

<Production Example 6>

Under a nitrogen atmosphere, 7072 g of industrial hexane, 2028 g of cyclohexane, 4.0 mmol of tetramethylethylenediamine, 431 g of 1,3-butadiene, 718 g of styrene, and 1.05 g of bis(diethylamino)methylvinylsilane were placed into an autoclave having an inner volume of 20 L and equipped with a stirrer. A small amount of normal butyllithium as a scavenger was charged into the autoclave in order to preliminarily detoxify impurities which would act to deactivate polymerization, and then 7.29 mmol of normal butyllithium was added to start polymerization at 40°C. Immediately after the start of polymerization, 719 g of 1,3-butadiene and 48 g of styrene were continuously added over 130 minutes and 90 minutes, respectively. Subsequently, after it was verified that the polymerization conversion ratio reached a range of 95% to 100%, 0.66 mmol of silicon tetrachloride was added. Furthermore, after 15 minutes had passed, 26.52 mmol of N-(3-dimethylaminopropyl)acrylamide was added, and reacted for 10 minutes. Subsequently, 73.6 mmol of normal butyllithium was added. Furthermore, after 15 minutes had passed, 2 equivalents of methanol as a polymerization terminator was added relative to the total lithium amount in the autoclave to prepare a solution containing a conjugated diene polymer. To this solution, 0.75 parts of 2,4-bis(octylthiomethyl)-6-methylphenol as an antioxidant was added relative to 100 parts of the conjugated diene polymer to prepare a polymer solution.

<Production Example 7>

Under a nitrogen atmosphere, 8160 g of industrial hexane, 2340 g of cyclohexane, 1.9 mmol of tetramethylethylenediamine, 400 g of 1,3-butadiene, and 600 g of styrene were placed in an autoclave having an inner volume of 20 L and equipped with a stirrer. A small amount of normal butyllithium as a scavenger was charged into the autoclave in order to preliminarily detoxify impurities which would act to deactivate polymerization, and then 2.27 mmol of normal butyllithium was added to start polymerization at 45°C. After the polymerization reaction was continued over 30 minutes, 500 g of 1,3-butadiene was continuously added over 150 minutes. Subsequently, after it was verified that the polymerization conversion ratio reached a range of 95% to 100%, 3.40 mmol of 3-(diethylamino)propyltrimethoxysilane was added. Furthermore, after 20 minutes had passed, 5.10 mmol of normal butyllithium was added, and reacted for 20 minutes. Subsequently, 2 equivalents of methanol as a polymerization terminator was added relative to the total lithium amount in the autoclave to prepare a solution containing a conjugated diene polymer. To this solution, 0.40 parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) and 0.20 parts of pentaerythrityltetrakis(3-laurylthiopropionate) (available from Sumitomo Chemical Co., Ltd., trade name: Sumilizer TP-D) as antioxidants were added relative to 100 parts of the conjugated diene polymer to prepare a polymer solution.

<Production Example 8>

Under a nitrogen atmosphere, 8160 g of industrial hexane, 2340 g of cyclohexane, 3.1 mmol of tetramethylethylenediamine, 492 g of 1,3-butadiene, and 600 g of styrene were placed into an autoclave having an inner volume of 20 L and equipped with a stirrer. A small amount of normal butyllithium as a scavenger was charged into the autoclave in order to preliminarily detoxify impurities which would act to deactivate polymerization, and then 15.0 mmol of normal butyllithium was added to start polymerization at 45°C. After the polymerization reaction was continued for 15 minutes, 408 g of 1,3-butadiene was continuously added over 80 minutes. Subsequently, after it was verified that the polymerization conversion ratio reached a range of 95% to 1000, 22.50 mmol of 3-(diethylamino)propyltrimethoxysilane was added. Furthermore, after 20 minutes had passed, 33.75 mmol of normal butyllithium was added, and reacted for 20 minutes. Subsequently, 2 equivalents of methanol as a polymerization terminator was added relative to the total lithium amount in the autoclave to prepare a solution containing a conjugated diene polymer. To this solution, 0.40 parts of 2-tert-butyl-6-(3-tert-butyl-2-hydroxy-5-methylbenzyl)-4-methylphenyl acrylate and 0.20 parts of pentaerythrityltetrakis(3-laurylthiopropionate) as antioxidants were added relative to 100 parts of the conjugated diene polymer to prepare a polymer solution.

<Production Example 9>

A polymer solution was prepared through the same operation as that in Production Example 2 except that after it was verified that the polymerization conversion ratio reached a range of 95% to 100%, normal butyllithium and the polyorganosiloxane represented by Formula (13) above were not added.

<Production Example 10>

A polymer solution was prepared through the same operation as that in Production Example 3 except that after it was verified that the polymerization conversion ratio reached a range of 95% to 100%, the polyorganosiloxane represented by Formula (13) above was not added.

<Production Example 11>

A polymer solution was prepared through the same operation as that in Production Example 1 except that piperidine was not used, 0.34 mmol of silicon tetrachloride was added instead of the polyorganosiloxane represented by Formula (13) above, and after 10 minutes had passed from the addition of silicon tetrachloride, 5.81 mmol of 3-(diethylamino)propyltrimethoxysilane was added, and reacted for 20 minutes.

<Production Example 12>

A polymer solution was prepared through the same operation as that in Production Example 3 except that the amount of tetramethylethylenediamine used was changed to 2.94 mmol, the amount of the polymer block (A) used was changed from 20.0 mmol to 58.8 mmol in terms of lithium atom content, and the amount of the polyorganosiloxane represented by Formula (13) above used was changed to 35.3 mmol.

<Production Example 13>

A polymer solution was prepared through the same operation as that in Production Example 3 except that the amount of tetramethylethylenediamine used was changed to 5.0 mmol, the amount of polymer block (A) used was changed from 20.0 mmol to 13.16 mmol in terms of lithium atom content, and the amount of the polyorganosiloxane represented by Formula (13) above used was changed to 7.89 mmol.

<Production Example 14>

A polymer solution was prepared through the same operation as that in Production Example 2 except that the amount of tetramethylethylenediamine used was changed from 7.2 mmol to 3.83 mmol, the amount of the polymer block (A) used was changed from 20.0 mmol to 7.66 mmol in terms of lithium atom content, and the amount of the polyorganosiloxane represented by Formula (13) above used was changed to 5.36 mmol.

<Production Example 15>

Under a nitrogen atmosphere, 8160 g of industrial hexane, 2340 g of cyclohexane, 4.6 mmol of tetramethylethylenediamine, 550 g of 1,3-butadiene, 130 g of styrene, and 2.39 mmol of piperidine were placed into an autoclave having an inner volume of 20 L and equipped with a stirrer. A small amount of normal butyllithium as a scavenger was charged into the autoclave in order to preliminarily detoxify impurities which would act to deactivate polymerization, and then 3.41 mmol of normal butyllithium was added to start polymerization at 40°C. Immediately after the start of polymerization, 616 g of 1,3-butadiene was continuously added over 180 minutes. Subsequently, after it was verified that the polymerization conversion ratio reached a range of 95% to 100%, the polyorganosiloxane represented by Formula (13) above was added in an amount providing an epoxy group content of 1.21 mmol, and was reacted for 20 minutes. Subsequently, 2 equivalents of methanol as a polymerization terminator was added relative to the total lithium amount in the autoclave to prepare a solution containing a conjugated diene polymer. To this solution, 0.40 parts of 2-tert-butyl-6-(3-tert-butyl-2-hydroxy-5-methylbenzyl)-4-methylphenyl acrylate and 0.20 parts of pentaerythrityltetrakis(3-laurylthiopropionate) as antioxidants were added relative to 100 parts of the conjugated diene polymer to prepare a polymer solution.

<Production Example 16>

Under a nitrogen atmosphere, 8160 g of industrial hexane, 2340 g of cyclohexane, 8.0 mmol of tetramethylethylenediamine, 550 g of 1,3-butadiene, 130 g of styrene, 1.11 g of bis(diethylamino)methylvinylsilane, and 7.2 mmol of piperidine were placed into an autoclave having an inner volume of 20 L and equipped with a stirrer. A small amount of normal butyllithium as a scavenger was charged into the autoclave in order to preliminarily detoxify impurities which would act to deactivate polymerization, and then 14.4 mmol of normal butyllithium was added to start polymerization at 40°C. Immediately after the start of polymerization, 616 g of 1,3-butadiene was continuously added over 140 minutes. Subsequently, after it was verified that the polymerization conversion ratio reached a range of 95% to 100%, the polyorganosiloxane represented by Formula (13) above was added in an amount providing an epoxy group content of 8.64 mmol, and was reacted for 20 minutes. Subsequently, 2 equivalents of methanol as a polymerization terminator was added relative to the total lithium amount in the autoclave to prepare a solution containing a conjugated diene polymer. To this solution, 0.40 parts of 2-tert-butyl-6-(3-tert-butyl-2-hydroxy-5-methylbenzyl)-4-methylphenyl acrylate and 0.20 parts of pentaerythrityltetrakis(3-laurylthiopropionate) as antioxidants were added relative to 100 parts of the conjugated diene polymer to prepare a polymer solution.

<Production Example 17>

A polymer solution was prepared through the same operation as that in Production Example 15 except that piperidine was not used, 3.41 mmol (in terms of lithium atom content) of the polymer block (A) having an active terminal prepared above was added instead of normal butyllithium to allow the polymer growth reaction to proceed, 0.17 mmol of silicon tetrachloride was added instead of the polyorganosiloxane represented by Formula (13) above, and after 20 minutes had passed from the addition of silicon tetrachloride, 2.05 mmol of N-phenyl-2-pyrrolidone was added, and reacted for 20 minutes.

<Production Example 18>

A polymer solution was prepared through the same operation as that in Production Example 16 except that bis(diethylamino)methylvinylsilane and piperidine were not used, and after it was verified that the polymerization conversion ratio reached a range of 95% to 100%, the polyorganosiloxane represented by Formula (13) above was not added.

<Production Example 19>

A polymer solution was prepared through the same operation as that in Production Example 15 except that piperidine was not used, the amount of tetramethylethylenediamine used was changed from 4.6 mmol to 4.2 mmol, the amount of normal butyllithium used was changed from 3.41 mmol to 2.16 mmol, and after it was verified that the polymerization conversion ratio reached a range of 95% to 100%, the polyorganosiloxane represented by Formula (13) above was not added.

<Production Example 20>

A polymer solution was prepared through the same operation as that in Production Example 16 except that bis(diethylamino)methylvinylsilane and piperidine were not used, 14.4 mmol (in terms of lithium atom content) of the polymer block (A) having an active terminal was added instead of normal butyllithium to allow the polymer growth reaction to proceed, and 14.4 mmol of N-(3-dimethylaminopropyl)acrylamide was added and reacted for 20 minutes instead of the polyorganosiloxane represented by Formula (13) above.

<Production Example 21>

A polymer solution was prepared through the same operation as that in Production Example 16 except that piperidine was not used, the amount of tetramethylethylenediamine used was changed from 8.0 mmol to 5.5 mmol, the amount of normal butyllithium used was changed from 14.4 mmol to 6.48 mmol, and after 20 minutes had passed from the addition of polyorganosiloxane represented by Formula (13) above, 3.24 mmol of 3-(2-aminoethylamino)propyltrimethoxysilane was added, and reacted for 20 minutes.

<Production Example 22>

Under a nitrogen atmosphere, 8160 g of industrial hexane, 2340 g of cyclohexane, 3.09 mmol of tetramethylethylenediamine, 567 g of 1,3-butadiene, and 243 g of styrene were placed into an autoclave having an inner volume of 20 L and equipped with a stirrer. A small amount of normal butyllithium as a scavenger was charged into the autoclave in order to preliminarily detoxify impurities which would act to deactivate polymerization, and then 3.18 mmol of normal butyllithium was added to start polymerization at 45°C. After the polymerization reaction was continued for 20 minutes, 810 g of 1,3-butadiene was continuously added over 150 minutes. Subsequently, after it was verified that the polymerization conversion ratio reached a range of 95% to 100%, 4.78 mmol of 3-(diethylamino)propyltrimethoxysilane was added. Furthermore, after 20 minutes had passed, 7.16 mmol of normal butyllithium was added, and reacted for 20 minutes. Subsequently, 2 equivalents of methanol as a polymerization terminator was added relative to the total lithium amount in the autoclave to prepare a solution containing a conjugated diene polymer. To this solution, 0.40 parts of 2-tert-butyl-6-(3-tert-butyl-2-hydroxy-5-methylbenzyl)-4-methylphenyl acrylate and 0.20 parts of pentaerythrityltetrakis(3-laurylthiopropionate) as antioxidants were added relative to 100 parts of the conjugated diene polymer to prepare a polymer solution.

<Production Example 23>

Under a nitrogen atmosphere, 8160 g of industrial hexane, 2340 g of cyclohexane, 5.95 mmol of tetramethylethylenediamine, 475 g of 1,3-butadiene, and 243 g of styrene were placed into an autoclave having an inner volume of 20 L and equipped with a stirrer. A small amount of normal butyllithium as a scavenger was charged into the autoclave in order to preliminarily detoxify impurities which would act to deactivate polymerization, and then 17.5 mmol of normal butyllithium was added to start polymerization at 45°C. After the polymerization reaction was continued for 10 minutes, 902 g of 1,3-butadiene was continuously added over 80 minutes. Subsequently, after it was verified that the polymerization conversion ratio reached a range of 95% to 100%, 26.25 mmol of 3-(diethylamino)propyltrimethoxysilane was added. Furthermore, after 20 minutes had passed, 39.38 mmol of normal butyllithium was added, and reacted for 20 minutes. Subsequently, 2 equivalents of methanol as a polymerization terminator was added relative to the total lithium amount in the autoclave to prepare a solution containing a conjugated diene polymer. To this solution, 0.40 parts of 2-tert-butyl-6-(3-tert-butyl-2-hydroxy-5-methylbenzyl)-4-methylphenyl acrylate and 0.20 parts of pentaerythrityltetrakis(3-laurylthiopropionate) as antioxidants were added relative to 100 parts of the conjugated diene polymer to prepare a polymer solution.

<Production Example 24>

Under a nitrogen atmosphere, 8160 g of industrial hexane, 2340 g of cyclohexane, 96 mmol of tetrahydrofuran, 5.33 mmol of ethylene glycol diethyl ether, 921 g of 1,3-butadiene, 163 g of styrene, and 0.40 g of bis(diethylamino)methylvinylsilane were placed into an autoclave having an inner volume of 20 L and equipped with a stirrer. A small amount of normal butyllithium as a scavenger was charged into the autoclave in order to preliminarily detoxify impurities which would act to deactivate polymerization, and then 14.3 mmol of normal butyllithium was added to start polymerization at 40°C. Immediately after the start of polymerization, 1030 g of 1,3-butadiene and 54 g of styrene were continuously added over 115 minutes and 80 minutes, respectively, and 0.52 g of bis(diethylamino)methylvinylsilane was added after 15 minutes from the start of polymerization. Subsequently, after it was verified that the polymerization conversion ratio reached a range of 95% to 100%, 0.79 mmol of silicon tetrachloride was added, and reacted for 10 minutes. Thereafter, 14.3 mmol of 3-(diethylamino)propyltrimethoxysilane was added, and reacted for 20 minutes. Subsequently, 28.53 mmol of normal butyllithium was added. Furthermore, after 15 minutes had passed, 13.76 mmol of N-(3-dimethylaminopropyl)acrylamide was added, and reacted for 15 minutes. Subsequently, 1.5 equivalents of methanol as a polymerization terminator was added relative to the total lithium amount in the autoclave to prepare a solution containing a conjugated diene polymer. To this solution, 0.56 parts of 2,4-bis(octylthiomethyl)-6-methylphenol as an antioxidant was added relative to 100 parts of the conjugated diene polymer to prepare a polymer solution.

<Production Example 25>

Under a nitrogen atmosphere, 8160 g of industrial hexane, 2340 g of cyclohexane, 99 mmol of tetrahydrofuran, 9.60 mmol of ethylene glycol dibutyl ether, 689 g of 1,3-butadiene, 162 g of styrene, and 2.27 mmol of piperidine were placed into an autoclave having an inner volume of 20 L and equipped with a stirrer. A small amount of normal butyllithium as a scavenger was charged into the autoclave in order to preliminarily detoxify impurities which would act to deactivate polymerization, and then 3.24 mmol of normal butyllithium was added to start polymerization at 40°C. Immediately after the start of polymerization, 769 g of 1,3-butadiene was continuously added over 195 minutes. Subsequently, after it was verified that the polymerization conversion ratio reached a range of 95% to 100%, 4.86 mmol of 3-(diethylamino)propyltrimethoxysilane was reacted for 20 minutes. Subsequently, 2 equivalents of methanol as a polymerization terminator was added relative to the total lithium amount in the autoclave to prepare a solution containing a conjugated diene

polymer. To this solution, 0.40 parts of 2-tert-butyl-6-(3-tert-butyl-2-hydroxy-5-methylbenzyl)-4-methylphenyl acrylate and 0.20 parts of pentaerythrityltetrakis(3-laurylthiopropionate) as antioxidants were added relative to 100 parts of the conjugated diene polymer to prepare a polymer solution.

<Production Example 26>

Under a nitrogen atmosphere, 8160 g of industrial hexane, 2340 g of cyclohexane, 99 mmol of tetrahydrofuran, 7.50 mmol of ethylene glycol dibutyl ether, 550 g of 1,3-butadiene, 130 g of styrene, and 51.4 g of isoprene were placed into an autoclave having an inner volume of 20 L and equipped with a stirrer. A small amount of normal butyllithium as a scavenger was charged into the autoclave in order to preliminarily detoxify impurities which would act to deactivate polymerization, and then 18.71 mmol of normal butyllithium was added. Furthermore, 18.71 mmol (in terms of lithium atom content) of the polymer block (A) having an active terminal prepared above was added to allow the polymer growth reaction to proceed at 40°C. Subsequently, 616 g of 1,3-butadiene was continuously added over 100 minutes. After it was verified that the polymerization conversion ratio reached a range of 95% to 100%, 1.12 mmol of silicon tetrachloride was added. Furthermore, after 10 minutes had passed, 14.97 mmol of N-phenyl-2-pyrrolidone was added, and reacted for 50 minutes. Subsequently, 2 equivalents of methanol as a polymerization terminator was added relative to the total lithium amount in the autoclave to prepare a solution containing a conjugated diene polymer. To this solution, 0.40 parts of 2-tert-butyl-6-(3-tert-butyl-2-hydroxy-5-methylbenzyl)-4-methylphenyl acrylate and 0.20 parts of pentaerythrityltetrakis(3-laurylthiopropionate) as antioxidants were added relative to 100 parts of the conjugated diene polymer to prepare a polymer solution.

The conjugated diene polymers in the polymer solutions prepared in Production Examples 1 to 26 were measured for the styrene unit content, the vinyl bond content, the proportion of styrene blocks, the weight average molecular weight (Mw), and the molecular weight distribution (Mw/Mn) according to the methods described above. The results are shown in Table 1.

[Table 1]

Table 1

| | Production Example 1 | Production Example 2 | Production Example 3 | Production Example 4 | Production Example 5 | Production Example 6 | Production Example 7 | Production Example 8 | Production Example 9 | Production Example 10 | Production Example 11 | Production Example 12 | Production Example 13 |
|---|---|---|---|---|---|---|---|---|---|---|---|---|---|
| Styreneunit content (wt%) | 39 | 39 | 39 | 39 | 40 | 40 | 39 | 39 | 40 | 41 | 39 | 40 | 40 |
| Vinyl bond content (mol%) | 23 | 22 | 24 | 22 | 24 | 24 | 28 | 28 | 23 | 23 | 23 | 24 | 25 |
| Mw (×$10^4$) | 78 | 103 | 49 | 93 | 87 | 75 | 105 | 20 | 63 | 20 | 60 | 19 | 37 |
| Molecular weight distribution (Mw/Mn) | 1.67 | 1.79 | 1.46 | 1.23 | 1.64 | 1.56 | 1.09 | 1.13 | 1.04 | 1.04 | 1.29 | 1.39 | 1.47 |
| | Production Example 14 | Production Example 15 | Production Example 16 | Production Example 17 | Production Example 18 | Production Example 19 | Production Example 20 | Production Example 21 | Production Example 22 | Production Example 23 | Production Example 24 | Production Example 25 | Production Example 26 |
| Styreneunit content (wt%) | 39 | 11 | 11 | 11 | 11 | 11 | 11 | 11 | 15 | 15 | 10 | 10 | 10 |
| Vinyl bond content (mol%) | 24 | 36 | 36 | 37 | 34 | 36 | 37 | 36 | 31 | 31 | 36 | 36 | 35 |
| Mw (×$10^4$) | 73 | 111 | 38 | 84 | 17 | 106 | 17 | 72 | 110 | 18 | 49 | 143 | 12 |
| Molecular weight distribution (Mw/Mn) | 1.40 | 1.40 | 2.60 | 1.29 | 1.06 | 1.17 | 1.09 | 1.54 | 1.11 | 1.15 | 1.45 | 1.38 | 1.27 |

[Examples 1 to 8 and Comparative Examples 1 to 12]

The polymer solutions prepared in Production Examples 1 to 26 and an oil (available from NIPPON OIL CORPORATION, trade name "AROMAX T-DAE") were mixed such that the mass of the conjugated diene polymer contained in each polymer solution and the mass of the oil were in the proportions shown in Tables 2 and 3, and were homogeneously mixed by stirring. Thereafter, the solvent was removed by steam stripping, and the residues were dried in a vacuum dryer set at 60°C for 24 hours to prepare conjugated diene polymers. The resulting conjugated diene polymers were measured and evaluated for the styrene unit content, the vinyl bond content, the proportion of styrene blocks, the Mooney viscosity, the weight average molecular weight (Mw), the molecular weight distribution (Mw/Mn), the number of peaks in the molecular weight distribution curve, the peak top molecular weights of the peaks, the finally detected peak (Z), the proportion of the polymer chain corresponding to the maximum peak (L), and the degree of adsorption of the polymer chain corresponding to the maximum peak (L) onto silica according to the methods described above. The results are shown in Tables 2 and 3.

[Table 2]

Table 2

| | | Ex. 1 | Ex. 2 | Ex. 3 | Ex. 4 | Ex. 5 | C. Ex. 1 | C. Ex. 2 | C. Ex. 3 | C. Ex. 4 | C. Ex. 5 |
|---|---|---|---|---|---|---|---|---|---|---|---|
| Blending proportions (parts) | Production Example 1 | 66.7 | - | - | - | - | - | - | - | - | - |
| | Production Example 2 | - | 66.7 | - | - | - | - | - | 66.7 | 66.7 | - |
| | Production Example 3 | 33.3 | 33.3 | 33.3 | - | - | - | 33.3 | - | - | - |
| | Production Example 4 | - | - | 66.7 | - | - | - | - | - | - | 66.7 |
| | Production Example 5 | - | - | - | - | 70.0 | - | - | - | - | - |
| | Production Example 6 | - | - | - | 80.0 | - | - | - | - | - | - |
| | Production Example 7 | - | - | - | 106 | 158 | - | - | - | - | - |
| | Production Example 8 | - | - | - | 9.4 | 14.2 | - | - | - | - | - |
| | Production Example 9 | - | - | - | - | - | 66.7 | - | - | - | - |
| | Production Example 10 | - | - | - | - | - | 33.3 | - | - | - | - |
| | Production Example 11 | - | - | - | - | - | - | 66.7 | - | - | - |
| | Production Example 12 | - | - | - | - | - | - | - | 33.3 | - | - |
| | Production Example 13 | - | - | - | - | - | - | - | - | 33.3 | - |
| | Production Example 14 | - | - | - | - | - | - | - | - | - | 33.3 |
| | Oil | 20 | 20 | 20 | 20 | 26 | 20 | 20 | 20 | 20 | 20 |

(continued)

| | | Ex. 1 | Ex. 2 | Ex. 3 | Ex. 4 | Ex. 5 | C. Ex. 1 | C. Ex. 2 | C. Ex. 3 | C. Ex. 4 | C. Ex. 5 |
|---|---|---|---|---|---|---|---|---|---|---|---|
| Physical properties of conjugated diene polymer | Styrene unit content (wt%) | 39 | 39 | 39 | 40 | 40 | 40 | 40 | 39 | 40 | 39 |
| | Vinyl bond content (mol%) | 23 | 22 | 23 | 25 | 25 | 23 | 23 | 22 | 24 | 23 |
| | Proportion (%) of styrene blocks | 2.2 | 2.2 | 2.1 | 1.9 | 1.5 | 2.1 | 2.0 | 2.2 | 2.2 | 2.1 |
| | Mooney viscosity | 103 | 96 | 85 | 67 | 78 | 56 | 107 | 63 | 67 | 105 |
| | Mw ($\times 10^4$) | 68 | 85 | 78 | 73 | 81 | 49 | 57 | 75 | 78 | 86 |
| | Mw/Mn | 1.69 | 1.73 | 1.61 | 1.67 | 1.84 | 1.39 | 1.55 | 1.92 | 1.50 | 1.68 |
| | Number of peaks in molecular weight distribution curve | 4 | 4 | 5 | 3 | 3 | 2 | 4 | 5 | 3 | 5 |
| | Peak top molecular weight Mw ($\times 10^4$) of finally detected peak (Z) (first peak) | 20 | 20 | 20 | 16 | 17 | 20 | 20 | 7 | 26 | 41 |
| | Peak top molecular weight Mw ($\times 10^4$) of second peak | 41 | 41 | 42 | 38 | 35 | 62 | 41 | 15 | 60 | 58 |
| | Peak top molecular weight Mw ($\times 10^4$) of third peak | 69 | 68 | 58 | 107 | 69 | - | 69 | 20 | 120 | 81 |
| | Peak top molecular weight Mw ($\times 10^4$) of fourth peak | 138 | 132 | 112 | - | - | - | 191 | 66 | - | 112 |
| | Peak top molecular weight Mw ($\times 10^4$) of fifth peak | - | - | 154 | - | - | - | - | 132 | - | 169 |
| | Proportion (wt%) of polymer chain corresponding to finally detected peak (Z) | 19 | 13 | 10 | 15 | 10 | 33 | 11 | 9 | 25 | 17 |
| | Peak top molecular weight ($\times 10^4$) of maximum peak (L) | 69 | 68 | 58 | 38 | 69 | 62 | 69 | 132 | 60 | 112 |

(continued)

| | | Ex. 1 | Ex. 2 | Ex. 3 | Ex. 4 | Ex. 5 | C. Ex. 1 | C. Ex. 2 | C. Ex. 3 | C. Ex. 4 | C. Ex. 5 |
|---|---|---|---|---|---|---|---|---|---|---|---|
| | Proportion (wt%) of polymer chain corresponding to maximum peak (L) | 50 | 42 | 40 | 46 | 47 | 67 | 58 | 32 | 52 | 40 |
| | Degree of adsorption (%) of polymer chain corresponding to maximum peak (L) onto silica | 36 | 2 | 2 | 30 | 19 | 0 | 61 | 2 | 2 | 1 |

[Table 3]

Table 3

| | | Ex. 6 | Ex. 7 | Ex. 8 | C. Ex. 6 | C. Ex. 7 | C. Ex. 8 | C. Ex. 9 | C. Ex. 10 | C. Ex. 11 | C. Ex. 12 |
|---|---|---|---|---|---|---|---|---|---|---|---|
| Blending proportions (parts) | Production Example 15 | 60 | - | - | - | - | 70 | - | - | - | - |
| | Production Example 16 | 40 | 10 | - | - | - | - | - | - | - | - |
| | Production Example 17 | - | 90 | - | - | - | - | - | - | - | - |
| | Production Example 18 | - | - | - | - | - | 30 | - | - | - | - |
| | Production Example 19 | - | - | - | - | - | - | - | 40 | - | 50 |
| | Production Example 20 | - | - | - | - | - | - | 40 | - | - | 50 |
| | Production Example 21 | - | - | 92 | - | - | - | - | 60 | 100 | - |
| | Production Example 22 | - | - | 5 | - | - | - | - | - | - | - |
| | Production Example 23 | - | - | 3 | - | - | - | - | - | - | - |
| | Production Example 24 | - | - | - | 100 | - | - | - | - | - | - |
| | Production Example 25 | - | - | - | - | 60 | - | 60 | - | - | - |
| | Production Example 26 | - | - | - | - | 40 | - | - | - | - | - |
| | Oil | 0 | 0 | 0 | 0 | 0 | 0 | 0 | 0 | 0 | 0 |

(continued)

| | | Ex. 6 | Ex. 7 | Ex. 8 | C. Ex. 6 | C. Ex. 7 | C. Ex. 8 | C. Ex. 9 | C. Ex. 10 | C. Ex. 11 | C. Ex. 12 |
|---|---|---|---|---|---|---|---|---|---|---|---|
| Physical properties of conjugated diene polymer | Styrene unit content (wt%) | 11 | 11 | 11 | 10 | 10 | 11 | 10 | 11 | 11 | 11 |
| | Vinyl bond content (mol%) | 36 | 37 | 36 | 36 | 36 | 36 | 37 | 36 | 36 | 37 |
| | Proportion (%) of styrene blocks | 1.3 | 1.6 | 1.6 | 0.9 | 0.1 | 1.5 | 0.2 | 0.9 | 1.5 | 0.2 |
| | Mooney viscosity | 87 | 131 | 123 | 38 | 48 | 92 | 50 | 105 | 126 | 43 |
| | Mw ($\times 10^4$) | 82 | 79 | 72 | 49 | 90 | 83 | 92 | 86 | 72 | 61 |
| | Mw/Mn | 2.86 | 1.63 | 1.58 | 1.46 | 4.46 | 2.27 | 2.91 | 1.48 | 1.54 | 2.31 |
| | Number of peaks in molecular weight distribution curve | 4 | 3 | 3 | 3 | 4 | 3 | 2 | 2 | 3 | 2 |
| | Peak top molecular weight Mw ($\times 10^4$) of finally detected peak (Z) (first peak) | 18 | 18 | 14 | 25 | 7 | 17 | 17 | 35 | 35 | 17 |
| | Peak top molecular weight Mw ($\times 10^4$) of second peak | 39 | 63 | 34 | 52 | 13 | 71 | 141 | 110 | 76 | 107 |
| | Peak top molecular weight Mw ($\times 10^4$) of third peak | 71 | 135 | 107 | 91 | 22 | 158 | - | - | 112 | - |
| | Peak top molecular weight Mw ($\times 10^4$) of fourth peak | 158 | - | - | - | 141 | - | - | - | - | - |
| | Peak top molecular weight Mw ($\times 10^4$) of fifth peak | - | - | - | - | - | - | - | - | - | - |
| | Proportion (wt%) of polymer chain corresponding to finally detected peak (Z) | 19 | 6 | 25 | 51 | 17 | 30 | 40 | 27 | 42 | 52 |
| | Peak top molecular weight ($\times 10^4$) of maximum peak (L) | 71 | 63 | 107 | 52 | 141 | 71 | 141 | 110 | 76 | 107 |

(continued)

| | | Ex. 6 | Ex. 7 | Ex. 8 | C. Ex. 6 | C. Ex. 7 | C. Ex. 8 | C. Ex. 9 | C. Ex. 10 | C. Ex. 11 | C. Ex. 12 |
|---|---|---|---|---|---|---|---|---|---|---|---|
| | Proportion (wt%) of polymer chain corresponding to maximum peak (L) | 39 | 73 | 61 | 23 | 59 | 39 | 60 | 73 | 31 | 48 |
| | Degree of adsorption (%) of polymer chain corresponding to maximum peak (L) onto silica | 28 | 39 | 35 | 52 | 85 | 64 | 84 | 31 | 60 | 2 |

In a Brabender type mixer having a volume of 250 ml, the conjugated diene-based rubbers in Examples 1 to 8 and Comparative Examples 1 to 12 shown in Tables 2 and 3 in the amounts shown in Tables 4 and 5 (including the amount of the oil when the polymer solution and the oil were mixed above) were masticated for 30 seconds. In the next step, silica (available from Evonik AG, trade name "ULTRASIL (registered trademark) 7000GR"), carbon black (N339), process oil (available from NIPPON OIL CORPORATION, trade name "AROMAX T-DAE"), bis(3-(triethoxysilyl)propyl)disulfide (available from Degussa AG, trade name "Si75") as a silane coupling agent, zinc oxide, stearic acid, and N-phenyl-N'-(1,3-dimethyl butyl)-p-phenylenediamine (available from Ouchi Shinko Chemical Industrial Co., Ltd., trade name "NOCRAC 6C") as an antioxidant were added in the compounding proportions (parts by mass) shown in Tables 4 and 5. These materials were further kneaded for 3.5 minutes, and the kneaded products were discharged from the mixer. The temperature of the kneaded products at the end of kneading was 140°C. In the next step, in an open roll mill at 50°C, sulfur, cross-linking accelerators: N-tert-butyl-2-benzothiazolylsulfenamide (vulcanization accelerator (1); trade name "NOCCELER NS-P", available from Ouchi Shinko Chemical Industrial Co., Ltd.), and diphenylguanidine (vulcanization accelerator (2); trade name "NOCCELER D", available from Ouchi Shinko Chemical Industrial Co., Ltd.) were added to each of the resulting kneaded products in the compounding proportions (parts by mass) shown in Tables 4 and 5, and these were kneaded. Thereafter, sheet-shaped rubber compositions were extracted. The resulting rubber compositions were evaluated for the processability. The results are shown in Tables 4 and 5.

The resulting rubber compositions were press cross-linked at 160°C for 30 minutes to prepare test pieces of cross-linked rubbers, and the test pieces were evaluated for the strength properties, the wear resistance, and the fuel efficiency according to the methods described above. The results are shown in Tables 4 and 5.

[Table 4]

Table 4

| | | Ex. 1 | Ex. 2 | Ex. 3 | Ex. 4 | Ex. 5 | C. Ex. 1 | C. Ex. 2 | C. Ex. 3 | C. Ex. 4 | C. Ex. 5 |
|---|---|---|---|---|---|---|---|---|---|---|---|
| Ingredients (parts) of rubber composition | Conjugated diene polymer (including oil) | 120 | 120 | 120 | 120 | 120 | 120 | 120 | 120 | 120 | 120 |
| | Silica | 80 | 80 | 80 | 80 | 80 | 80 | 80 | 80 | 80 | 80 |
| | Oil | 17.5 | 17.5 | 17.5 | 17.5 | 17.5 | 17.5 | 17.5 | 17.5 | 17.5 | 17.5 |
| | Silane coupling agent | 6.4 | 6.4 | 6.4 | 6.4 | 6.4 | 6.4 | 6.4 | 6.4 | 6.4 | 6.4 |
| | Carbon black | 5 | 5 | 5 | 5 | 5 | 5 | 5 | 5 | 5 | 5 |
| | Zinc oxide | 3 | 3 | 3 | 3 | 3 | 3 | 3 | 3 | 3 | 3 |
| | Anioxidant | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 |
| | Vulcanization accelerator (1) | 1.5 | 1.5 | 1.5 | 1.5 | 1.5 | 1.5 | 1.5 | 1.5 | 1.5 | 1.5 |
| | Vulcanization accelerator (2) | 2 | 2 | 2 | 2 | 2 | 2 | 2 | 2 | 2 | 2 |
| Evaluations | Processability | 112 | 122 | 110 | 119 | 108 | 144 | 124 | 129 | 84 | 100 |
| | Strength properties | 122 | 118 | 105 | 119 | 126 | 111 | 94 | 14 | 95 | 100 |
| | Wear resistance | 106 | 111 | 96 | 104 | 86 | 98 | 84 | 101 | 100 | 100 |
| | Fuel efficiency | 99 | 99 | 101 | 95 | 89 | 69 | 95 | 89 | 89 | 100 |

[Table 5]

Table 5

| | | Ex. 6 | Ex. 7 | Ex. 8 | C. Ex. 6 | C. Ex. 7 | C. Ex. 8 | C. Ex. 9 | C. Ex. 10 | C. Ex. 11 | C. Ex. 12 |
|---|---|---|---|---|---|---|---|---|---|---|---|
| Ingredients (parts) of robber composition | Conjugated diene polymer (including oil) | 120 | 120 | 120 | 120 | 120 | 120 | 120 | 120 | 120 | 120 |
| | Silica | 80 | 80 | 80 | 80 | 80 | 80 | 80 | 80 | 80 | 80 |
| | Oil | 17.5 | 17.5 | 17.5 | 17.5 | 17.5 | 17.5 | 17.5 | 17.5 | 17.5 | 17.5 |
| | Silane coupling agent | 6.4 | 6.4 | 6.4 | 6.4 | 6.4 | 6.4 | 6.4 | 6.4 | 6.4 | 6.4 |
| | Carbon black | 5 | 5 | 5 | 5 | 5 | 5 | 5 | 5 | 5 | 5 |
| | Zinc oxide | 3 | 3 | 3 | 3 | 3 | 3 | 3 | 3 | 3 | 3 |
| | Antioxidant | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 |
| | Vulcanization accelerator (1) | 1.5 | 1.5 | 1.5 | 1.5 | 1.5 | 1.5 | 1.5 | 1.5 | 1.5 | 1.5 |
| | Vulcanization accelerator (2) | 2 | 2 | 2 | 2 | 2 | 2 | 2 | 2 | 2 | 2 |
| Evaluations | Processability | 91 | 100 | 95 | 69 | 100 | 49 | 70 | 100 | 71 | 111 |
| | Strength properties | 135 | 132 | 132 | 149 | 172 | 167 | 164 | 100 | 88 | 171 |
| | Wear resistance | 152 | 167 | 170 | 144 | 123 | 113 | 157 | 100 | 47 | 138 |
| | Fuel efficiency | 100 | 90 | 92 | 110 | 43 | 73 | 76 | 100 | 102 | 60 |

From Tables 2, 3, 4, and 5, the following points can be verified.

Specifically, for the conjugated diene polymers having a molecular weight distribution curve obtained by GPC measurement where three or more peaks were present, wherein the peak top molecular weight of the finally detected peak (Z) was 80000 to 250000, and the polymer chain corresponding to the maximum peak (L) had a degree of adsorption onto silica of less than 40%, the conjugated diene polymer had high processability, and provided cross-linked rubbers having high strength properties, high wear resistance, and excellent fuel efficiency (Examples 1 to 8).

In contrast, in the case where less than three peaks were present in the molecular weight distribution curve obtained by GPC measurement, in the case where the peak top molecular weight of the finally detected peak (Z) was less than 80000 or more than 250000, or in the case where the polymer chain corresponding to the maximum peak (L) had a degree of adsorption onto silica of 40% or more, processability of the conjugated diene polymer and strength properties, wear resistance, and fuel efficiency of provided cross-linked rubber were poorly balanced. (Comparative Examples 1 to 12).

## Claims

**1.** A conjugated diene polymer containing at least conjugated diene monomer units,

wherein the conjugated diene polymer has a molecular weight distribution curve obtained by gel permeation chromatography where three or more peaks are present, and
the peak top molecular weight of a finally detected peak (Z) is 80000 to 250000, and a polymer chain corresponding to a maximum peak (L) has a degree of adsorption onto silica of less than 40%, where in the molecular weight distribution curve, the last detected peak in measurement by gel permeation chromatography is defined as the finally detected peak (Z), and a peak having the largest peak area among peaks excluding the finally detected peak (Z) is defined as the maximum peak (L).

**2.** The conjugated diene polymer according to claim 1, wherein the peak top molecular weight of the maximum peak (L) is larger than 600000.

**3.** The conjugated diene polymer according to claim 1 or 2, wherein the conjugated diene polymer has a terminal modifying group.

**4.** The conjugated diene polymer according to any one of claims 1 to 3, wherein the conjugated diene polymer contains coupled polymer chains.

**5.** A rubber composition comprising the conjugated diene polymer according to any one of claims 1 to 4, and a filler.

**6.** A cross-linked rubber prepared by cross-linking the rubber composition according to claim 5.

**7.** A tire comprising the cross-linked rubber according to claim 6.

**8.** A method of producing the conjugated diene polymer according to any one of claims 1 to 4, the method comprising: a step of mixing two or more conjugated diene polymers having different molecular weight distribution curves in the form of polymer solutions thereof.

**9.** A method of producing the conjugated diene polymer according to any one of claims 1 to 4, the method comprising: a step of starting polymerization of a monomer mixture containing a conjugated diene monomer in the presence of a polymerization initiator, and thereafter further adding the polymerization initiator to the polymerization system to continue the polymerization.

Fig. 1

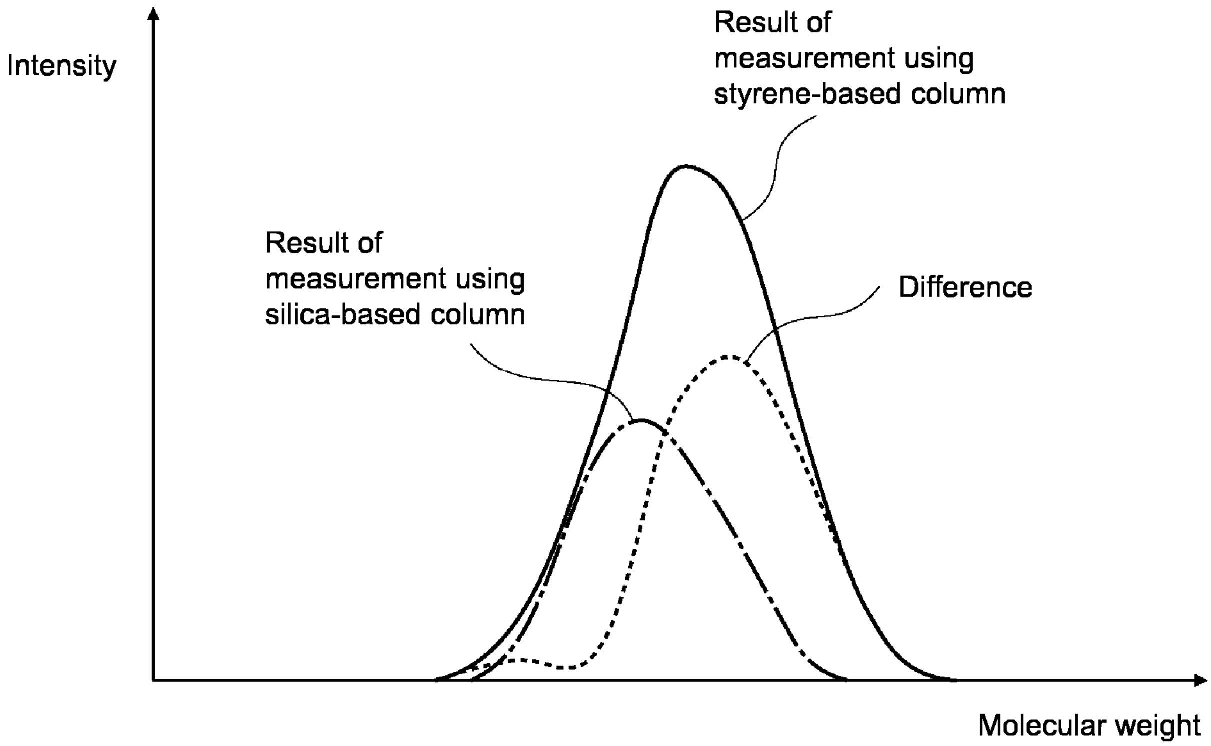
Intensity
Result of measurement using styrene-based column
Result of measurement using silica-based column
Difference
Molecular weight

## INTERNATIONAL SEARCH REPORT

International application No.
**PCT/JP2021/037209**

**A. CLASSIFICATION OF SUBJECT MATTER**

***B60C 1/00***(2006.01)i; ***C08F 36/04***(2006.01)i; ***C08L 9/00***(2006.01)i; ***C08K 3/011***(2018.01)i; ***C08K 3/013***(2018.01)i
FI: C08L9/00; C08K3/013; C08F36/04; C08K3/011; B60C1/00 Z

According to International Patent Classification (IPC) or to both national classification and IPC

**B. FIELDS SEARCHED**

Minimum documentation searched (classification system followed by classification symbols)

B60C1/00; C08F36/04; C08L9/00; C08K3/011; C08K3/013

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2009-30027 A (SUMITOMO CHEMICAL CO., LTD.) 12 February 2009 (2009-02-12) claims, paragraphs [0082], [0083], examples | 1, 3, 5-7 |
| Y | | 9 |
| A | | 2, 4, 8 |
| X | JP 2012-172077 A (ASAHI KASEI CHEMICALS CORP.) 10 September 2012 (2012-09-10) claims, examples | 1, 3, 5-7 |
| A | | 2, 4, 8, 9 |
| X | WO 2018/056025 A1 (JAPAN ELASTOMER CO., LTD.) 29 March 2018 (2018-03-29) examples | 1-8 |
| Y | | 9 |
| X | WO 2018/147312 A1 (JAPAN ELASTOMER CO., LTD.) 16 August 2018 (2018-08-16) claims, paragraph [0017], examples | 1-8 |
| Y | | 9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 December 2021** | **14 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2021/037209**

**C. DOCUMENTS CONSIDERED TO BE RELEVANT**

| Category* | Citation of document, with indication, where appropriate, of the relevant passages | Relevant to claim No. |
|---|---|---|
| Y<br>A | WO 2018/164053 A1 (ASAHI KASEI CO.) 13 September 2018 (2018-09-13) paragraph [0019] | 9<br>1-8 |
| A | JP 2019-167420 A (JAPAN ELASTOMER CO., LTD.) 03 October 2019 (2019-10-03) entire text | 1-9 |
| A | JP 2020-7532 A (ASAHI KASEI CO.) 16 January 2020 (2020-01-16) entire text | 1-9 |
| A | JP 2020-26524 A (ASAHI KASEI CO.) 20 February 2020 (2020-02-20) entire text | 1-9 |
| A | JP 2020-33546 A (ASAHI KASEI CO.) 05 March 2020 (2020-03-05) entire text | 1-9 |
| A | JP 2020-37678 A (ASAHI KASEI CO.) 12 March 2020 (2020-03-12) entire text | 1-9 |
| A | JP 2020-41136 A (ASAHI KASEI CO.) 19 March 2020 (2020-03-19) entire text | 1-9 |

Form PCT/ISA/210 (second sheet) (January 2015)

**INTERNATIONAL SEARCH REPORT**
**Information on patent family members**

International application No.
**PCT/JP2021/037209**

| Patent document cited in search report | Publication date (day/month/year) | Patent family member(s) | Publication date (day/month/year) |
|---|---|---|---|
| JP 2009-30027 A | 12 February 2009 | US 2008/0319151 A1<br>claims, paragraphs [0140], [0141], examples<br>CN 101328231 A<br>TW 200914475 A | |
| JP 2012-172077 A | 10 September 2012 | (Family: none) | |
| WO 2018/056025 A1 | 29 March 2018 | US 2020/0024383 A1<br>examples<br>EP 3517552 A1<br>KR 10-2019-0020061 A<br>CN 109476778 A<br>TW 201815834 A | |
| WO 2018/147312 A1 | 16 August 2018 | US 2020/0010579 A1<br>claims, paragraph [0064], examples<br>EP 3581597 A1<br>KR 10-2019-0084345 A<br>CN 110167977 A<br>TW 201831543 A | |
| WO 2018/164053 A1 | 13 September 2018 | US 2020/0031975 A1<br>paragraph [0100]<br>EP 3594251 A1<br>KR 10-2019-0095481 A<br>CN 110325556 A<br>TW 201837063 A | |
| JP 2019-167420 A | 03 October 2019 | (Family: none) | |
| JP 2020-7532 A | 16 January 2020 | CN 110655697 A<br>KR 10-2020-0001996 A | |
| JP 2020-26524 A | 20 February 2020 | DE 102019121267 A1<br>CN 110818975 A | |
| JP 2020-33546 A | 05 March 2020 | CN 110857344 A<br>KR 10-2020-0023215 A | |
| JP 2020-37678 A | 12 March 2020 | DE 102019123052 A1<br>CN 110872405 A | |
| JP 2020-41136 A | 19 March 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018056025 A


### Non-patent literature cited in the description


- **SARDELIS ; K. MICHELS ; H. J. ALLEN.** *G. Polymer,* 1984, vol. 25, 1011